# EUROPEAN PATENT SPECIFICATION

(11) **EP 2 835 410 B1**
(45) Date of publication and mention of the grant of the patent: **04.10.2017**
(21) Application number: 13764021.5
(22) Date of filing: 13.03.2013
(51) Int. Cl.: C09K 19/32, C09K 19/12, C09K 19/14, C09K 19/16, C09K 19/18, C09K 19/20, C09K 19/30, C09K 19/34, C09K 19/38, C09K 19/42, C09K 19/54, G02F 1/13, C09K 19/04

(54) **NEMATIC LIQUID CRYSTAL COMPOSITION**
NEMATISCHE FLÜSSIGKRISTALLZUSAMMENSETZUNG
COMPOSITION DE CRISTAUX LIQUIDES NÉMATIQUES

(30) Priority: 19.03.2012 JP 2012061932
(43) Date of publication of application: 11.02.2015
(73) Proprietor: DIC Corporation, Tokyo 174-8520 (JP)
(72) Inventor: KANEOYA Masakazu, Kitaadachi-gun Saitama 362-8577 (JP); TAKEUCHI Kiyofumi, Kitaadachi-gun Saitama 362-8577 (JP); OSAWA Masashi, Kitaadachi-gun Saitama 362-8577 (JP); TOJYO Kenta, Kitaadachi-gun Saitama 362-8577 (JP); KUSUMOTO Tetsuo, Kitaadachi-gun Saitama 362-8577 (JP)
(74) Representative: Adam, Holger
(86) International application number: PCT/JP2013/057053
(87) International publication number: WO 2013/141116

(56) References cited:
- WO-A1-2013/018796
- JP-A- 2000 169 413
- JP-A- 2001 019 649
- JP-A- 2003 286 217
- JP-A- 2005 232 214
- JP-A- 2005 232 215
- JP-A- 2006 257 274
- JP-A- 2007 503 405
- JP-A- 2007 503 487

## Description

### Technical Field

The present invention relates to a nematic liquid crystal composition having a positive dielectric anisotropy(Δε) which can be suitably used as a material for electro-optical liquid crystal displays.

### Background Art

Liquid crystal display elements have been used in clocks, electronic calculators, various measurement machines, panels for automobiles, word processors, electronic personal organizers, printers, computers, TVs, clocks, advertisement display boards, and the like. Representative examples of a liquid crystal display method include TN(twisted nematic)type, STN(super twisted nematic)type, vertical-alignment type using a TFT(thin-film transistor), and IPS(in-plane switching)type. It is desired that a liquid crystal composition used for producing these liquid crystal display elements be stable against external factors such as moisture, air, heat, and light; exhibit a liquid-crystal phase over as wide a temperature range as possible around room temperature; and have a low viscosity and a low drive voltage. The liquid crystal composition is composed of a few to several tens of types of compounds in order to optimize, for example, the dielectric anisotropy (As) and/or the refractive-index anisotropy (An) of the liquid crystal composition for each individual display element.

While a liquid crystal composition having a negative Δε is used for producing vertical-alignment-type displays, a liquid crystal composition having a positive Δε is used for producing horizontal-alignment-type displays such as a TN-type display, a STN-type display, and an IPS-type display. There has been reported a drive mode in which a liquid crystal composition having a positive Δεis vertically aligned while a voltage is not applied and display is performed by applying an in-plane electric field. Thus, there has been a growing demand for a liquid crystal composition having a positive Δε. On the other hand, there has been a demand for low-voltage driving, high-speed response, and a wide operating temperature range regardless of the drive mode. In other words, there has been a demand for a positive Δε having a large absolute value, a low viscosity(η), and a high nematic phase-isotropic liquid phase transition temperature (Tₙᵢ). In addition, on the basis of the configuration of the product of Δn and cell gap(d),Δnxd, it is necessary to control Δn of a liquid crystal composition to be within an appropriate range depending on the cell gap. Furthermore, in the case where liquid crystal display elements are used for producing TVs or the like, primary importance is attached to high-speed response, which leads to a demand for a liquid crystal composition having a low γ₁.

PTL 5 discloses a nematic liquid crystal composition used in liquid crystal display devices of the TN mode, OCB mode, ECB mode, IPS mode, or VA-IPS mode. The liquid crystal composition has positive dielectric anisotropy.

PTL 6 discloses a new liquid crystal compound that is useful as an electrooptical liquid crystal display material, particularly as a polar component for liquid crystal material for STN display element that can reduce its threshold voltage by increasing dielectric anisotropy and can increase the fast response and refractive anisotropy.

There have been disclosed liquid crystal compositions (PTLs 1 to 4)that include a compound represented by Formula (A-1) or (A-2) having a positive Δε. However, these liquid crystal compositions have not yet reached a point where a sufficiently low viscosity is achieved.

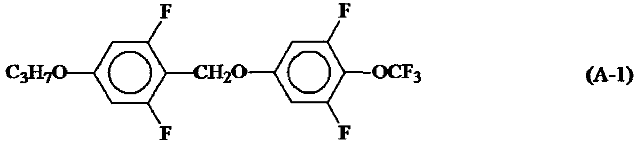

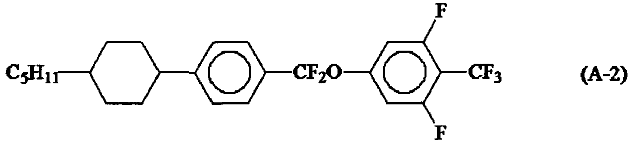

### Citation List

### Patent Literature

PTL 1:WO96/032365
PTL 2: Japanese Unexamined Patent Application Publication No. 09-157202
PTL 3:WO98/023564
PTL 4: Japanese Unexamined Patent Application Publication No. 2003-183656
PTL 5: WO 2013/018796 A1
PTL 6: JP 2001 019649 A

### Summary of Invention

### Technical Problem

An object of the present invention is to provide a liquid crystal composition having a sufficiently low viscosity (η) and a positive dielectric anisotropy (Δε) without the refractive-index anisotropy (Δn) and nematic phase-isotropic liquid phase transition temperature (Tₙᵢ) of the liquid crystal composition being reduced or increased. Solution to Problem

The inventor of the present invention has studied various fluorobenzene derivatives and found that the above-described problems may be addressed using specific compounds in combination. Thus, the present invention has been made.

The present invention provides a liquid crystal composition having a positive dielectric anisotropy, the liquid crystal composition comprising:
one or more compounds selected from compounds represented by General Formula (LC0-1); and
one or more compounds selected from the group consisting of compounds represented by General Formulae (LC1) to (LC5), 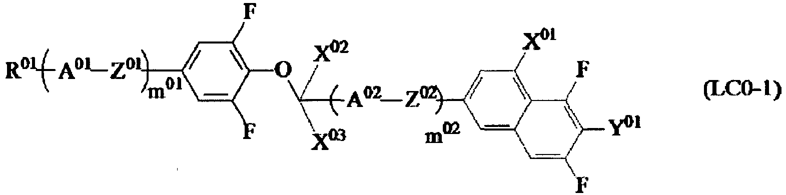 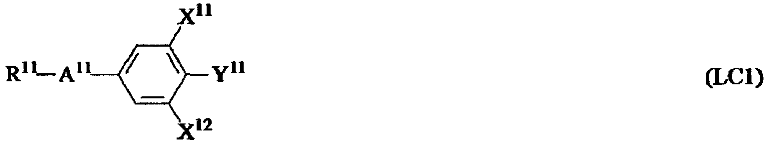 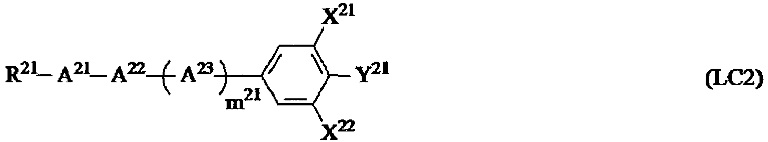 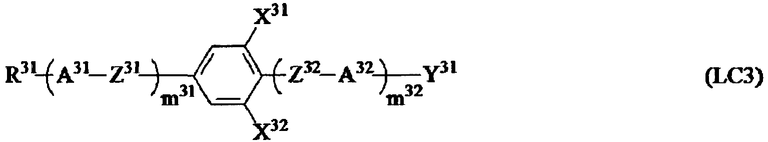 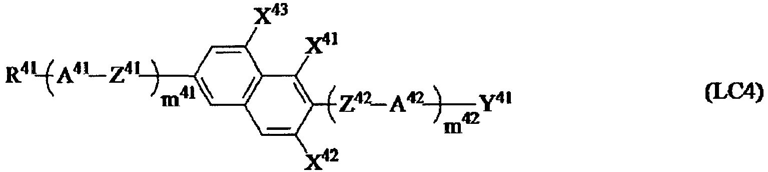 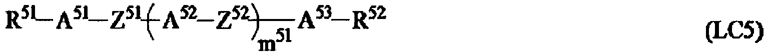 (wherein R⁰¹ to R⁴¹ each independently represent an alkyl group having a carbon number of 1 to 15; one or more -CH₂-of the alkyl group may be substituted by -O-, -CH=CH-, -CO-, -OCO-, -COO-, -C≡C-, -CF₂O-, or -OCF₂- so that an oxygen atom is not directly adjacent to another oxygen atom, one or more hydrogen atoms of the alkyl group may be substituted by a halogen; R⁵¹ and R⁵² each independently represent an alkyl group having a carbon number of 1 to 15, and one or more - CH₂- of the alkyl group may be substituted by -0-, -CH=CH-, -CO-, -OCO-, -COO-, or -C=C- so that an oxygen atom is not directly adjacent to another oxygen atom; A⁰¹ to A⁴² each

independently represent any one of the following structures: 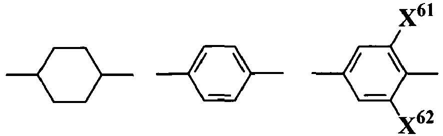 (wherein one or more -CH₂- in the cyclohexane ring may be substituted by -O- so that an oxygen atom is not directly adjacent to another oxygen atom; one or more -CH= in the benzene ring may be substituted by -N= so that a nitrogen atom is not directly adjacent to another nitrogen atom; and X⁶¹ and X⁶² each independently represent -H, -Cl, -F, -CF₃, or -OCF₃) ; A⁵¹ to A⁵³ each independently represent any one of the following structures: 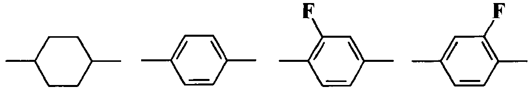 (wherein one or more -CH₂CH₂- in the cyclohexane ring may be substituted by -CH=CH-, -CF₂O-, or -OCF₂-; one or more -CH= in the benzene ring may be substituted by -N= so that a nitrogen atom is not directly adjacent to another nitrogen atom); X⁰¹ represents a hydrogen atom or a fluorine atom; X⁰² and X⁰³ each represents a hydrogen atom; X¹¹ to X⁴³ each independently represent -H, -Cl, -F, -CF₃, or -OCF₃; Y⁰¹ to Y⁴¹ each represent -Cl, -F, -CF₃, or -OCF₃; Z⁰¹ and Z⁰² each independently represent a single bond, -CH=CH-, -C≡C-,-CH₂CH₂-, - (CH₂)₄-, -OCH₂-, -CH₂O-, -OCF₂-, or -CF₂₀-; Z³¹ to Z⁴² each independently represent a single bond, -CH=CH-, -C≡C-, -CH₂CH₂-, -(CH₂)₄-, -OCH₂-, -CH₂O-, -OCF₂-, or -CF₂O-; at least one of Z³¹ and Z³² is not a single bond; Z⁵¹ and Z⁵² each independently represent a single bond, -CH=CH-, -C≡C-,-CH₂CH₂-, -(CH₂)₄-, -OCH₂-, -CH₂O-, -OCF₂-, or -CF₂O-; m⁰¹ to m⁵¹ are each independently an integer of 0 to 3; m³¹ + m³² and m⁴¹ + m⁴² are each independently 1, 2, 3, or 4; in the case where there are a plurality of A⁰¹'s, A⁰²'s, A⁰³'s, A^{23'}s, A³¹'s, A³²'s, A⁴¹'s, A⁴²'s, A⁵²'s, Z⁰¹'s, Z⁰²'s Z³¹'s, Z³²'s, Z⁴¹'s, Z⁴²'s and/or Z⁵²'s, they may be all identical or different; and Z⁴¹'s each independently represent a single bond, -CH=CH-, -C≡C-, -CH₂CH₂-, or - (CH₂)₄- when m⁴² is 0), with the proviso that
the liquid crystal composition does not include either of compounds represented by the following formulae:

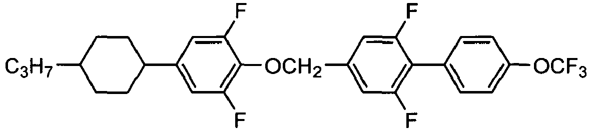

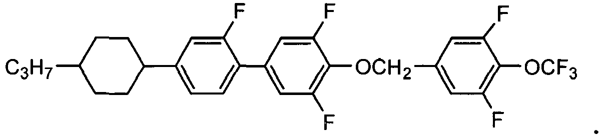

Preferably, a liquid crystal composition is provided having a positive dielectric anisotropy, the liquid crystal composition including one or more compounds selected from compounds represented by General Formula (LC0-1) and optionally General Formula (LC0-2) and one or more compounds selected from the group consisting of compounds represented by General Formulae (LC1) to (LC5). The present invention also provides a liquid crystal display element including the above-described liquid crystal composition. 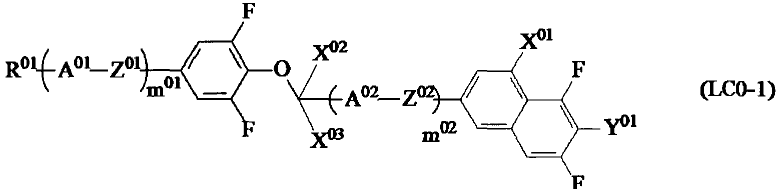 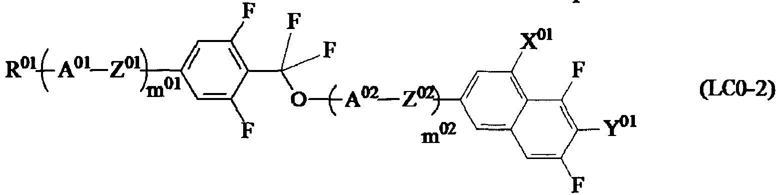 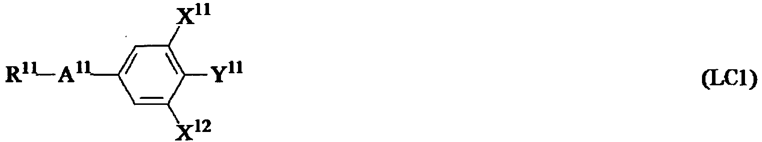 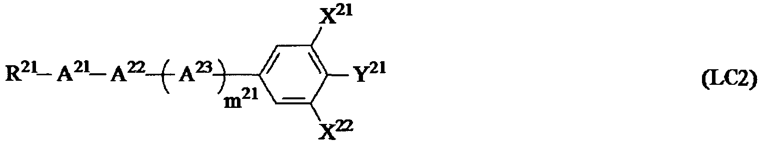 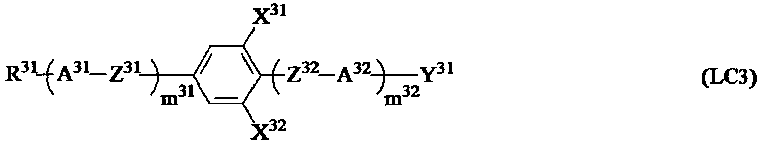 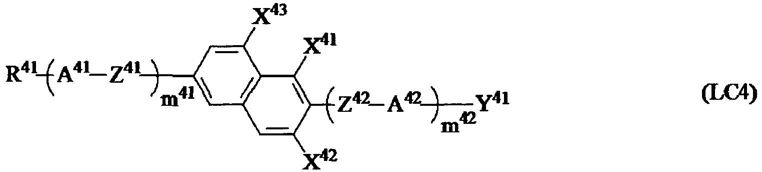 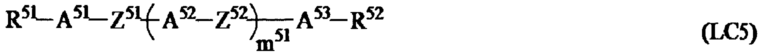 (wherein R⁰¹ to R⁴¹ each independently represent an alkyl group having a carbon number of 1 to 15; one or more -CH₂-of the alkyl group may be substituted by -0-, -CH=CH-, -CO-, -OCO-, -COO-, -C≡C-, -CF₂O-, or -OCF₂- so that an oxygen atom is not directly adjacent to another oxygen atom, and one or more hydrogen atoms of the alkyl group may be substituted by a halogen; R⁵¹ and R⁵² each independently represent an alkyl group having a carbon number of 1 to 15, and one or more - CH₂- of the alkyl group may be substituted by -O-, -CH=CH-, -CO-, -OCO-, -COO-, or -C≡C- so that an oxygen atom is not directly adjacent to another oxygen atom; A⁰¹ to A⁴² each independently represent any one of the following structures: 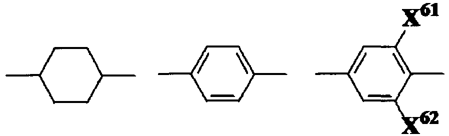 (wherein one or more -CH₂- in the cyclohexane ring may be substituted by -O- so that an oxygen atom is not directly adjacent to another oxygen atom; one or more -CH= in the benzene ring may be substituted by -N= so that a nitrogen atom is not directly adjacent to another nitrogen atom; and X⁶¹ and X⁶² each independently represent -H, -Cl, -F, -CF₃, or -OCF₃);A⁵¹ to A⁵³ each independently represent any one of the following structures:

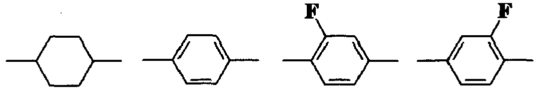

### Advantageous Effects of Invention

The liquid crystal composition according to the present invention has a positive Δε having a large absolute value. The liquid crystal composition has a low η, a low rotational viscosity (γ₁), and a good liquid-crystal property and exhibits a stable liquid-crystal phase over a wide temperature range. The liquid crystal composition is chemically stable to heat, light, water, and the like and has good solubility. Therefore, the liquid crystal composition is a practical, highly reliable liquid crystal composition that has good phase stability at low temperatures and allows low-voltage drive to be realized. Description of Embodiments

The present invention provides a liquid crystal composition having a positive dielectric anisotropy, the liquid crystal composition comprising:
one or more compounds selected from compounds represented by General Formula (LCO-1); and
one or more compounds selected from the group consisting of compounds represented by General Formulae (LC1) to (LC5), 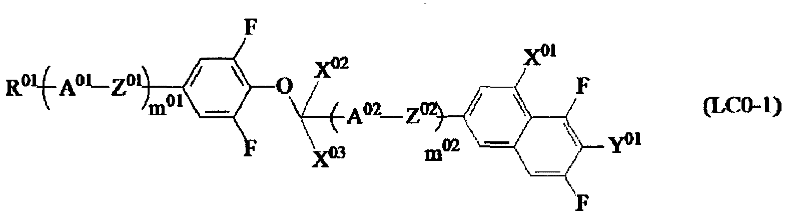 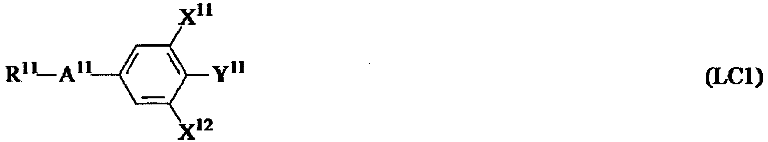 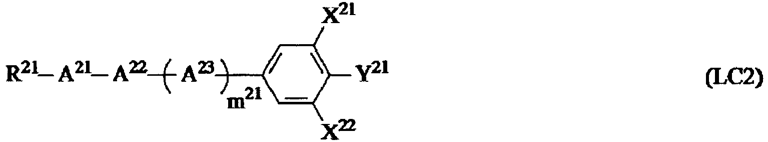 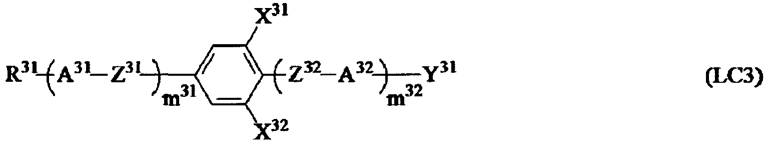 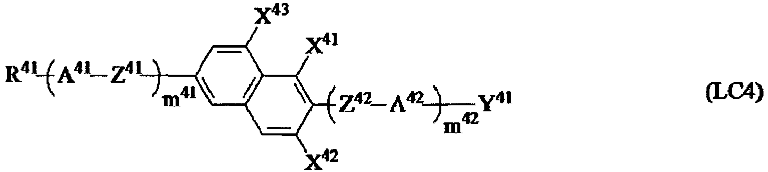 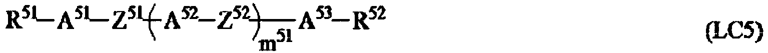 (wherein R⁰¹ to R⁴¹ each independently represent an alkyl group having a carbon number of 1 to 15; one or more -CH₂-of the alkyl group may be substituted by -0-, -CH=CH-, -CO-, -OCO-, -COO-, -C≡C-, -CF₂O-, or -OCF₂- so that an oxygen atom is not directly adjacent to another oxygen atom, one or more hydrogen atoms of the alkyl group may be substituted by a halogen; R⁵¹ and R⁵² each independently represent an alkyl group having a carbon number of 1 to 15, and one or more - CH₂- of the alkyl group may be substituted by -0-, -CH=CH-, -CO-, -OCO-, -COO-, or -C≡C- so that an oxygen atom is not directly adjacent to another oxygen atom; A⁰¹ to A⁴² each independently represent any one of the following structures: 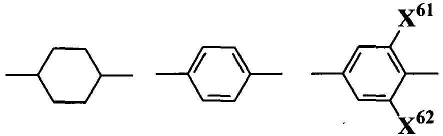 (wherein one or more -CH₂- in the cyclohexane ring may be substituted by -O- so that an oxygen atom is not directly adjacent to another oxygen atom; one or more -CH= in the benzene ring may be substituted by -N= so that a nitrogen atom is not directly adjacent to another nitrogen atom; and X⁶¹ and X⁶² each independently represent -H, -Cl, -F, -CF₃, or -OCF₃); A⁵¹ to A⁵³ each independently represent any one of the following structures: 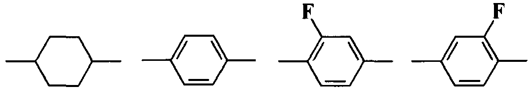 (wherein one or more -CH₂CH₂- in the cyclohexane ring may be substituted by -CH=CH-, -CF₂O-, or -OCF₂-; one or more -CH= in the benzene ring may be substituted by -N= so that a nitrogen atom is not directly adjacent to another nitrogen atom); X⁰¹ represents a hydrogen atom or a fluorine atom; X⁰² and X⁰³ each represents a hydrogen atom; X¹¹ to X⁴³ each independently represent -H, -Cl, -F, -CF₃, or -OCF₃; Y⁰¹ to Y⁴¹ each represent -Cl, -F, -CF₃, or -OCF₃; Z⁰¹ and Z⁰² each independently represent a single bond, -CH=CH-, -C≡C-,-CH₂CH₂-, - (CH₂)₄-, -OCH₂-, -CH₂O-, -OCF₂-, or -CF₂O- Z³¹ to Z⁴² each independently represent a single bond, -CH=CH-, -C≡C-, -CH₂CH₂-, - (CH₂)₄-, -OCH₂-, -CH₂O-, -OCF₂-, or -CF₂O-; at least one of Z³¹ and Z³² is not a single bond; Z⁵¹ and Z⁵² each independently represent a single bond, -CH=CH-, -C=C-, - CH₂CH₂-, -(CH₂)₄-, -OCH₂-, -CH₂O-, -OCF₂-, or -CF₂O-; m⁰¹ to m⁵¹ are each independently an integer of 0 to 3; m³¹ + m³² and m⁴¹ + m⁴² are each independently 1, 2, 3, or 4; in the case where there are a plurality of A⁰¹'s, A⁰²'s, A⁰³'s, A²³'s, A³¹'s, A³²'s, A⁴¹'s, A⁴²'s, A⁵²'s, Z⁰¹'s, Z⁰²'s, Z³¹'s, Z³²'s, Z⁴¹'s, Z⁴²'s and/or Z⁵²'s, they may be all identical or different; and Z⁴¹'s each independently represent a single bond, -CH=CH-, -C≡C-, -CH₂CH₂-, or -(CH₂)₄- when m⁴² is 0), with the proviso that
   the liquid crystal composition does not include either of compounds represented by the following formulae:

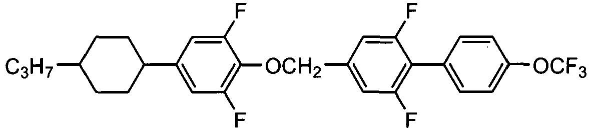

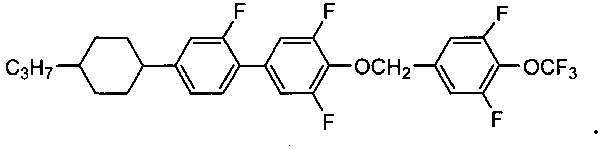

Preferably, the liquid crystal composition includes one or more compounds selected from compounds represented by General Formula (LC0-1) and optionally General Formula (LC0-2)described above and one or more compounds selected from the group consisting of compounds represented by General Formulae (LC1)to (LC5).The liquid crystal composition is considered to be a practical liquid crystal composition since it exhibits a stable liquid-crystal phase even at low temperatures.

In General Formulae (LC0-1) to (LC5), R⁰¹ to R⁴¹ each independently represent an alkyl group having a carbon number of 1 to 15. One or more -CH₂- of the alkyl group may be substituted by -0-, -CH=CH-, -CO-, -OCO-, -COO-, -C≡C-,-CF₂O-, or -OCF₂- so that an oxygen atom is not directly adjacent to another oxygen atom. One or more hydrogen atoms of the alkyl group may optionally be substituted by a halogen. R⁰¹ to R⁴¹ are preferably an alkyl group having a carbon number of 1 to 8, an alkenyl group having a carbon number of 2 to 8, or an alkoxy group having a carbon number of 1 to 8 and are preferably straight chains. R⁵¹ and R⁵² each independently represent an alkyl group having a carbon number of 1 to 15. One or more -CH₂- of the alkyl group may be substituted by -0-, -CH=CH-, -CO-, -OCO-, -COO-, or -C≡C-so that an oxygen atom is not directly adjacent to another oxygen atom. R⁵¹ and R⁵² are preferably an alkyl group having a carbon number of 1 to 8, an alkenyl group having a carbon number of 2 to 8, or an alkoxy group having a carbon number of 1 to 8 and are preferably straight chains. A⁰¹ to A⁴² are preferably each independently atrans-1,4-cyclohexylene group, an 1,4-phenylene group, a 3-fluoro-1,4-phenylene group, or a3,5-difluoro-1,4-phenylene group. A⁵¹ to A⁵³ are preferably each independently atrans-1,4-cyclohexylene group, an 1,4-phenylene group, a 2-fluoro-1,4-phenylene group, or a 3-fluoro-1,4-phenylene group. X⁰¹ to X⁰³ are preferably each a hydrogen atom or a fluorine atom. X¹¹ to X⁴³ are preferably each independently a hydrogen atom or a fluorine atom. Y⁰¹ to Y⁴¹ are preferably each -F, -CF₃, or -OCF₃.

Z⁰¹and Z⁰²are preferably each independently a single bond, -CH=CH-, -C=C-, -CH₂CH₂-, -(CH₂)₄-, -OCH₂-, -CH₂O- -OCF₂-, or -CF₂O-. In the case where one of Z⁰¹and Z⁰²represents -CH=CH-, -C≡C-, -CH₂CH₂-, -(CH₂)₄-, -OCH₂-, -CH₂O-, -OCF₂-, or -CF₂O-, the other preferably represents a single bond. It is further preferable that both Z⁰¹ and Z⁰² represent a single bond. Z³¹ to Z⁴²are preferably each independently a single bond, -CH=CH-, -C≡C-, -CH₂CH₂-, -(CH₂)₄-, -OCH₂-, -CH₂O-,-OCF₂-, or -CF₂O-. At least one of Z³¹ and Z³² is not a single bond.Z⁴¹'s each independently represent a single bond, - CH=CH-, -C≡C-, -CH₂CH₂-, or -(CH₂)₄- when m⁴² is 0. Z⁵¹ and Z⁵² are preferably each independently a single bond, -CH=CH-, -C≡C-, -CH₂CH₂-, -(CH₂)₄-, -OCH₂-, -CH₂O-, -OCF₂-, or -CF₂O-, are further preferably each independently a single bond, - CH₂CH₂-, -OCF₂-, or -CF₂O- and are particularly preferably each independently a single bond. It is preferable that m⁰¹ and m⁰² are each independently an integer of 0 to 2 and m²¹ is an integer of 0 or 1. It is preferable that m³¹ to m⁴² are each independently an integer of 0 to 2and m³¹+m³² and m⁴¹+m⁴² are each independently 1, 2, or 3. It is preferable that m⁵¹ is an integer of 1or 2.In the case where there are a plurality of A⁰¹'s, A⁰²'s, A²³'s, A³¹'s, A³²'s, A⁴¹'s, A⁴²'s, A⁵²'s, Z⁰¹'S, Z⁰²'s, Z³¹'s, Z³²'s, Z⁴¹'s, Z⁴²'s and/or Z⁵²'s, they may be all identical or different.

It is more preferable that the liquid crystal compound represented by General Formula (LC0-1) or General Formula (LC0-2) is a compound represented by any one of General Formulae (LC0-1-1) to (LC0-2-4) below. 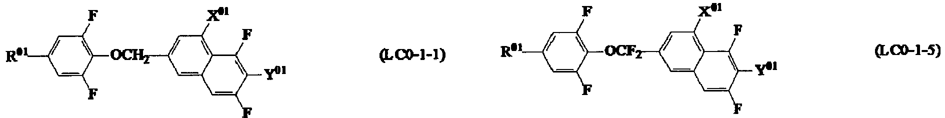 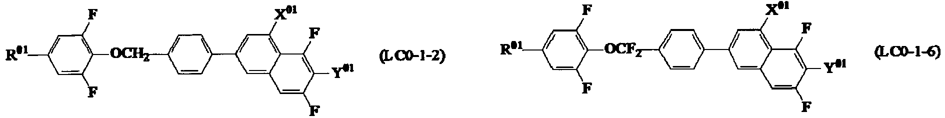 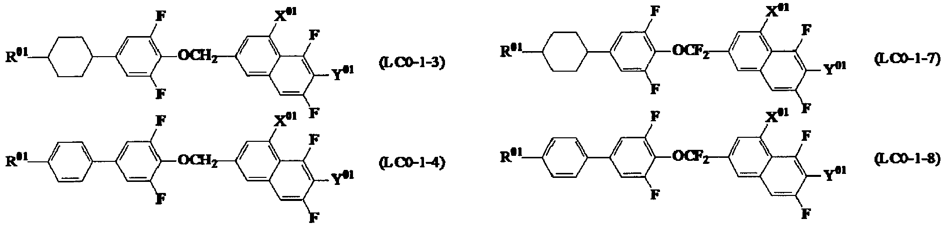 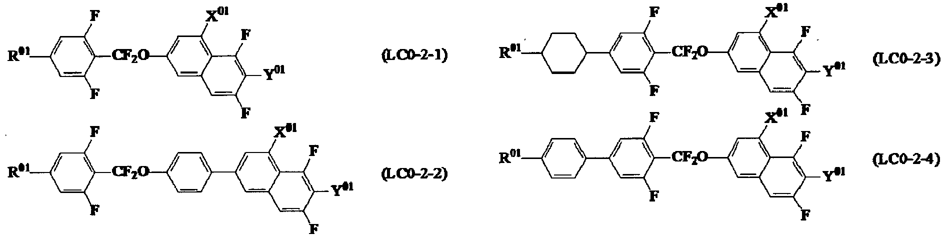 (in General Formulae (LC0-1-1) to (LC0-2-4), R⁰¹, X⁰¹, and Y⁰¹ represent the same things as those described in Claim 1, respectively)

It is more preferable that the compound represented by General Formula (LC1) is a compound represented by any one of General Formulae (LC1-1) to (LC1-4) below. 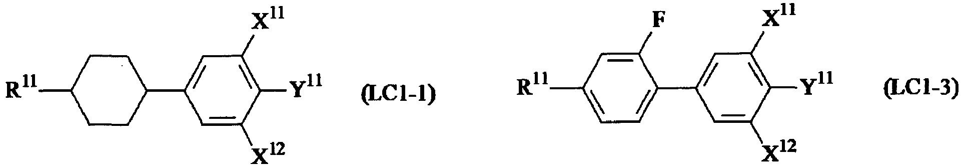 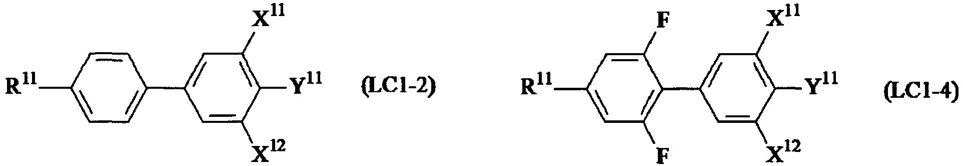 (in General Formulae (LC1-1) to (LC1-4), R¹¹, X¹¹, X¹², and Y¹¹ represent the same things as those described in Claim 1, respectively)

It is more preferable that the compound represented by General Formula (LC2) is a compound represented any one of General Formulae (LC2-1) to (LC2-8) below. 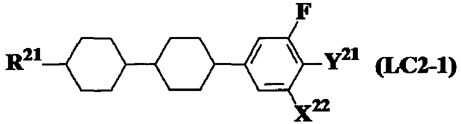 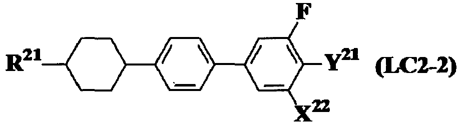 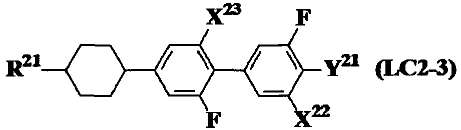 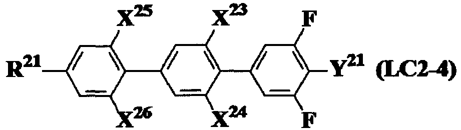 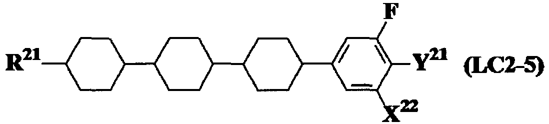 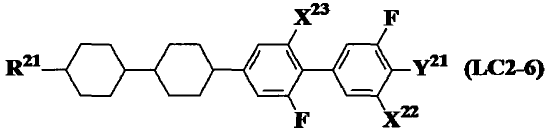 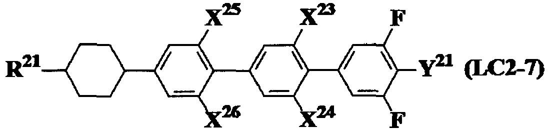 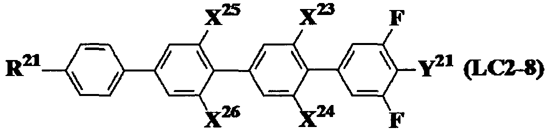 (in General Formulae (LC2-1) to (LC2-8), X²³, X²⁴, X²⁵, and X²⁶ each independently represent a hydrogen atom, Cl, F, CF₃, or OCF₃; X²², R²¹, and Y²¹ represent the same things as those described in Claim 1, respectively)

It is preferable that the compound represented by General Formula (LC3) is a compound represented by any one of General Formulae (LC3-1) to (LC3-121) below. 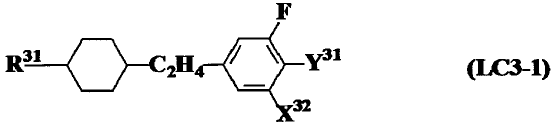 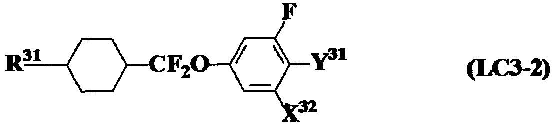 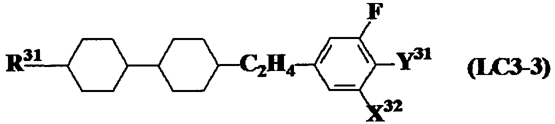 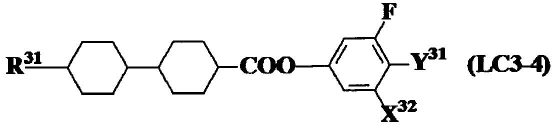 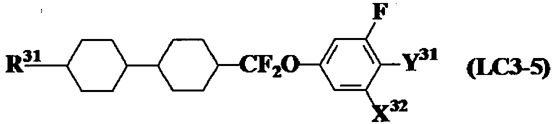 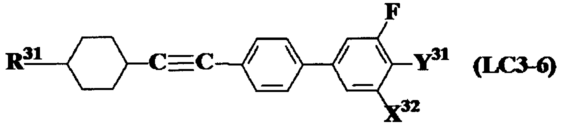 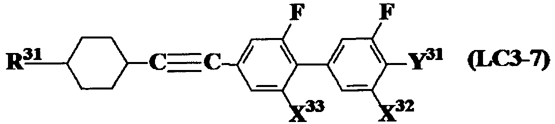 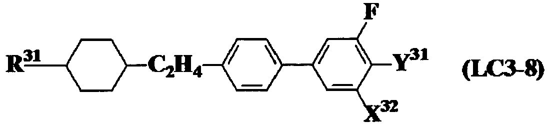 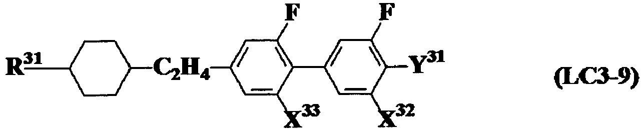 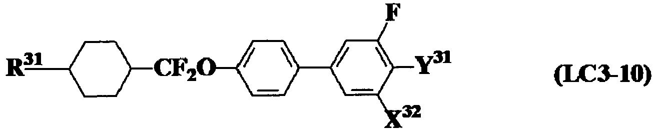 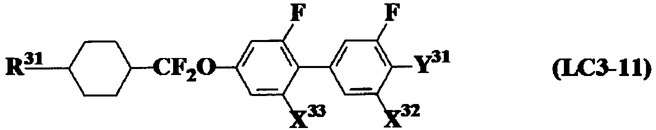 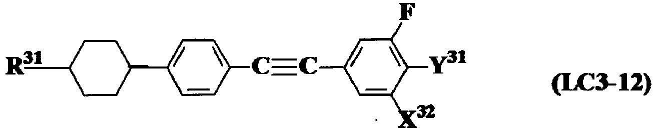 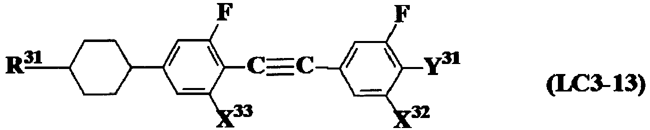 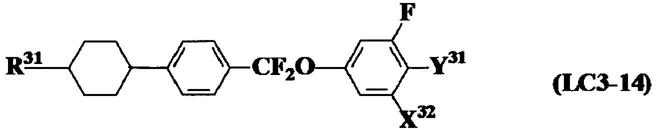 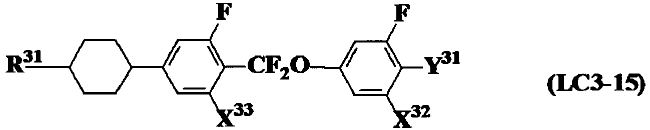 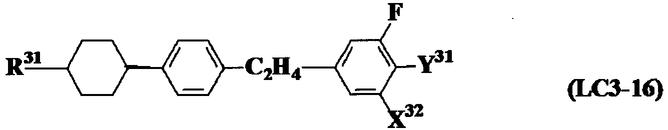 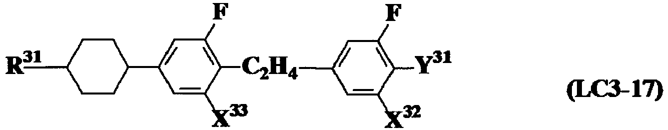 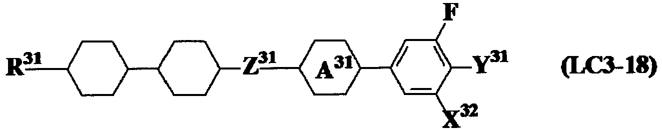 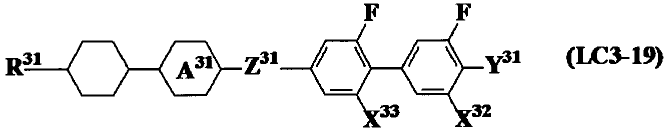 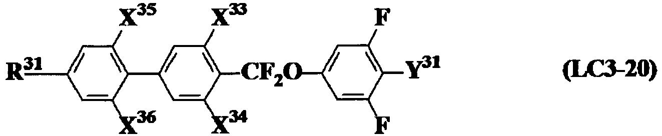 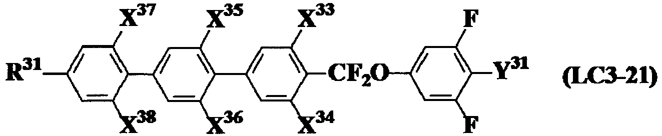 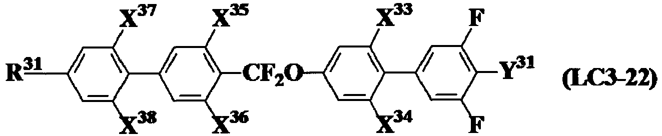 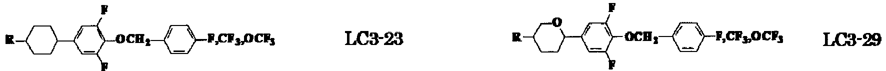 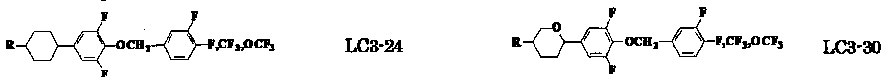 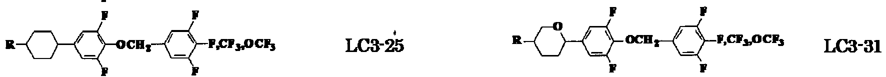 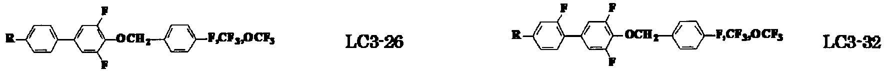 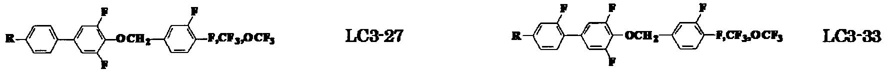 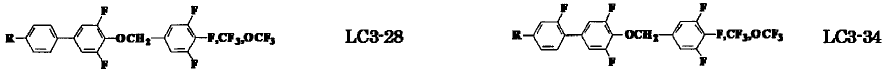 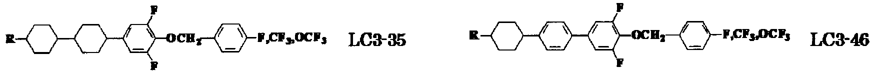 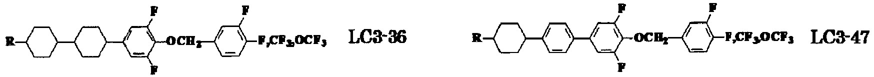 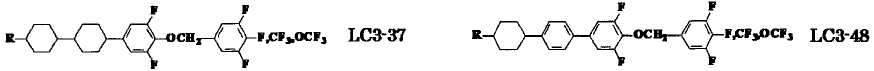 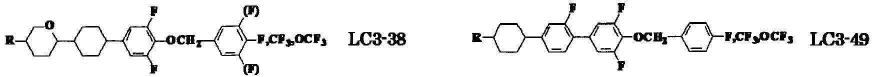 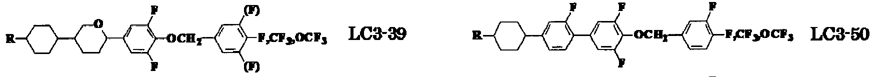 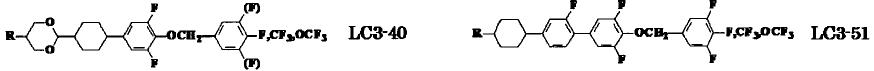 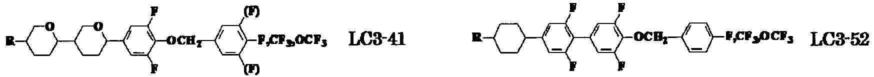 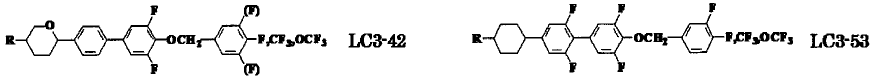 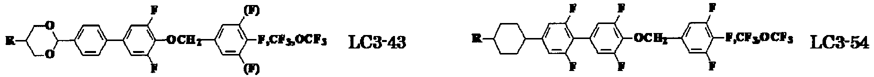 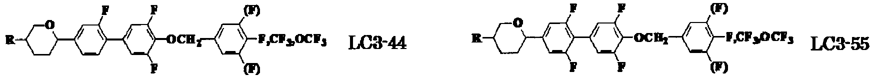 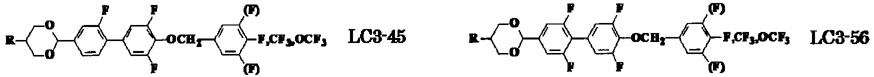 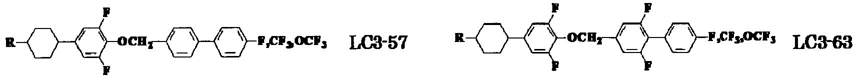 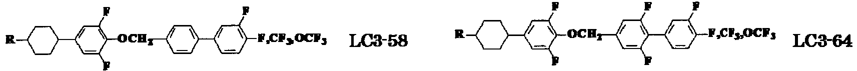 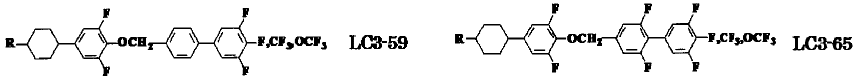 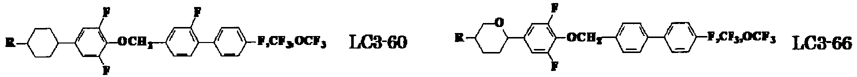 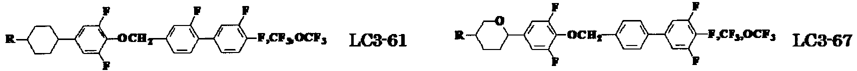 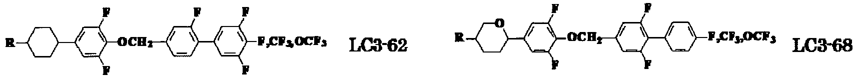 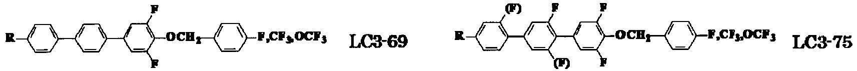 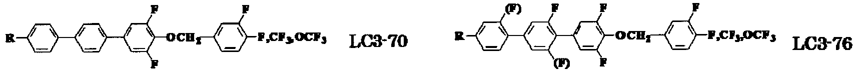 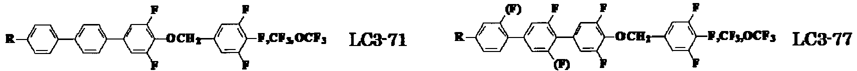 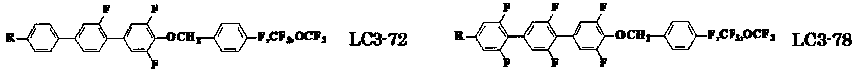 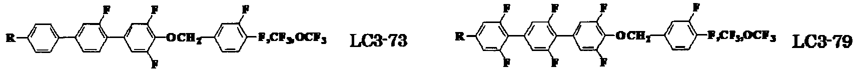 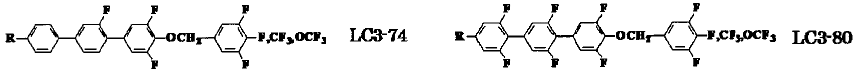 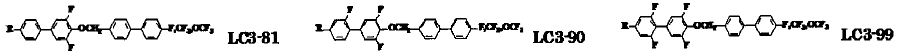 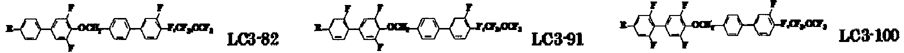 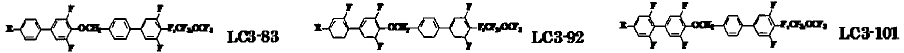 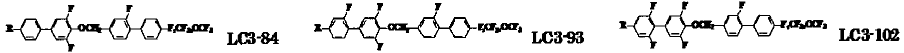 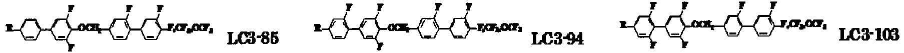 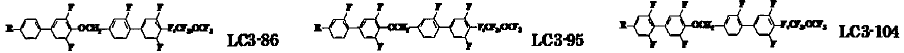 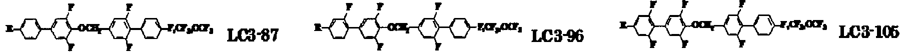 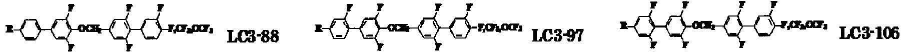 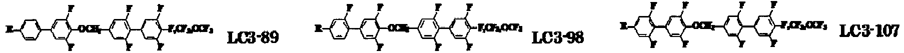 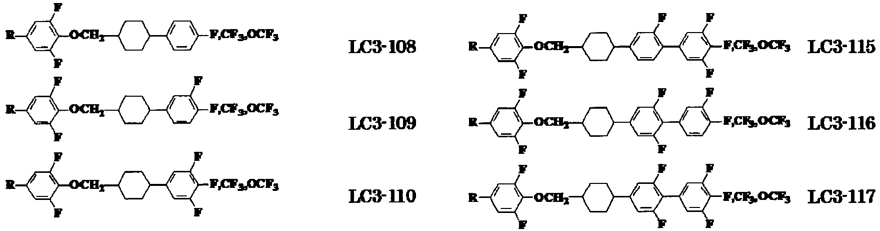 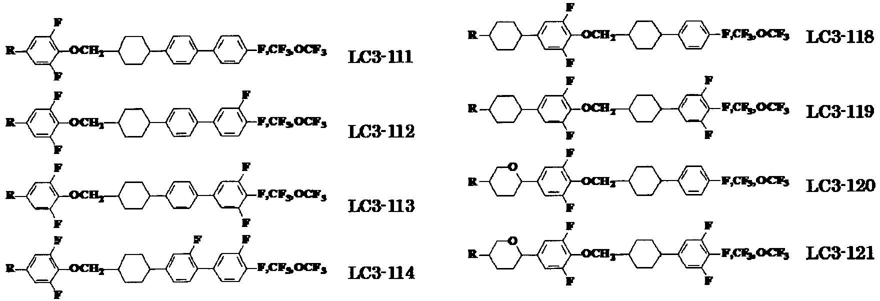 (in General Formulae (LC3-1)to (LC3-121), X³³, X³⁴, X³⁵, X³⁶, X³⁷, and X³⁸ each independently represent H, Cl, F, CF₃, or OCF₃; X³², R³¹, A³¹, Y³¹, and Z³¹ represent the same things as those described in Claim 1, respectively; R represents R³¹; F, CF₃, OCF₃ represents any one of F, CF₃, and OCF₃; and (F) represents any one of H and F)

It is preferable that the compound represented by General Formula (LC4) is a compound represented by any one of General Formulae (LC4-1)to (LC4-12) below. 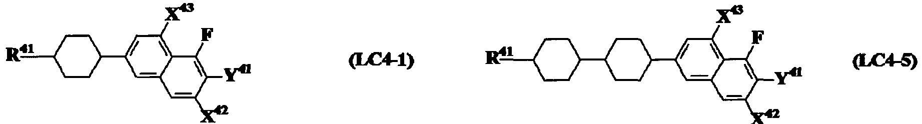 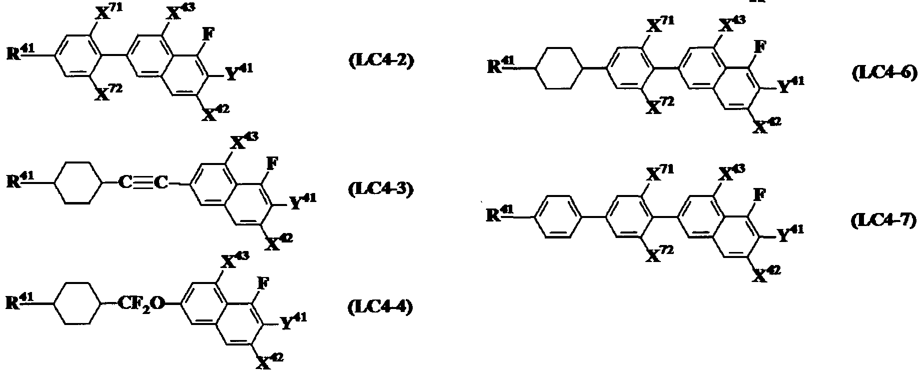 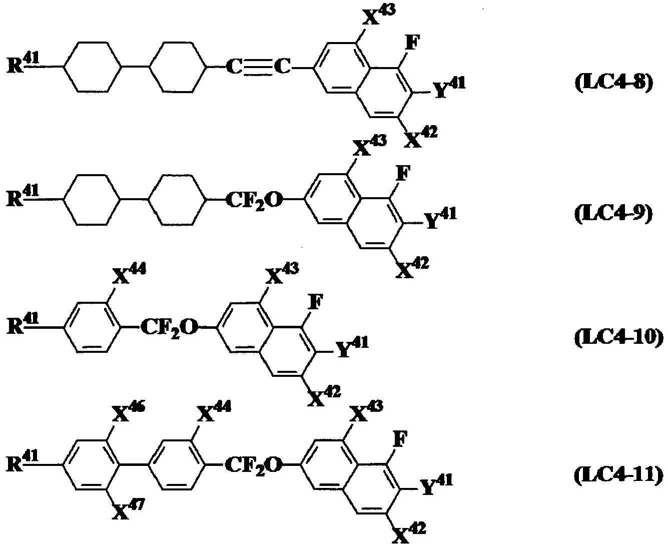 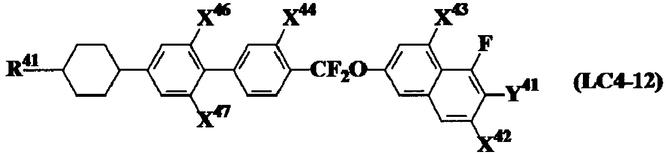 (in General Formulae (LC4-1) to (LC4-12), X⁴⁴, X⁴⁶, X⁴⁷, X⁷¹, and X⁷² each independently represent H, Cl, F, CF₃, or OCF₃; and X⁴², X⁴³, R⁴¹, and Y⁴¹ represent the same things as those described in Claim 1, respectively)

It is preferable that the compound represented by General Formula (LC5) is a compound represented by any one of General Formulae (LC5-1)to (LC5-14) below. 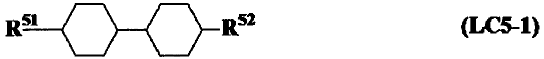 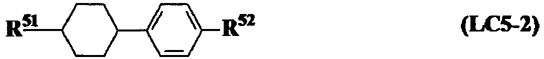 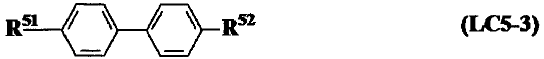 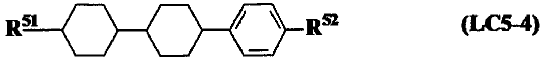 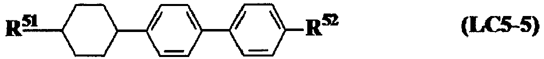 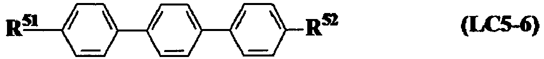 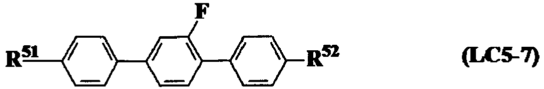 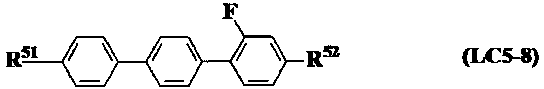 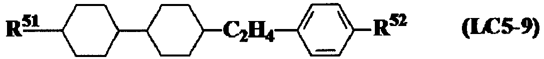 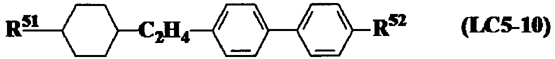 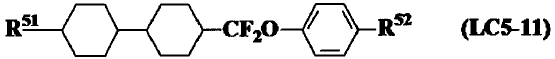 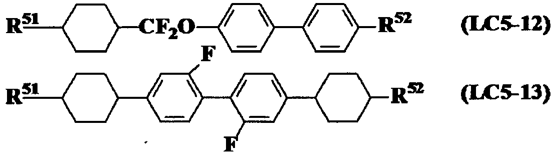 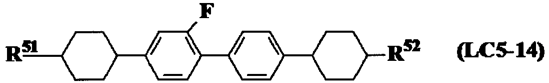 (in General Formulae (LC5-1)to (LC5-14), R⁵¹ and R⁵² represent the same things as those described in Claim 1, respectively)

The content of the compounds represented by General Formula (LCO-1) and/or General Formula (LCO-2) in the liquid crystal composition is preferably 5% to 50% by mass and is further preferably 10% to 40% by mass. The content of the compounds represented by General Formula (LC-1),the content of the compounds represented by General Formula (LC-2), the content of the compounds represented by General Formula (LC-3), and the content of the compounds represented by General Formula (LC-4)in the liquid crystal composition are preferably each independently 10& to 60& by mass and are further preferably each independently 10% to 40% by mass. The content of the compounds represented by General Formula (LC-5) in the liquid crystal composition is preferably 10 to 90 by mass and is further preferably 15% to 70% by mass.

Optionally, the liquid crystal composition may include a polymerizable compound in order to prepare, for example, a polymer-stabilized (PS)-mode liquid crystal display element. An example of the polymerizable compound that can be used is a photopolymerizable monomer that undergoes polymerization when irradiated with an energy beam such as light. For example, a polymerizable compound having a liquid-crystal skeleton including a plurality of six-membered rings bonded to one another, such as a biphenyl derivative and a terphenyl derivative, may be used. Specifically, the polymerizable compound is preferably a polymerizable compound represented by General Formula (PC1). 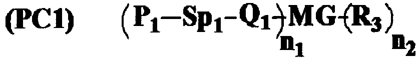 (in General Formula (PC1), P₁ represents a polymerizable functional group; Sp₁ represents a spacer group having 0 to 20 carbon atoms; Q₁ represents a single bond, -0-, -NH-, - NHCOO-, -OCONH-, -CH=CH-, -CO-, -COO-, -OCO-, -OCOO-, -OOCO-, -CH=CH-, -CH=CH-COO-, -OCO-CH=CH-, or-C=C-; n₁ and n₂ are each independently 1, 2, or 3; MG represents a mesogenic group or a mesogenic supporting group; and R₃ represents a halogen atom, a cyano group, or an alkyl group having 1 to 25 carbon atoms and one or more CH₂ groups of the alkyl group may be substituted by -O-, -S-, -NH-, -N(CH₃)-, -CO-, -COO-, -OCO-, -OCOO-, -SCO-, -COS-, or -C=C- so that an O atom is not directly adjacent to another O atom, or R₃ represents P₂-Sp₂-Q₂-(where P₂, Sp₂, Q₂ independently represent the same things as P₁, Sp₁, and Q₁, respectively))

It is more preferable that MG in the polymerizable compound represented by General Formula (PC1) is a polymerizable compound represented by the following structure: 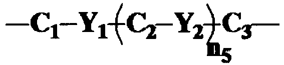 (in this formula, C₁ to C₃ each independently represent an 1,4-phenylene group, an 1,4-cyclohexylene group, an 1,4-cyclohexenyl group, a tetrahydropyran-2,5-diyl group, an 1,3-dioxane-2,5-diyl group, a tetrahydrothiopyran-2,5-diyl group, an 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, an 1,2,3,4-tetrahydronaphthalene-2,6-diyl group, a 2,6-naphthylene group, a phenanthrene-2,7-diyl group, a 9,10-dihydrophenanthrene-2,7-diyl group, an 1,2,3,4,4a,9,10a-octahydrophenanthrene-2,7-diyl group, or a fluorene-2,7-diyl group; the 1,4-phenylene group, the 1,2,3,4-tetrahydronaphthalene-2,6-diyl group, the 2,6-naphthylene group, the phenanthrene-2,7-diyl group, the 9,10-dihydrophenanthrene-2,7-diyl group, the 1,2,3,4,4a,9,10a-octahydrophenanthrene-2,7-diyl group, and the fluorene-2,7-diyl group may optionally have, as substituents, one or more F, Cl, CF₃, OCF₃, a cyano group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkenyl group having 2 to 8 carbon atoms, an alkenyloxy group having 2 to 8 carbon atoms, an alkenoyl group having 2 to 8 carbon atoms, or an alkenoyloxy group having 2 to 8 carbon atoms; Y₁ and Y₂ each independently represent -COO-, -OCO-, -CH₂CH₂-, -OCH₂-, -CH₂O-, -CH=CH-,-C=C-, -CH=CHCOO-, -OCOCH=CH-, -CH₂CH₂COO-, -CH₂CH₂OCO-,-COOCH₂CH₂-, -OCOCH₂CH₂-, -CONH-, -NHCO-, or a single bond; and n₅ is 0, 1, or 2).

It is more preferable that Sp₁ and Sp₂ each independently represent an alkylene group. The alkylene group may optionally be substituted by one or more halogen atoms or CN. One or more CH₂ groups in the alkylene group may optionally be substituted by -O-, -S-, -NH-, -N(CH₃)-,-CO-, -COO-, -OCO-, -OCOO-, -SCO-, -COS-, or -C=C- so that an O atom is not directly adjacent to another O atom.

It is more preferable that P1 and P2 are each independently represented by any one of General Formulae (PC1-a) to (PC1-d) below. 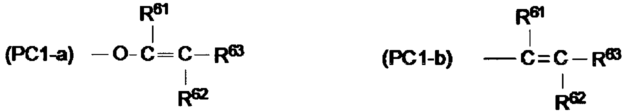 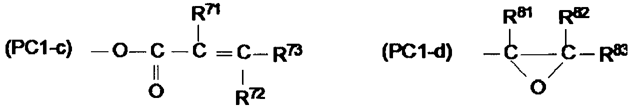 (in General Formulae (PC1-a) to (PC1-d), R⁶¹ to R⁶³, R⁷¹ to R⁷³, and R⁸¹ to R⁸³ each independently represent a hydrogen atom, a halogen atom, or an alkyl group having 1 to 5 carbon atoms)

Specifically, the polymerizable compound represented by General Formula (PC1) is preferably a polymerizable compound represented by General Formula (PC1)-1 or General Formula (PC1)-2. 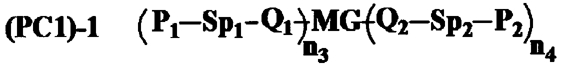 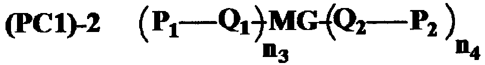 (in General Formulae (PC1)-1 and (PC1)-2, P₁, Sp₁, Q₁, P₂, Sp₂, Q₂, and MG represent the same things as those shown in General Formula (PC1), respectively; and n₃ and n₄ are each independently 1, 2, or 3)

More specifically, the polymerizable compound represented by General Formula (PC1)is more preferably a polymerizable compound represented by any one of General Formulae (PC1)-3 to (PC1)-8. 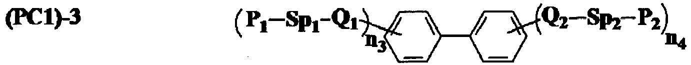 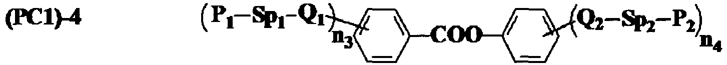 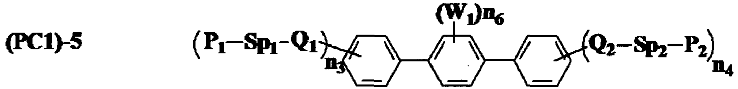 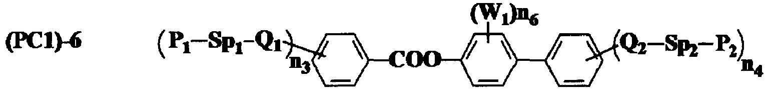 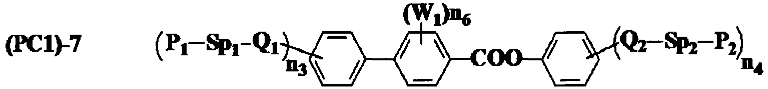 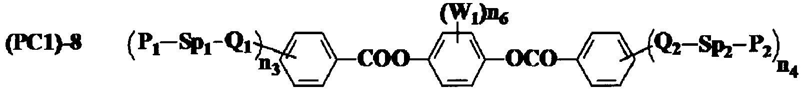 (in General Formulae (PC1)-3 to (PC1)-8, W₁'s each independently represent F, CF₃, OCF₃, CH₃, OCH₃, an alkyl group having 2 to 5 carbon atoms, an alkoxy group having 2 to 5 carbon atoms, an alkenyl group having 2 to 5 carbon atoms, COOW₂, OCOW₂, or OCOOW₂. (where W₂ represents a straight-chain or branched-chain alkyl group having 1 to 10 carbon atoms or an alkenyl group having 2 to 5 carbon atoms; and n₃, n₄, and n₆ are each independently 0, 1, 2, 3, or 4)

It is preferable that Sp₁, Sp₂, Q₁, and Q₂ in General Formulae (PC1)-3 to (PC1)-8 are all single bonds; n₃+n₄ is 3 to 6; P₁ and P₂ are represented by General Formula (PC1-c); W₁ is F, CF₃, OCF₃, CH₃, or OCH₃; and n₆ is 1 or more.

It is also preferable that MG in General Formula (PC1) is a disc-shaped liquid crystal compound represented by General Formula (PC1)-9. 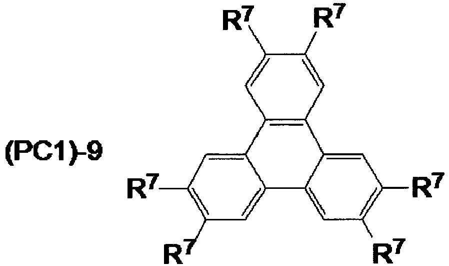 (in General Formula (PC1)-9, R⁷'s each independently represent P₁-Sp₁-Q₁ or a substituent represented by General Formula (PC1-e). 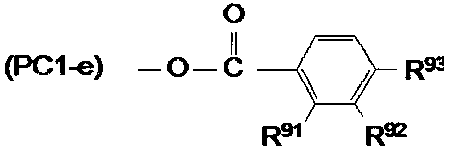 (where P₁, Sp₁, and Q₁ represent the same things as those described in General Formula (PC1), respectively; R⁹¹ and R⁹² each independently represent a hydrogen atom, a halogen atom, or a methyl group; and R⁹³ represents an alkoxy group having 1 to 20 carbon atoms and at least one hydrogen atom of the alkoxy group may be substituted by a substituent represented by any one of General Formulae (PC1-a) to (PC1-d) above)

The amount of polymerizable compound to be used is preferably 0.1% to 2.0% by mass.

The liquid crystal composition may include one or more types of antioxidants and one or more types of UV absorbers in order to enhance the stability of the liquid crystal composition.

A liquid crystal display element including the liquid crystal composition according to the present invention advantageously realizes both high-speed response and suppression of faulty display. The liquid crystal display element may be advantageously used, in particular, as a liquid crystal display element for active-matrix driving and may be used as a liquid crystal display element for TN mode, OCB mode, IPS mode, FFS mode, or VA-IPS mode.

A polymer-stabilized (PS)-mode liquid crystal display element may be prepared using the liquid crystal composition according to the present invention that includes the above-described polymerizable compound. Specifically, the polymer-stabilized (PS)-mode liquid crystal display element may be prepared by holding a liquid crystal composition including a polymerizable compound between two substrates and polymerizing the polymerizable compound included in the liquid crystal composition by using energy such as ultraviolet radiation under application of a voltage or without application of a voltage. In the liquid crystal display element, the alignment state of liquid crystal molecules can be retained by polymerization of the polymerizable compound, which enhances the stability of the alignment state. This may also improve response speed.

### EXAMPLES

The present invention is described below further in detail with reference to examples. Note that, when referring to compositions in Examples and Comparative Examples, "%" always denotes "% by mass".

The physical properties of a liquid crystal composition are represented as follows:
T_{N-I} : Nematic phase-isotropic liquid phase transition temperature (°C)
T-n : Lower limit temperature of nematic phase (°C)
ε⊥ : Dielectric constant in a direction perpendicular to the longitudinal direction of molecules at 25°C
Δε :Dielectric anisotropy at 25°C
n0 : Refractive index for ordinary light at 25°C
Δn :Refractive-index anisotropy at 25°C
Vth : Voltage (V) applied to a cell having a thickness of 6µm when transmittance is changed by 10% due to application of a rectangular wave having a frequency 1KHz at 25°C
η₂₀ : Bulk viscosity at 20°C (mPa·s)
γ₁ : Rotational viscosity (mPa·s)

The following abbreviations are used to describe compounds.

**[Table 1]**

| n (numeral) at the end | **CₙH₂ₙ₊₁-** |
|---|---|
| **2-** | **-CH₂CH₂-** |
| **-1O-** | **-CH₂O-** |
| **-O1-** | **-OCH₂-** |
| **-V-** | **-CO-** |
| **-VO-** | **-COO-** |
| **-CFFO-** | **-CF₂O-** |
| **-F** | **-F** |
| **-Cl** | **-Cl** |
| **-CN** | **-C≡N** |
| **-OCFFF** | **-OCF₃** |
| **-CFFF** | **0** |
| **-OCFF** | **-OCHF₂** |
| **-On** | **-OCₙH₂ₙ₊₁** |
| **-T-** | **-C≡C-** |
| **ndm-** | **CₙH₂ₙ₊₁-HC=CH-(CH₂)ₘ₋₁-** |
| **-ndm** | **-(CH₂)ₙ₋₁-HC=CH-CₘH₂ₘ₊₁** |
| **ndmO-** | **CₙH₂ₙ₊₁-HC=CH-(CH₂)ₘ₋₁-O-** |
| **-Ondm** | **-O-(CH₂)ₙ₋₁-HC=CH-CₘH₂ₘ₊₁** |

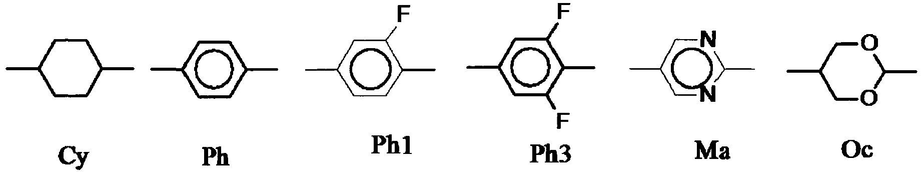

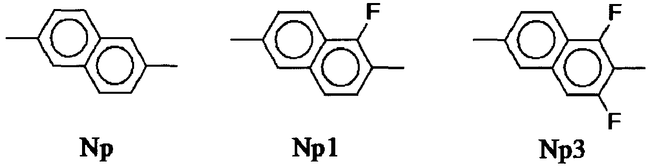

### (Example 1)

The prepared liquid crystal composition and the physical properties of the liquid crystal composition are shown below.

**[Table 2]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **10.0%** |
| **3-Cy-Cy-Ph-1** | **10.0%** |
| **1-Ph-Ph1-Ph-3d0** | **10.0%** |
| **3-Ph-Ph-CFFO-Np3-F** | **10.0%** |
| **3-Cy-Ph-Ph3-OCFFF** | **10.0%** |
| **3-Ph-Ph1-Ph3-OCFFF** | **5.0%** |
| **3-Cy-Cy-Ph1-Ph1-F** | **5.0%** |
| **3-Ph3-O1-Ph-Np3-F** | **10.0%** |
| **Tni** | **88.6** |
| **T-n** | **-33** |
| **Vth** | **1.45V** |
| **γ₁** | **85mPa·s** |
| ***ε*⊥** | **3.2** |
| **Δ*ε*** | **9.0** |
| **no** | **1.498** |
| **Δn** | **0.132** |
| ***η*20** | **17.5mPa·s** |

### (Comparative Example 1)

The prepared liquid crystal composition and the physical properties of the liquid crystal composition are shown below.

**[Table 3]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **10.0%** |
| **3-Cy-Cy-Ph-1** | **10.0%** |
| **1-Ph-Ph1-Ph-3d0** | **10.0%** |
| **3-Ph-Ph1-Np3-F** | **10.0%** |
| **3-Cy-Ph-Ph3-OCFFF** | **10.0%** |
| **3-Ph-Ph1-Ph3-OCFFF** | **5.0%** |
| **3-Cy-Cy-Ph1-Ph1-F** | **5.0%** |
| **3-Ph3-1O-Ph-Np3-F** | **10.0%** |
| **Tni** | **90.1** |
| **T-n** | **-30** |
| **Vth** | **1.53V** |
| ***γ*₁** | **98mPa·s** |
| ***ε*⊥** | **3.0** |
| **Δ*ε*** | **8.0** |
| **no** | **1.500** |
| **Δn** | **0.138** |
| ***η*20** | **20.6mPa·s** |

This liquid crystal composition is a liquid crystal composition that does not include the compound represented by General Formula (LC0-1) or General Formula (LC0-2) according to the present invention. The prepared liquid crystal composition in Example 1 had a far lower viscosity than that prepared in Comparative Example 1 and had a lowγ₁, which proves the superiority of the combination according to the present invention.

### (Comparative Example 2)

The prepared liquid crystal composition and the physical properties of the liquid crystal composition are shown below.

**[Table 4]**

| | |
|---|---|
| **0d1-Cy-Cy-3** | **10.0%** |
| **1d1-Cy-Cy-2** | **10.0%** |
| **0d3-Cy-Cy-3** | **10.0%** |
| **1d1-Cy-Cy-1d1** | **10.0%** |
| **0d3-Cy-Cy-3d0** | **10.0%** |
| **0d1-Cy-Ph-O4** | **5.0%** |
| **5-Ph-Ph-1** | **5.0%** |
| **0d3-Ph-Ph-3d0** | **5.0%** |
| **2-Ph-Ph1-Ph-3d1** | **10.0%** |
| **3-Cy-Cy-CFFO-Np3-F** | **10.0%** |
| **3-Ph-Ph-CFFO-Np3-F** | **10.0%** |
| **3-Cy-Ph1-Ph3-O1-Ph3-OCFFF** | **5.0%** |
| **Tni** | **76** |
| **T-n** | **-34** |
| **Vth** | **1.91V** |
| **γ₁** | **63mPa·s** |
| ***ε*⊥** | **2.6** |
| **Δ*ε*** | **5.8** |
| **no** | **1.492** |
| **Δn** | **0.114** |
| ***η*20** | **11.8mPa·s** |

### (Comparative Example 3)

The prepared liquid crystal composition and the physical properties of the liquid crystal composition are shown below.

**[Table 5]**

| | |
|---|---|
| **0d1-Cy-Cy-3** | **10.0%** |
| **1d1-Cy-Cy-2** | **10.0%** |
| **0d3-Cy-Cy-3** | **10.0%** |
| **1d1-Cy-Cy-1d1** | **10.0%** |
| **1-Ph-Ph1-Ph-3d0** | **5.0%** |
| **2-Ph-Ph1-Ph-3d1** | **5.0%** |
| **3-Ph1-Np3-F** | **5.0%** |
| **3-Ph-Ph1-Np3-F** | **5.0%** |
| **3-Cy-Cy-CFFO-Np3-F** | **5.0%** |
| **3-Cy-Ph-Ph3-OCFFF** | **5.0%** |
| **3-Ph-Ph1-Ph3-OCFFF** | **5.0%** |
| **3-Ph-Ph3-O1-Ph3-F** | **5.0%** |
| **3-Ph3-O1-Ph-Np3-F** | **5.0%** |
| **3-Cy-Cy-Ph3-O1-Ph3-F** | **10.0%** |
| **3-Cy-Ph1-Ph3-O1-Ph3-OCFFF** | **5.0%** |
| **Tni** | **80.9** |
| **T-n** | **-34** |
| **Vth** | **1.36V** |
| **γ₁** | **86mPa·s** |
| ***ε*⊥** | **3.5** |
| **Δ*ε*** | **8.6** |
| **no** | **1.496** |
| **Δn** | **0.125** |
| ***η*20** | **17.9mPa·s** |

### (Example 4)

The prepared liquid crystal composition and the physical properties of the liquid crystal composition are shown below.

**[Table 6]**

| | |
|---|---|
| **0d3-Cy-Cy-3** | **10.0%** |
| **1d1-Cy-Cy-3** | **10.0%** |
| **0d1-Cy-Cy-1d1** | **10.0%** |
| **5-Ph-Ph-1** | **5.0%** |
| **3-Cy-Cy-Ph-1** | **5.0%** |
| **1-Ph-Ph1-Ph-3d0** | **5.0%** |
| **2-Ph-Ph1-Ph-3d1** | **5.0%** |
| **3-Ph1-Np3-F** | **5.0%** |
| **3-Ph-Ph1-Np3-F** | **5.0%** |
| **3-Cy-Cy-CFFO-Np3-F** | **5.0%** |
| **3-Ph-Ph-CFFO-Np3-F** | **5.0%** |
| **3-Cy-Ph-Ph3-OCFFF** | **5.0%** |
| **3-Ph-Ph1-Ph3-OCFFF** | **5.0%** |
| **3-Cy-Cy-Ph1-Ph1-F** | **5.0%** |
| **3-Ph-Ph3-O1-Ph3-F** | **5.0%** |
| **3-Ph3-O1-Ph-Np3-F** | **5.0%** |
| **3-Cy-Cy-Ph3-O1-Ph3-F** | **5.0%** |
| **Tni** | **82.5** |
| **T-n** | **-35** |
| **Vth** | **1.31V** |
| **γ₁** | **91mPa·s** |
| ***ε*⊥** | **3.6** |
| **Δ*ε*** | **9.8** |
| **no** | **1.499** |
| **Δn** | **0.137** |
| ***η*20** | **19.9mPa·s** |

### (Comparative Example 5)

The prepared liquid crystal composition and the physical properties of the liquid crystal composition are shown below.

**[Table 7]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **10.0%** |
| **3-Cy-Cy-2** | **5.0%** |
| **0d1-Cy-Cy-Ph-1** | **5.0%** |
| **1-Ph-Ph1-Ph-3d0** | **5.0%** |
| **2-Ph-Ph1-Ph-3d1** | **5.0%** |
| **3-Ph1-Np3-F** | **5.0%** |
| **3-Ph-Ph1-Np3-F** | **5.0%** |
| **3-Cy-Cy-CFFO-Np3-F** | **5.0%** |
| **3-Ph-Ph-CFFO-Np3-F** | **5.0%** |
| **3-Cy-Ph3-O1-Ph3-Ph-OCFFF** | **5.0%** |
| **3-Ph3-O1-Cy-Ph3-Ph3-F** | **5.0%** |
| **3-Cy-Cy-CFFO-Ph3-F** | **5.0%** |
| **3-Cy-Ph1-Ph3-CFFO-Ph3-F** | **5.0%** |
| **Tni** | **81.6** |
| **T-n** | **-34** |
| **Vth** | **1.44V** |
| **γ₁** | **80mPa·s** |
| ***ε*⊥** | **3.2** |
| **Δ*ε*** | **9.0** |
| **no** | **1.491** |
| **Δn** | **0.113** |
| ***η*20** | **16.0mPa.s** |

### (Example 6)

The prepared liquid crystal composition and the physical properties of the liquid crystal composition are shown below.

**[Table 8]**

| | |
|---|---|
| **0d3-Cy-Cy-3** | **10.0%** |
| **1d1-Cy-Cy-3** | **10.0%** |
| **0d1-Cy-Cy-1d1** | **10.0%** |
| **3-Cy-Cy-2** | **5.0%** |
| **1-Ph-Ph1-Ph-3d0** | **5.0%** |
| **3-Ph-Ph1-Np3-F** | **5.0%** |
| **3-Cy-Cy-CFFO-Np3-F** | **5.0%** |
| **3-Ph-Ph-CFFO-Np3-F** | **5.0%** |
| **3-Ph3-O1-Ph-Np3-F** | **5.0%** |
| **3-Cy-Ph3-O1-Ph3-F** | **5.0%** |
| **3-Cy-Ph3-O1-Ph-OCFFF** | **5.0%** |
| **3-Ph-Ph3-O1-Ph-OCFFF** | **5.0%** |
| **3-Cy-Ph1-Ph3-O1-Ph3-F** | **5.0%** |
| **3-Cy-Ph1-Ph3-O1-Ph-OCFFF** | **5.0%** |
| **3-Ph-Ph1-Ph3-O1-Ph-OCFFF** | **5.0%** |
| **3-Cy-Cy-CFFO-Ph3-F** | **5.0%** |
| **3-Cy-Ph1-Ph3-CFFO-Ph3-F** | **5.0%** |
| **Tni** | **78.9** |
| **T-n** | **-36** |
| **Vth** | **1.29V** |
| **γ₁** | **82mPa·s** |
| ***ε*⊥** | **4.4** |
| **Δ*ε*** | **10.8** |
| **no** | **1.495** |
| **Δn** | **0.119** |
| ***η*20** | **16.6mPa·s** |

### (Comparative Example 7)

The prepared liquid crystal composition and the physical properties of the liquid crystal composition are shown below.

**[Table 9]**

| | |
|---|---|
| **1d1-Cy-Cy-2** | **10.0%** |
| **1d1-Cy-Cy-3** | **10.0%** |
| **0d1-Cy-Cy-1d1** | **10.0%** |
| **3-Cy-Cy-2** | **5.0%** |
| **0d1-Cy-Cy-Ph-1** | **5.0%** |
| **2-Ph-Ph1-Ph-3d1** | **5.0%** |
| **3-Ph1-Np3-F** | **5.0%** |
| **3-Cy-Cy-CFFO-Np3-F** | **5.0%** |
| **3-Ph-Ph-CFFO-Np3-F** | **5.0%** |
| **3-Ph3-O1-Ph-Np3-F** | **5.0%** |
| **3-Ph-Ph3-O1-Ph3-F** | **5.0%** |
| **3-Cy-Ph1-Ph3-O1-Ph3-F** | **5.0%** |
| **3-Cy-Ph1-Ph3-O1-Ph-OCFFF** | **5.0%** |
| **3-Ph-Ph1-Ph3-O1-Ph-OCFFF** | **5.0%** |
| **3-Cy-Ph3-O1-Ph3-Ph-OCFFF** | **5.0%** |
| **3-Ph3-O1-Cy-Ph3-Ph3-F** | **5.0%** |
| **3-Cy-Cy-CFFO-Ph3-F** | **5.0%** |
| **Tni** | **78.4** |
| **T-n** | **-34** |
| **Vth** | **1.26V** |
| ***γ*₁** | **86mPa·s** |
| ***ε*⊥** | **4.2** |
| **Δ*ε*** | **11.2** |
| **no** | **1.490** |
| **Δn** | **0.112** |
| ***η*20** | **17.6mPa·s** |

### (Comparative Example 8)

The prepared liquid crystal composition and the physical properties of the liquid crystal composition are shown below.

**[Table 10]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **3-Cy-Cy-2** | **5.0%** |
| **0d1-Cy-Cy-Ph-1** | **10.0%** |
| **2-Ph-Ph1-Ph-3d1** | **5.0%** |
| **3-Ph1-Np3-F** | **5.0%** |
| **3-Ph-Ph1-Np3-F** | **5.0%** |
| **3-Ph3-O1-Ph-Np3-F** | **5.0%** |
| **3-Cy-Ph3-O1-Ph3-F** | **5.0%** |
| **3-Cy-Ph3-O1-Ph-OCFFF** | **5.0%** |
| **3-Ph-Ph3-O1-Ph-OCFFF** | **5.0%** |
| **3-Ph-Ph1-Ph3-O1-Ph-OCFFF** | **5.0%** |
| **3-Cy-Ph3-O1-Ph3-Ph-OCFFF** | **5.0%** |
| **3-Cy-Cy-CFFO-Ph3-F** | **5.0%** |
| **3-Cy-Ph1-Ph3-CFFO-Ph3-F** | **5.0%** |
| **Tni** | **71.3** |
| **T-n** | **-35** |
| **Vth** | **1.47V** |
| ***γ*₁** | **73mPa·s** |
| ***ε*⊥** | **3.2** |
| **Δ*ε*** | **8.8** |
| **no** | **1.492** |
| **Δn** | **0.115** |
| ***η*20** | **13.9mPa·s** |

### (Example 9)

The prepared liquid crystal composition and the physical properties of the liquid crystal composition are shown below.

**[Table 11]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **10.0%** |
| **2-Cy-Cy-Ph-1** | **5.0%** |
| **2-Ph-Ph1-Ph-5** | **5.0%** |
| **3-Cy-Cy-CFFO-Np3-F** | **5.0%** |
| **3-Ph-Ph-CFFO-Np3-F** | **5.0%** |
| **3-Ph3-O1-Ph-Np3-F** | **5.0%** |
| **3-Cy-Ph-Ph3-F** | **5.0%** |
| **3-Cy-Cy-Ph3-OCFFF** | **5.0%** |
| **0d3-Ph-Ph-Ph3-F** | **5.0%** |
| **3-Cy-Ph3-O1-Ph3-F** | **5.0%** |
| **3-Cy-Ph3-01-Ph-OCFFF** | **5.0%** |
| **3-Cy-Ph1-Ph3-O1-PH-OCFFF** | **5.0%** |
| **3-Cy-Cy-CFFO-Ph3-F** | **5.0%** |
| **Tni** | **75.5** |
| **T-n** | **-34** |
| **Vth** | **1.53V** |
| ***γ*₁** | **73mPa·s** |
| ***ε*⊥** | **3.1** |
| **Δ*ε*** | **7.9** |
| **no** | **1.490** |
| **Δn** | **0.104** |
| ***η*20** | **13.8mPa·s** |

### (Example 10)

The prepared liquid crystal composition and the physical properties of the liquid crystal composition are shown below.

**[Table 12]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **10.0%** |
| **2-Cy-Cy-Ph-1** | **5.0%** |
| **2-Ph-Ph1-Ph-5** | **5.0%** |
| **3-Cy-Cy-CFFO-Np3-F** | **5.0%** |
| **3-Ph-Ph-CFFO-Np3-F** | **5.0%** |
| **3-Ph3-O1-Ph-Np3-F** | **5.0%** |
| **3-Cy-Ph-Ph3-F** | **5.0%** |
| **3-Cy-Cy-Ph3-OCFFF** | **5.0%** |
| **0d3-Ph-Ph-Ph3-F** | **5.0%** |
| **3-Ph-Ph3-O1-Ph3-F** | **5.0%** |
| **3-Ph-Ph3-O1-Ph-OCFFF** | **5.0%** |
| **3-Cy-Ph1-Ph3-O1-Ph3-F** | **5.0%** |
| **3-Cy-Ph1-Ph3-CFFO-Ph3-F** | **5.0%** |
| **Tni** | **73.1** |
| **T-n** | **-33** |
| **Vth** | **1.35V** |
| ***γ*₁** | **78mPa·s** |
| ***ε*_{┴}** | **3.6** |
| **Δ*ε*** | **9.6** |
| **no** | **1.491** |
| **Δn** | **0.112** |
| ***η*20** | **15.7mPa·s** |

### (Example 11)

The prepared liquid crystal composition and the physical properties of the liquid crystal composition are shown below.

**[Table 13]**

| | |
|---|---|
| **0d3-Cy-Cy-3** | **10.0%** |
| **1d1-Cy-Cy-3** | **10.0%** |
| **0d1-Cy-Cy-1d1** | **5.0%** |
| **3-Ph1-Np3-F** | **5.0%** |
| **3-Ph-Ph1-Np3-F** | **5.0%** |
| **3-Ph3-O1-Ph-Np3-F** | **5.0%** |
| **3-Cy-Ph-Ph3-F** | **10.0%** |
| **3-Cy-Cy-Ph3-OCFFF** | **10.0%** |
| **3-Cy-Ph3-O1-Ph-OCFFF** | **5.0%** |
| **3-Ph-Ph3-O1-Ph-OCFFF** | **5.0%** |
| **3-Cy-Ph1-Ph3-O1-Ph-OCFFP** | **10.0%** |
| **3-Ph-Ph1-Ph3-O1-Ph-OCFFF** | **10.0%** |
| **3-Cy-Cy-CFFO-Ph3-F** | **10.0%** |
| **Tni** | **74.5** |
| **T-n** | **-32** |
| **Vth** | **1.26V** |
| **γ₁** | **89mPa·s** |
| **ε_{┴}** | **4.4** |
| **Δ*ε*** | **11.8** |
| **no** | **1.496** |
| **Δn** | **0.123** |
| ***η*20** | **18.5mPa·s** |

### (Example 12)

The prepared liquid crystal composition and the physical properties of the liquid crystal composition are shown below.

**[Table 14]**

| | |
|---|---|
| **1d1-Cy-Cy-2** | **10.0%** |
| **0d3-Cy-Cy-3** | **10.0%** |
| **1d1-Cy-Cy-3** | **10.0%** |
| **0d1-Cy-Cy-1d1** | **5.0%** |
| **2-Cy-Cy-Ph-1** | **5.0%** |
| **2-Ph-Ph1-Ph-5** | **5.0%** |
| **3-Cy-Cy-CFFO-Np3-F** | **5.0%** |
| **3-Ph-Ph-CFFO-Np3-F** | **5.0%** |
| **3-Ph3-O1-Ph-Np3-F** | **5.0%** |
| **0d3-Ph-Ph-Ph3-F** | **10.0%** |
| **3-Cy-Ph3-O1-Ph3-F** | **5.0%** |
| **3-Ph-Ph3-O1-Ph3-F** | **5.0%** |
| **3-Cy-Ph1-Ph3-01-Ph3-F** | **10.0%** |
| **3-Cy-Ph1-Ph3-CFFO-Ph3-F** | **10.0%** |
| **Tni** | **74.5** |
| **T-n** | **-32** |
| **Vth** | **1.26V** |
| ***γ*₁** | **89mPa·s** |
| **ε⊥** | **4.4** |
| **Δ*ε*** | **11.8** |
| **no** | **1.496** |
| **Δn** | **0.123** |
| ***η*20** | **18.5mPa·s** |

As described above, the liquid crystal compositions prepared in Examples 2 to 12 had a low viscosity and a lowγ₁, which proves the superiority of the combination according to the present invention.

### (Example 13)

A first substrate including a pair of transparent electrodes having a comb-like electrode structure formed thereon and a second substrate that did not include an electrode structure were prepared. A vertical alignment film was formed on each substrate. Then, a blank cell for IPS including the first substrate and the second substrate that were disposed at a gap interval of 4.0 microns was prepared. The liquid crystal composition prepared in Example 9 was injected into the blank cell. Thus, a liquid crystal display element was prepared. The electro-optical properties of the display element were measured. The voltage applied in order to change transmittance by 10% was 1.53 v. The speed of response to application of 5 v was 5.2 milliseconds. The speed of response to the switching-off of voltage was 13.4 seconds.

To 99% of the liquid crystal composition prepared in Example 3, 1% of the polymerizable compound represented by Formula (PC-1)-3-1 was added and dissolved uniformly to prepare a polymerizable liquid crystal composition CLC-A.

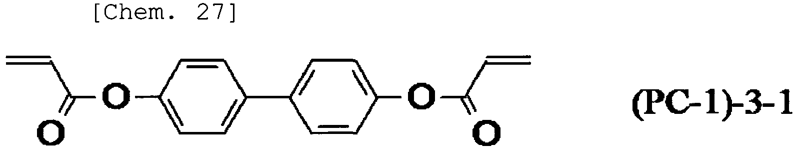

There were substantially no difference in physical properties between CLC-A and the liquid crystal composition prepared in Example 3.

CLC-A was held by the blank cell for IPS described above, and subsequently the liquid crystal cell was irradiated with ultraviolet radiation using a high-pressure mercury-vapor lamp with a filter that blocks ultraviolet radiation of 300 nm or less, which was interposed between the liquid crystal cell and the high-pressure mercury-vapor lamp, while a rectangular wave of 1.8 V was applied to the liquid crystal cell at a frequency of 1KHz. The irradiation was performed for 600 seconds so that the irradiation intensity on the cell surface was 20mW/cm² to polymerize the polymerizable compound included in the polymerizable liquid crystal composition. Thus, a vertical-alignment liquid crystal display element was prepared. The electro-optical properties of the display element were measured. The voltage applied in order to change transmittance by 10% was 1.61 v. The speed of response to application of 5 v was 5.2 milliseconds. The speed of response to the switching-off of voltage was 5.2 milliseconds, which was far faster than that of the above-described liquid crystal display element prepared using only the liquid crystal composition prepared in Example 9.

## Claims

1. A liquid crystal composition having a positive dielectric anisotropy, the liquid crystal composition comprising:
one or more compounds selected from compounds represented by General Formula (LC0-1); and
one or more compounds selected from the group consisting of compounds represented by General Formulae (LC1) to (LC5), 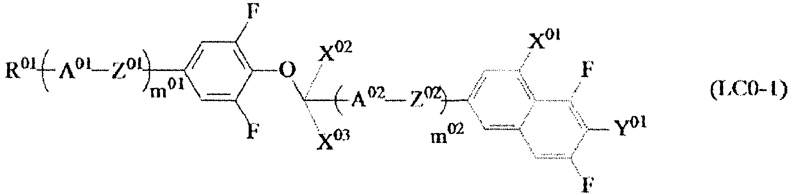 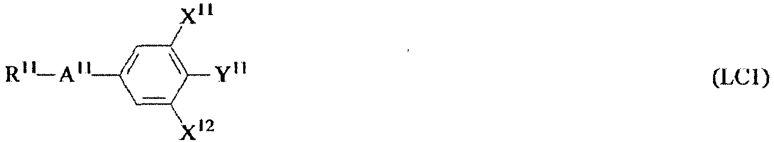 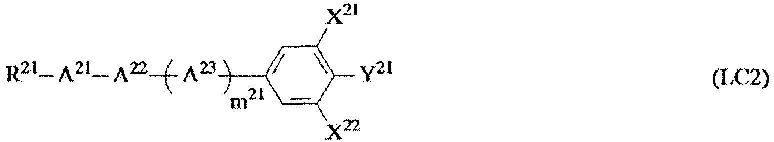 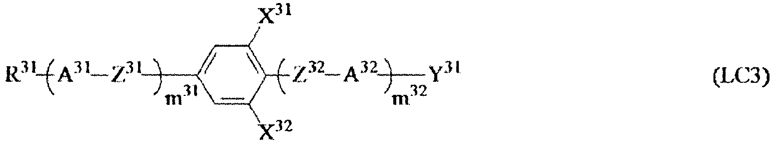 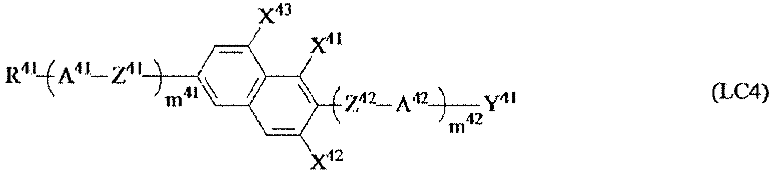 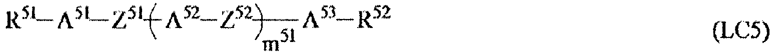 (wherein R⁰¹ to R⁴¹ each independently represent an alkyl group having a carbon number of 1 to 15; one or more -CH₂- of the alkyl group may be substituted by -O-, -CH=CH-, -CO-, -OCO-, -COO-, -C≡C-, -CF₂O-, or -OCF₂- so that an oxygen atom is not directly adjacent to another oxygen atom, one or more hydrogen atoms of the alkyl group may be substituted by a halogen; R⁵¹ and R⁵² each independently represent an alkyl group having a carbon number of 1 to 15, and one or more -CH₂- of the alkyl group may be substituted by -O-, -CH=CH-, -CO-, -OCO-, -COO-, or -C≡C-so that an oxygen atom is not directly adjacent to another oxygen atom; A⁰¹ to A⁴² each independently represent any one of the following structures: 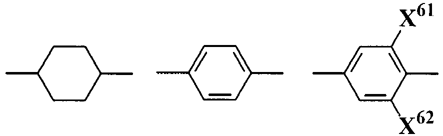 (wherein one or more -CH₂- in the cyclohexane ring may be substituted by - O- so that an oxygen atom is not directly adjacent to another oxygen atom; one or more -CH= in the benzene ring may be substituted by -N= so that a nitrogen atom is not directly adjacent to another nitrogen atom; and X⁶¹ and X⁶² each independently represent -H, -Cl, -F, -CF₃, or -OCF₃); A⁵¹ to A⁵³ each independently represent any one of the following structures: 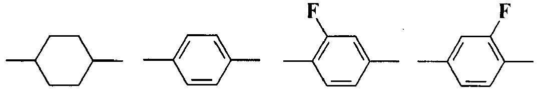 (wherein one or more -CH₂CH₂- in the cyclohexane ring may be substituted by -CH=CH-, -CF₂O-, or -OCF₂-; one or more -CH= in the benzene ring may be substituted by -N= so that a nitrogen atom is not directly adjacent to another nitrogen atom); X⁰¹ represents a hydrogen atom or a fluorine atom; X⁰² and X⁰³ each represents a hydrogen atom; X¹¹ to X⁴³ each independently represent -H, -Cl, -F, -CF₃, or -OCF₃; Y⁰¹ to Y⁴¹ each represent -Cl, -F, -CF₃, or -OCF₃; Z⁰¹ and Z⁰² each independently represent a single bond, -CH=CH-, -C≡C-, -CH₂CH₂-, -(CH₂)₄-, -OCH₂-, -CH₂O-, - OCF₂-, or -CF₂O-; Z³¹ to Z⁴² each independently represent a single bond, -CH=CH-, - C≡C-, -CH₂CH₂-, -(CH₂)₄-, -OCH₂-, -CH₂O-, -OCF₂-, or -CF₂O-; at least one of Z³¹ and Z³² is not a single bond; Z⁵¹ and Z⁵² each independently represent a single bond, - CH=CH-, -C≡C-, -CH₂CH₂-, -(CH₂)₄-, -OCH₂-, -CH₂O-, -OCF₂-, or -CF₂O-; m⁰¹ to m⁵¹ are each independently an integer of 0 to 3; m³¹ + m³² and m⁴¹ + m⁴² are each independently 1, 2, 3, or 4; in the case where there are a plurality of A⁰¹'s, A⁰²'s, A^{03'}s, A²³'s, A³¹'s, A³²'s, A⁴¹'s, A⁴²'s, A⁵²'s, Z⁰¹'s, Z⁰²'s, Z³¹'s, Z^{32'}s, Z⁴¹'s, Z⁴²'s and/or Z⁵²'s, they may be all identical or different; and Z⁴¹'s each independently represent a single bond, -CH=CH-, -C≡C-, -CH₂CH₂-, or -(CH₂)₄- when m⁴² is 0), with the proviso that
the liquid crystal composition does not include either of compounds represented by the following formulae:

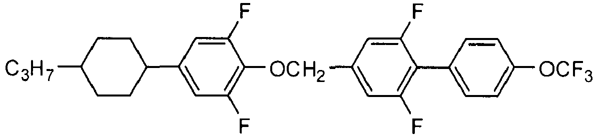

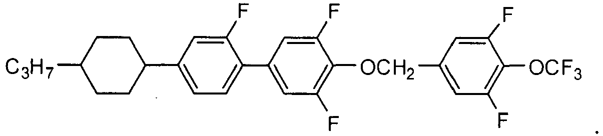

2. The liquid crystal composition according to Claim 1 including:
the one or more compounds selected from compounds represented by General Formula (LCO-1);
one or more compounds selected from compounds represented by General Formula (LCO-2); and
the one or more compounds selected from the group consisting of compounds represented by General Formulae (LC1) to (LC5), 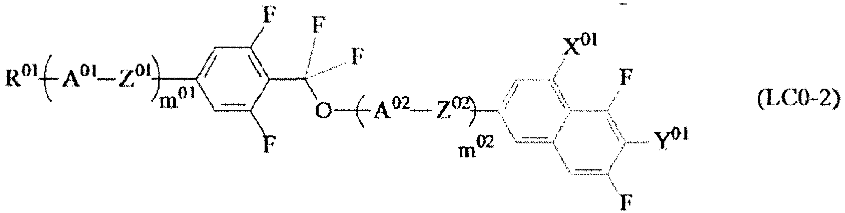 (wherein R⁰¹ represents an alkyl group having a carbon number of 1 to 15; one or more -CH₂- of the alkyl group may be substituted by -O-, -CH=CH-, -CO-, - OCO-, -COO-, -C=C-, -CF₂O-, or -OCF₂- so that an oxygen atom is not directly adjacent to another oxygen atom, one or more hydrogen atoms of the alkyl group may be substituted by a halogen; A⁰¹ and A⁰² each independently represent any one of the following structures: 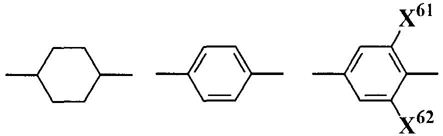 (wherein one or more -CH₂- in the cyclohexane ring may be substituted by - O- so that an oxygen atom is not directly adjacent to another oxygen atom; one or more -CH= in the benzene ring may be substituted by -N= so that a nitrogen atom is not directly adjacent to another nitrogen atom; and X⁶¹ and X⁶² each independently represent -H, -Cl, -F, -CF₃, or -OCF₃); X⁰¹ represents a hydrogen atom or a fluorine atom; Y⁰¹ represents -Cl, -F, -CF₃, or -OCF₃; Z⁰¹ and Z⁰² each independently represent a single bond, -CH=CH-, -C≡C-, -CH₂CH₂-, -(CH₂)₄-, -OCH₂-, -CH₂O-, -OCF₂-, or - CF₂O-; m⁰¹ and m⁰² are each independently an integer of 0 to 3; and in the case where there are a plurality of A⁰¹'s and/or A⁰²'s, they may be all identical or different).

3. The liquid crystal composition according to Claim 1 including:
the one or more compounds selected from compounds represented by General Formula (LCO-1);
one or more compounds selected from the group consisting of compounds represented by General Formulae (LC1) to (LC4); and
one or more compounds selected from the group consisting of compounds represented by General Formula (LC5).

4. The liquid crystal composition according to Claim 2 including:
the one or more compounds selected from compounds represented by General Formula (LC0-1);
the one or more compounds selected from compounds represented by General Formula (LC0-2);
one or more compounds selected from the group consisting of compounds represented by General Formulae (LC1) to (LC4); and
one or more compounds selected from the group consisting of compounds represented by General Formula (LC5).

5. The liquid crystal composition according to Claim 2 including:
one or more compounds selected from the group consisting of compounds represented by General Formulae (LC0-1-2), (LC0-1-4), (LC0-1-6), (LC0-1-8), (LC0-2-2), and (LC0-2-4), 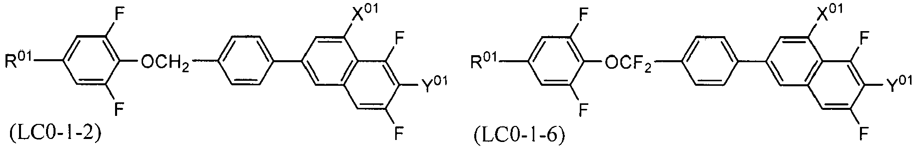 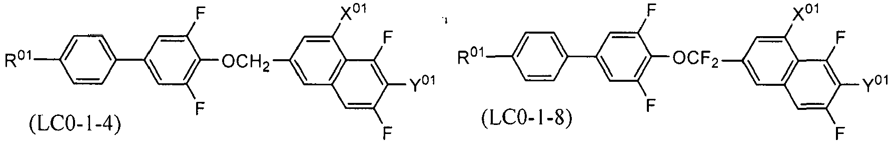 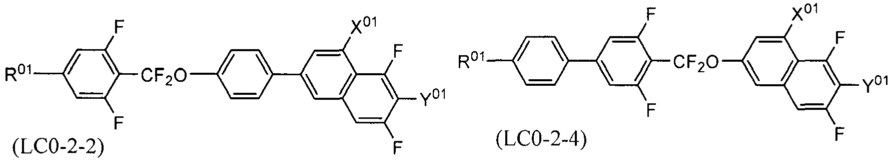 (wherein R⁰¹, X⁰¹, and Y⁰¹ represent the same things as those described in Claim 1, respectively).

6. The liquid crystal composition according to any one of Claims 1 to 5 including:
the one or more compounds selected from compounds represented by General Formula (LCO-1); and
one or more compounds selected from the group consisting of compounds represented by General Formulae (LC2-1) to (LC2-8), 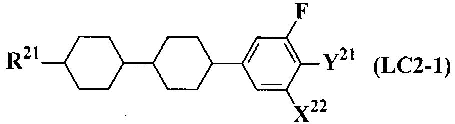 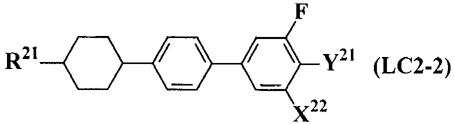 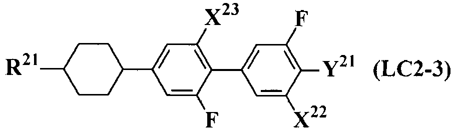 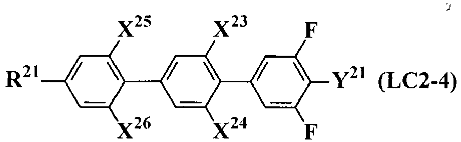 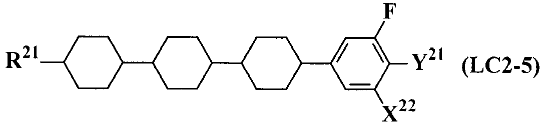 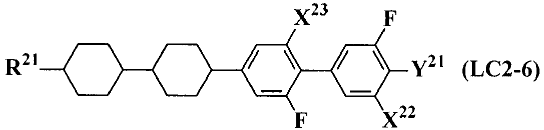 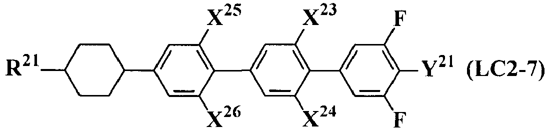 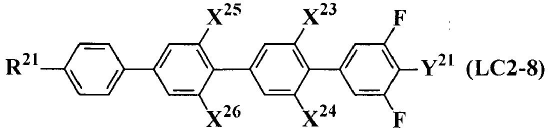 (wherein X²³, X²⁴, X²⁵, and X²⁶ each independently represent a hydrogen atom, Cl, F, CF₃, or OCF₃; and X²², R²¹, and Y²¹ represent the same things as those described in Claim 1, respectively).

7. The liquid crystal composition according to Claim 6 including:
the one or more compounds selected from compounds represented by General Formula (LC0-1);
one or more compounds selected from compounds represented by General Formula (LC0-2);
and
the one or more compounds selected from the group consisting of compounds represented by General Formulae (LC2-1) to (LC2-8).

8. The liquid crystal composition according to any one of Claims 1 to 7 including:
the one or more compounds selected from compounds represented by General Formula (LC0-1); and
one or more compounds selected from compounds represented by General Formulae (LC3-1) to (LC3-22) and/or the group consisting of compounds represented by General Formulae (LC3-23) to (LC3-121), 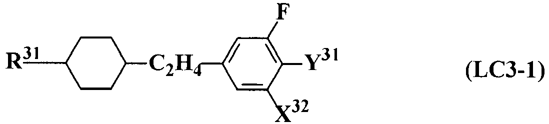 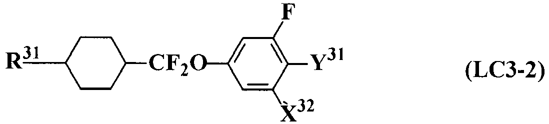 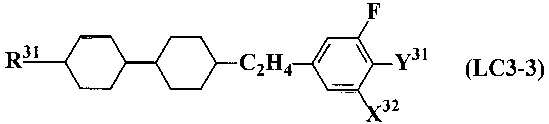 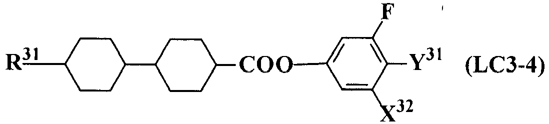 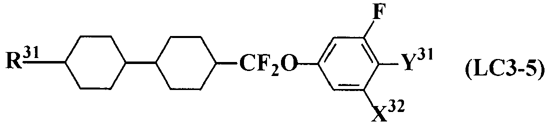 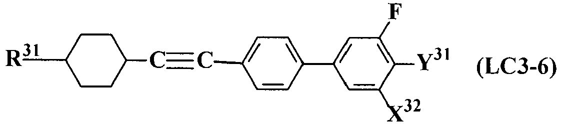 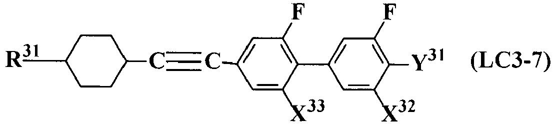 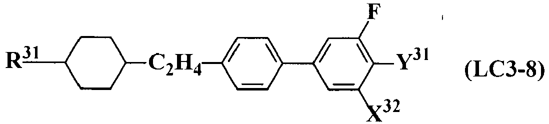 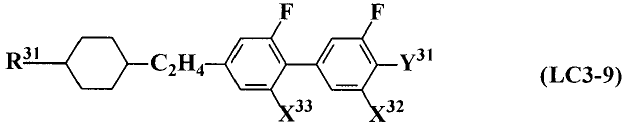 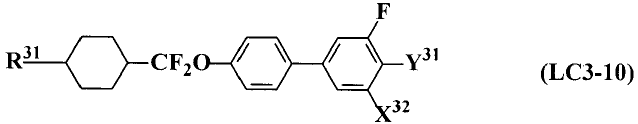 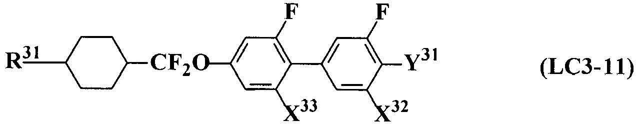 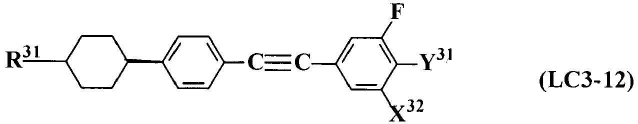 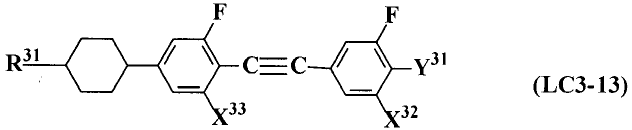 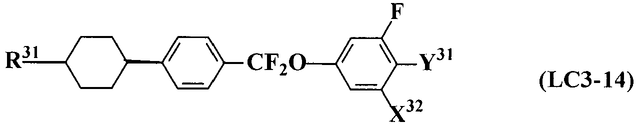 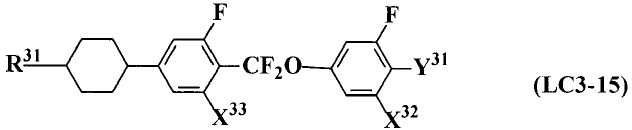 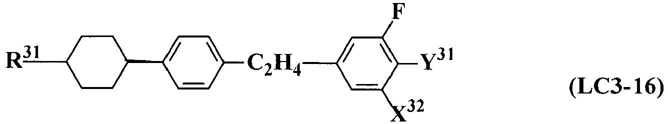 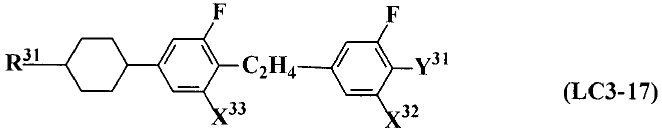 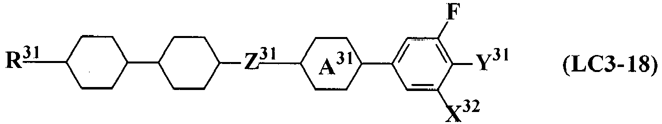 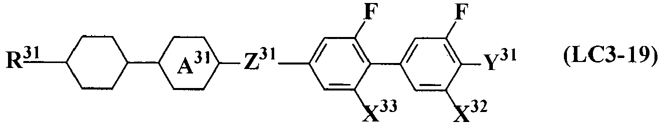 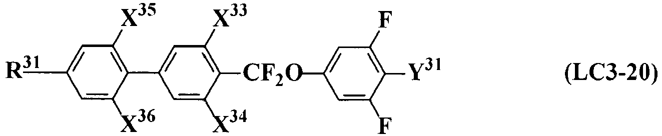 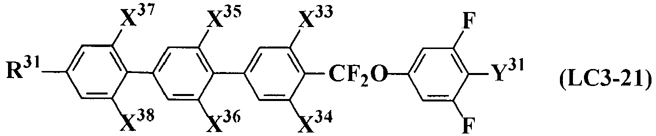 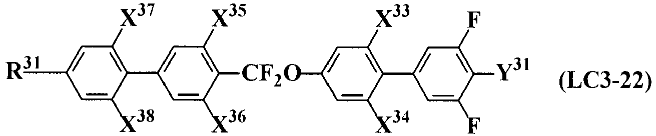 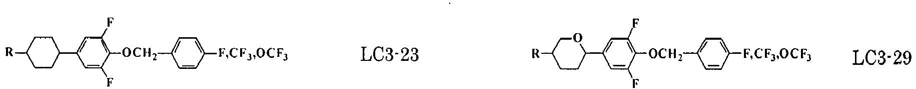 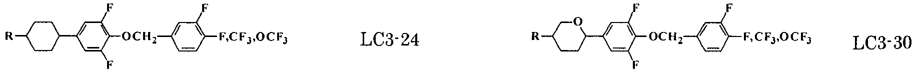 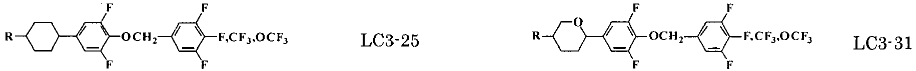 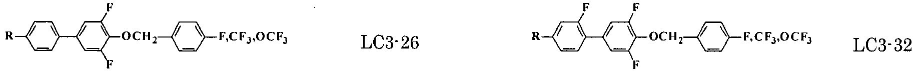 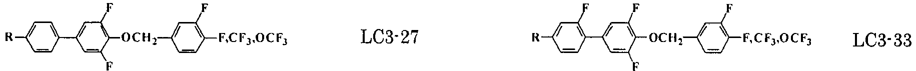 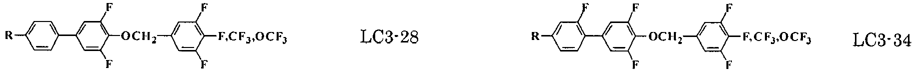 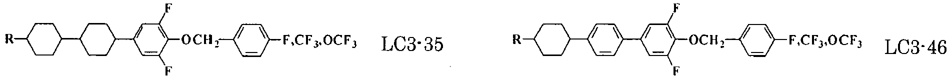 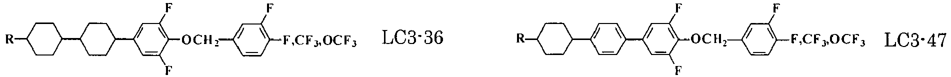 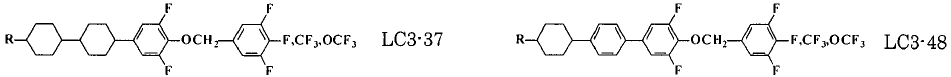 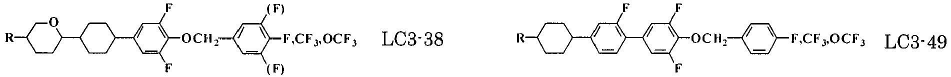 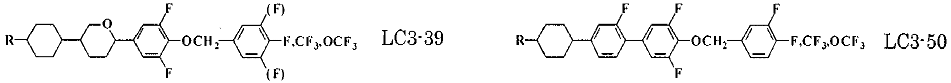 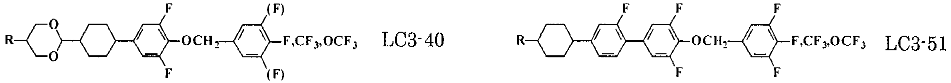 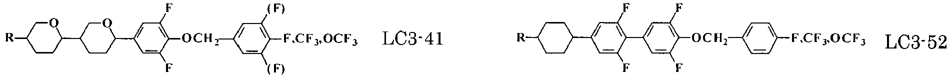 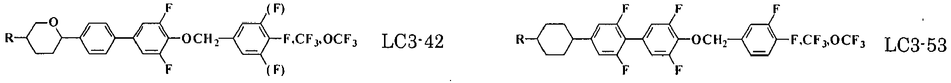 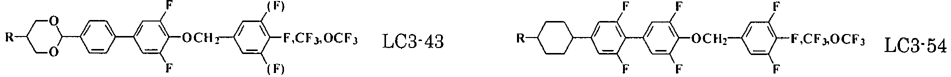 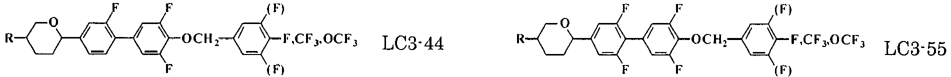 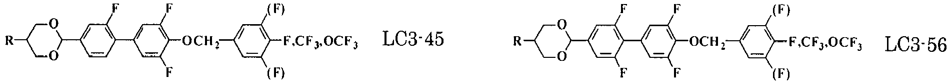 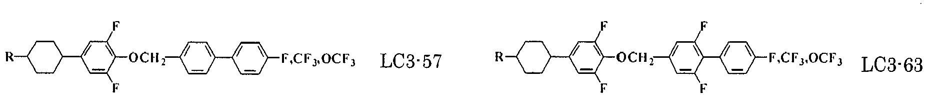 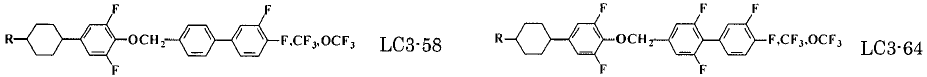 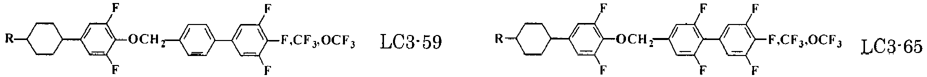 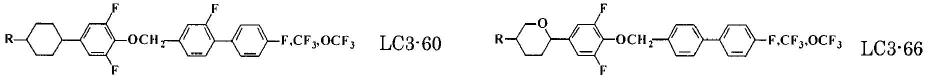 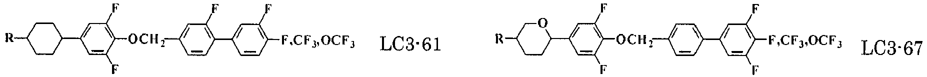 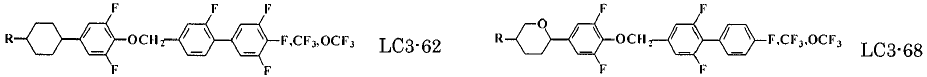 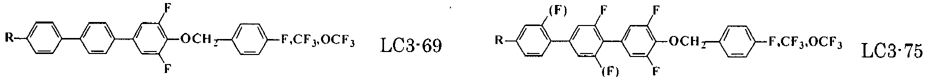 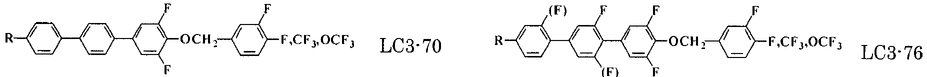 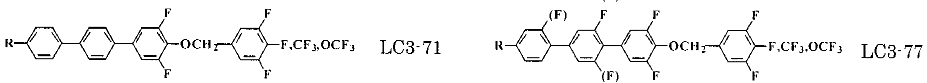 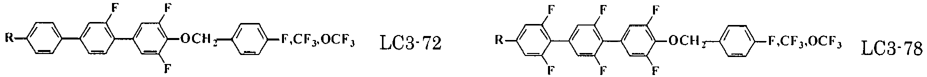 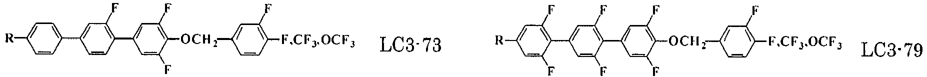 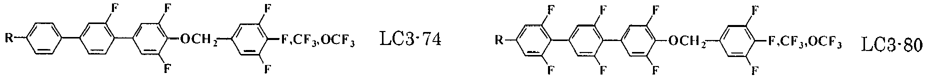 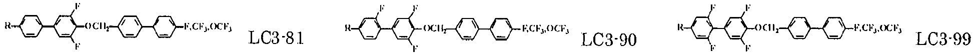 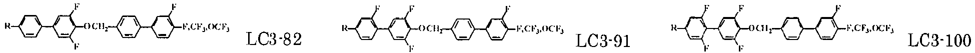 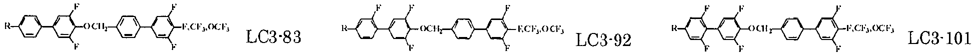 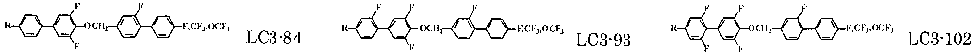 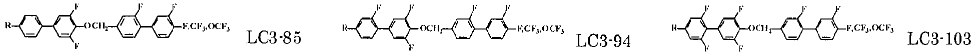 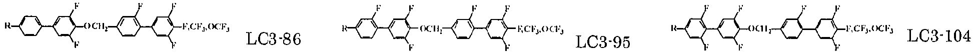 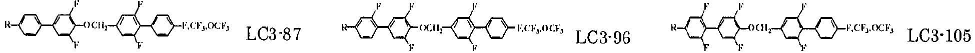 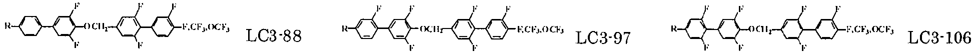 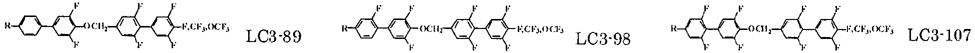 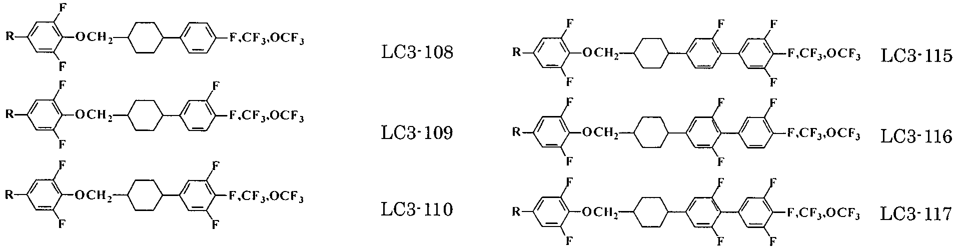 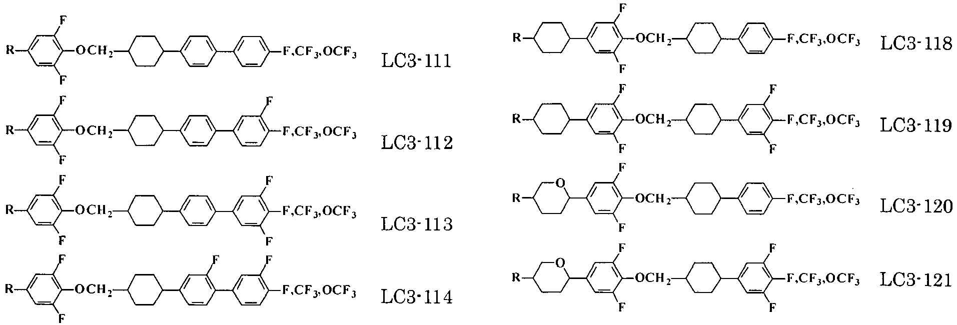 (wherein X³³, X³⁴, X³⁵, X³⁶, X³⁷, and X³⁸ each independently represent H, Cl, F, CF₃, or OCF₃; X³², R³¹, A³¹, Y³¹, and Z³¹ represent the same things as those described in Claim 1, respectively; R represents R³¹; F, CF₃, OCF₃ represents any one of F, CF₃, and OCF₃; and (F) represents any one of H and F).

9. The liquid crystal composition according to Claim 8 including:
the one or more compounds selected from compounds represented by General Formula (LC0-1);
one or more compounds selected from compounds represented by General Formula (LC0-2); and
the one or more compounds selected from compounds represented by General Formulae (LC3-1) to (LC3-22) and/or the group consisting of compounds represented by General Formulae (LC3-23) to (LC3-121).

10. The liquid crystal composition according to any one of Claims 1 to 9 including:
the one or more compounds selected from compounds represented by General Formula (LC0-1); and
one or more compounds selected from the group consisting of compounds represented by General Formulae (LC4-1) to (LC4-12), 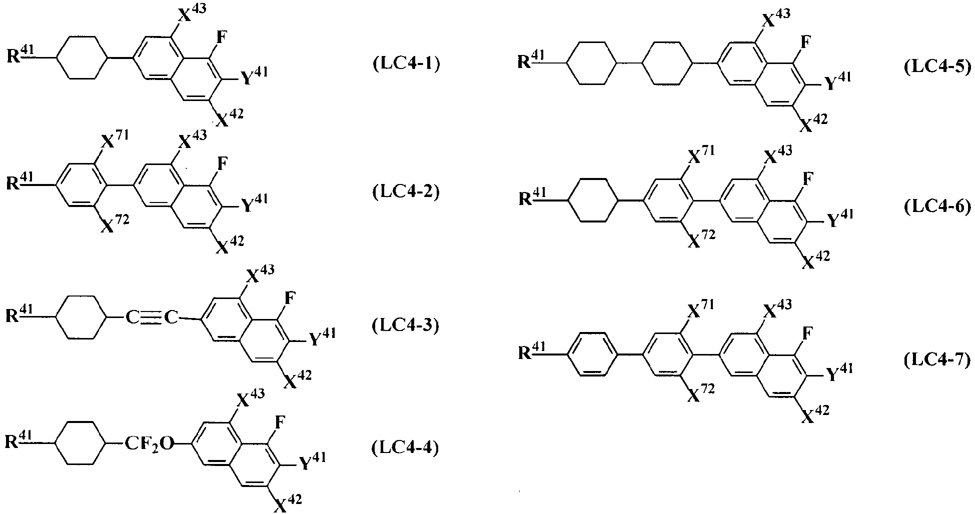 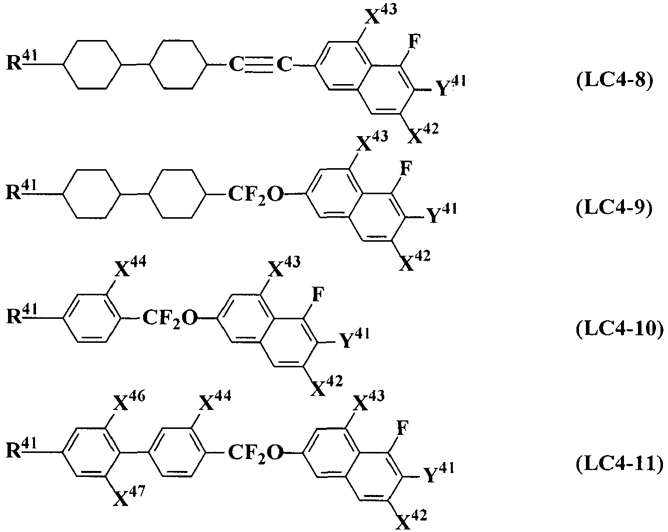 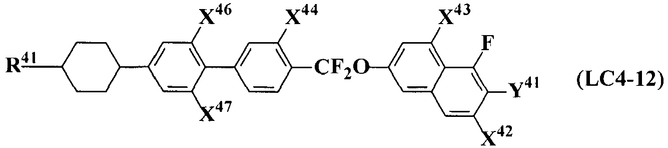 (wherein X⁴⁴, X⁴⁶, X⁴⁷, X⁷¹, and X⁷² each independently represent H, Cl, F, CF₃, or OCF₃; and X⁴², X⁴³, R⁴¹, and Y⁴¹ represent the same things as those described in Claim 1, respectively).

11. The liquid crystal composition according to Claim 10 including:
the one or more compounds selected from compounds represented by General Formula (LC0-1);
one or more compounds selected from compounds represented by General Formula (LC0-2); and
the one or more compounds selected from the group consisting of compounds represented by General Formulae (LC4-1) to (LC4-12).

12. The liquid crystal composition according to any one of Claims 1 to 11 including:
the one or more compounds selected from compounds represented by General Formula (LC0-1); and
one or more compounds selected from the group consisting of compounds represented by General Formulae (LC5-1) to (LC5-14), 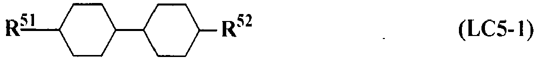 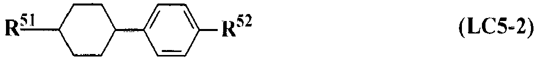 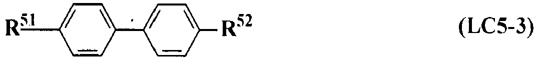 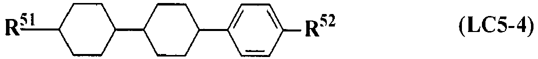 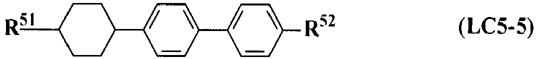 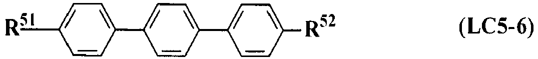 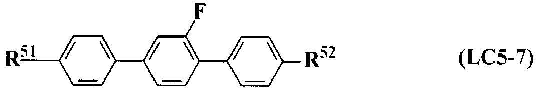 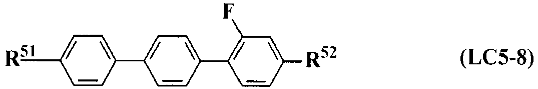 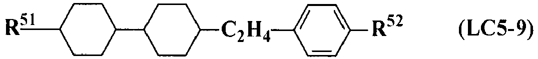 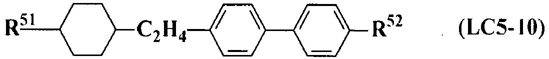 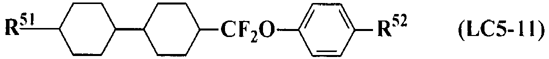 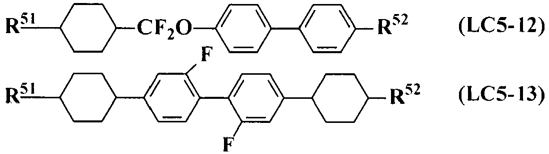 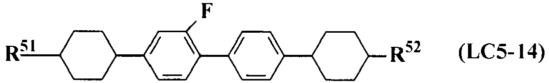 (wherein R⁵¹ and R⁵² represent the same things as those described in Claim 1, respectively).

13. The liquid crystal composition according to Claim 12 including:
the one or more compounds selected from compounds represented by General Formula (LC0-1);
one or more compounds selected from compounds represented by General Formula (LC0-1); and
the one or more compounds selected from the group consisting of compounds represented by General Formulae (LC5-1) to (LC5-14).

14. The liquid crystal composition according to any one of Claims 1 to 13 including one or more polymerizable compounds.

15. The liquid crystal composition according to any one of Claims 1 to 14 including one or more antioxidants.

16. The liquid crystal composition according to any one of Claims 1 to 15 including one or more UV absorbers.

17. A liquid crystal display element comprising the liquid crystal composition according to any one of Claims 1 to 16.

18. The liquid crystal display element of claim 17 used for active-matrix driving.

19. The liquid crystal display element of claim 17 used in TN mode, OCB mode, IPS mode, or VA-IPS mode.

20. The liquid crystal display element of claim 17 being a polymer-stabilized liquid crystal display element used in TN mode, OCB mode, IPS mode, or VA-IPS mode, the polymer-stabilized liquid crystal display element being prepared by polymerizing the polymerizable compounds included in the liquid crystal composition according to Claim 14 under application of a voltage or without application of a voltage.

## Patentansprüche

1. Flüssigkristallzusammensetzung mit positiver dielektrischer Anisotropie, wobei die Flüssigkristallzusammensetzung umfasst:
eine oder mehr Verbindungen, ausgewählt aus Verbindungen der allgemeinen Formel (LC0-1); und
eine oder mehr Verbindungen, ausgewählt aus der Gruppe, bestehend aus Verbindungen der allgemeinen Formeln (LC1) bis (LC5), 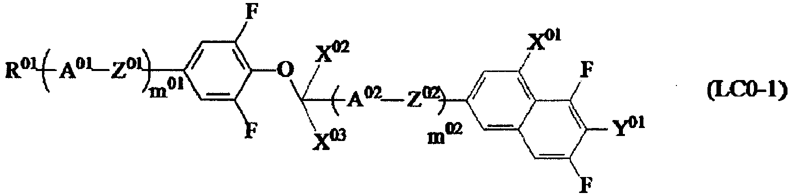 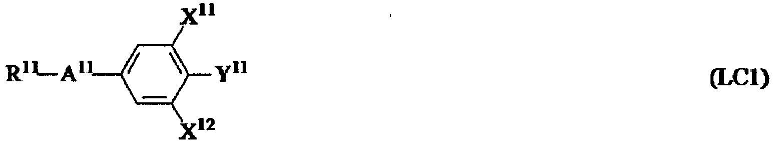 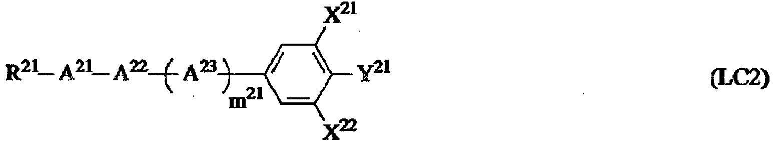 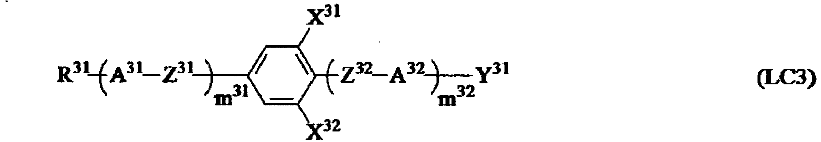 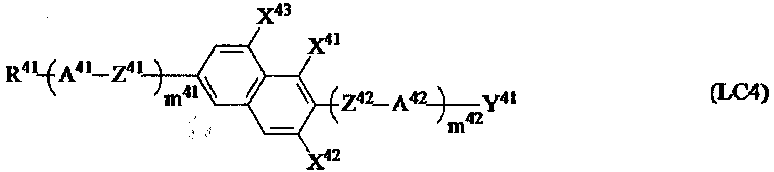 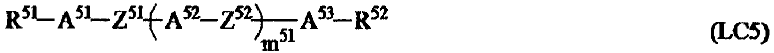 wobei gilt: R⁰¹ bis R⁴¹ stehen jeweils unabhängig für eine Alkylgruppe mit einer Kohlenstoffanzahl von 1 bis 15; eines oder mehr -CH₂- der Alkylgruppe können substituiert sein durch -O-, -CH=CH-, -CO-, -OCO-, -COO-, -C≡C-, -CF₂O- oder -OCF₂-, sodass ein Sauerstoffatom nicht direkt benachbart ist zu einem anderen Sauerstoffatom; ein oder mehr Wasserstoffatome der Alkylgruppe können substituiert sein durch ein Halogen; R⁵¹ und R⁵² stehen jeweils unabhängig für eine Alkylgruppe mit einer Kohlenstoffanzahl von 1 bis 15; und ein oder mehr -CH₂- der Alkylgruppe können substituiert sein durch -O-, -CH=CH-, -CO-, -OCO-, -COO- oder -C≡C-, sodass ein Sauerstoffatom nicht direkt benachbart ist zu einem anderen Sauerstoffatom; A⁰¹ bis A⁴² stehen jeweils unabhängig für eine der folgenden Strukturen: 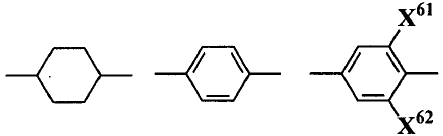 (wobei gilt: ein oder mehr -CH₂- in dem Cyclohexanring können substituiert sein durch -O-, sodass ein Sauerstoffatom nicht direkt benachbart ist zu einem anderen Sauerstoffatom; ein oder mehr -CH= in dem Benzolring können substituiert sein durch -N=, sodass ein Stickstoffatom nicht direkt benachbart ist zu einem anderen Stickstoffatom; und X⁶¹ und X⁶² stehen jeweils unabhängig für -H, -Cl, -F, -CF₃ oder -OCF₃) ; A⁵¹ bis A⁵³ stehen jeweils unabhängig für eine der folgenden Strukturen: 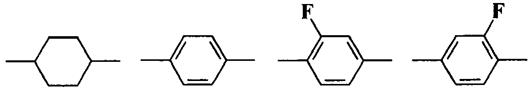 (wobei gilt: ein oder mehr -CH₂CH₂- in dem Cyclohexanring können substituiert sein durch -CH=CH-, -CF₂O- oder -OCF₂-; ein oder mehr -CH= in dem Benzolring können substituiert sein durch -N=, sodass ein Stickstoffatom nicht direkt benachbart ist zu einem anderen Stickstoffatom); X⁰¹ steht für ein Wasserstoffatom oder ein Fluoratom; X⁰² und X⁰³ stehen jeweils für ein Wasserstoffatom; X¹¹ bis X⁴³ stehen jeweils unabhängig für -H, -Cl, -F, -CF₃ oder -OCF₃; Y⁰¹ bis Y⁴¹ stehen jeweils für -Cl, -F, -CF₃ oder -OCF₃; Z⁰¹ und Z⁰² stehen jeweils unabhängig für eine Einfachbindung, -CH=CH-, -C≡C-, -CH₂CH₂-, - (CH₂)₄-, -OCH₂-, -CH₂O-, -OCF₂- oder -CF₂O-; Z³¹ bis Z⁴² stehen jeweils unabhängig für eine Einfachbindung, -CH=CH-, -C≡C-, -CH₂CH₂-, -(CH₂)₄-, -OCH₂-, -CH₂O- -OCF₂- oder -CF₂O-; mindestens eines von Z³¹ und Z³² ist keine Einfachbindung; Z⁵¹ und Z⁵² stehen jeweils unabhängig für eine Einfachbindung, -CH=CH-, -C≡C-, -CH₂CH₂-, - (CH₂)4-, -OCH₂-, -CH₂O-, -OCF₂- oder -CF₂O-; m⁰¹ bis m⁵¹ stehen jeweils unabhängig für eine ganze Zahl von 0 bis 3; m³¹ + m³² und m⁴¹ + m⁴² sind jeweils unabhängig 1, 2, 3 oder 4; wenn eine Mehrzahl von A⁰¹, A⁰², A⁰³, A²³, A³¹, A³², A⁴¹, A⁴², A⁵², Z⁰¹, Z⁰², Z³¹, Z³², Z⁹⁴¹, Z⁴² und/oder Z⁵² vorhanden ist, können sie alle gleich oder verschieden sein; und die Z⁴¹ stehen jeweils unabhängig für eine Einfachbindung, -CH=CH-, -C=C-, -CH₂CH₂- oder -(CH₂)₄-, wenn m⁴² 0 ist), mit der Maßgabe, dass
die Flüssigkristallzusammensetzung keine der Verbindungen der folgenden Formeln enthält:

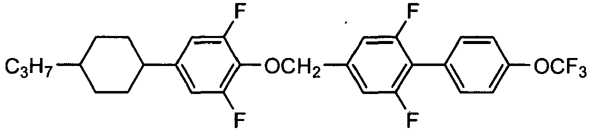

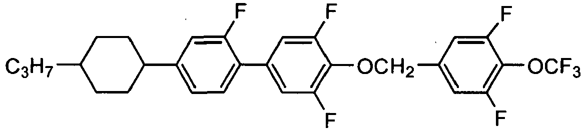

2. Flüssigkristallzusammensetzung nach Anspruch 1, enthaltend:
die eine oder mehr Verbindungen, ausgewählt aus den Verbindungen der allgemeinen Formel (LC0-1);
eine oder mehr Verbindungen, ausgewählt aus Verbindungen der allgemeinen Formel (LC0-2); und
die eine oder mehr Verbindungen, ausgewählt aus der Gruppe, bestehend aus Verbindungen der allgemeinen Formeln (LC1) bis (LC5), 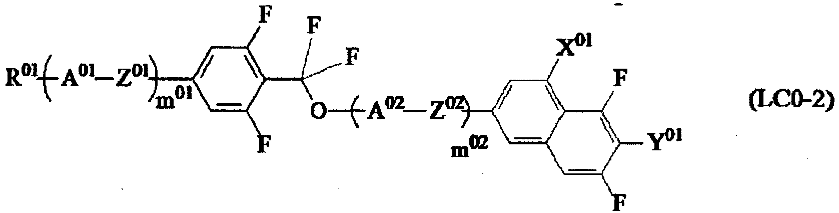 (wobei gilt: R⁰¹ steht für eine Alkylgruppe mit einer Kohlenstoffanzahl von 1 bis 15; ein oder mehr -CH₂- in der Alkylgruppe können substituiert sein durch -O-, -CH=CH-, -CO-, -OCO-, -COO-, -C≡C-, -CF₂O- oder -OCF₂-, sodass ein Sauerstoffatom nicht direkt benachbart ist zu einem anderen Sauerstoffatom, ein oder mehr Wasserstoffatom(e) der Alkylgruppe können substituiert sein durch ein Halogen; A⁰¹ und A⁰² stehen jeweils unabhängig für eine der folgenden Strukturen: 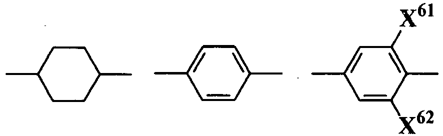 (wobei gilt: ein oder mehr -CH₂- in dem Cyclohexanring können substituiert sein durch -O-, sodass ein Sauerstoffatom nicht direkt benachbart ist zu einem anderen Sauerstoffatom; ein oder mehr -CH= in dem Benzolring können substituiert sein durch -N=, sodass ein Stickstoffatom nicht direkt benachbart ist zu einem anderen Stickstoffatom; und X⁶¹ und X⁶² stehen jeweils unabhängig für -H, -Cl, -F, -CF₃ oder -OCF₃) ; X⁰¹ steht für ein Wasserstoffatom oder ein Fluoratom; Y⁰¹ steht für -Cl, -F, -CF₃ oder -OCF₃; Z⁰¹ und Z⁰² stehen jeweils unabhängig für eine Einfachbindung, -CH=CH-, -C≡C-, -CH₂CH₂-, -(CH₂)₄-, -OCH₂-, -CH₂O- -OCF₂- oder -CF₂O-; m⁰¹ und m⁰² sind jeweils unabhängig eine ganze Zahl von 0 bis 3; und wenn eine Mehrzahl von A⁰¹ und/oder A⁰² vorhanden ist, können sie alle gleich oder verschieden sein).

3. Flüssigkristallzusammensetzung nach Anspruch 1, enthaltend:
die eine oder mehr Verbindungen, ausgewählt aus Verbindungen der allgemeinen Formel (LCO-1);
eine oder mehr Verbindungen, ausgewählt aus der Gruppe, bestehend aus Verbindungen der allgemeinen Formeln (LC1) bis (LC4); und
eine oder mehr Verbindungen, ausgewählt aus der Gruppe, bestehend aus Verbindungen der allgemeinen Formel (LC5).

4. Flüssigkristallzusammensetzung nach Anspruch 2, enthaltend:
die eine oder mehr Verbindungen, ausgewählt aus Verbindungen der allgemeinen Formel (LCO-1);
die eine oder mehr Verbindungen, ausgewählt aus Verbindungen der allgemeinen Formel (LCO-2);
eine oder mehr Verbindungen, ausgewählt aus der Gruppe, bestehend aus Verbindungen der allgemeinen Formeln (LC1) bis (LC4); und
eine oder mehr Verbindungen, ausgewählt aus der Gruppe, bestehend aus Verbindungen der allgemeinen Formel (LC5).

5. Flüssigkristallzusammensetzung nach Anspruch 2, enthaltend:
eine oder mehr Verbindungen, ausgewählt aus der Gruppe, bestehend aus Verbindungen der allgemeinen Formeln (LC0-1-2), (LC0-1-4), (LC0-1-6), (LC0-1-8), (LC0-2-2) und (LC0-2-4), 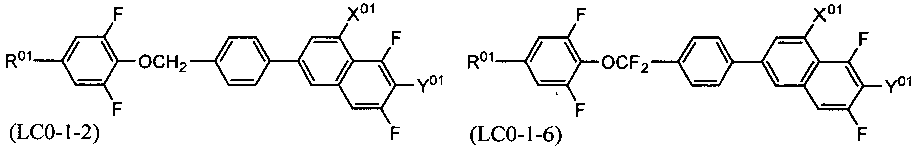 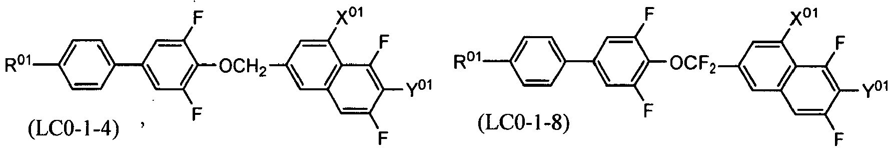 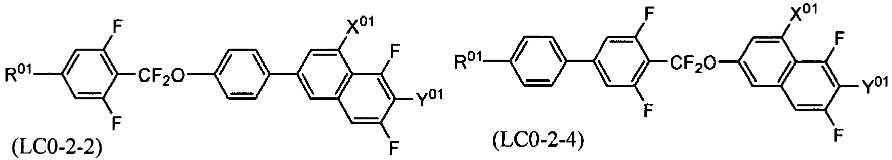 (wobei gilt: R⁰¹, X⁰¹ und Y⁰¹ stehen jeweils für die gleichen Dinge wie die in Anspruch 1 beschriebenen).

6. Flüssigkristallzusammensetzung nach einem der Ansprüche 1 bis 5, enthaltend:
die eine oder mehr Verbindungen, ausgewählt aus Verbindungen der allgemeinen Formel (LC0-1); und
eine oder mehr Verbindungen, ausgewählt aus der Gruppe, bestehend aus Verbindungen der allgemeinen Formeln (LC2-1) bis (LC2-8), 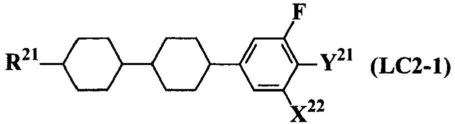 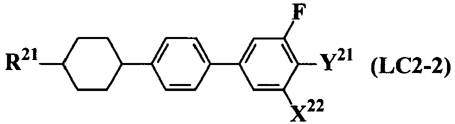 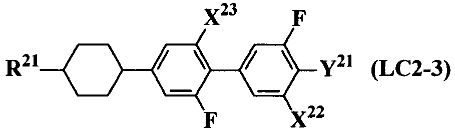 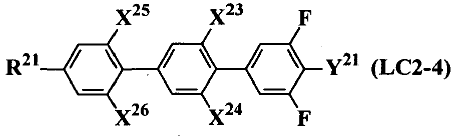 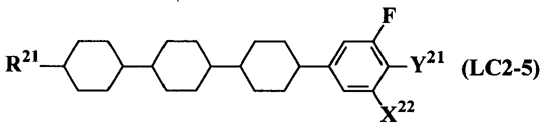 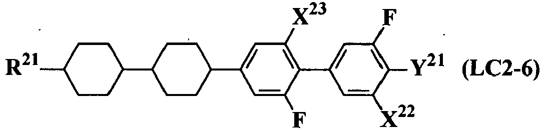 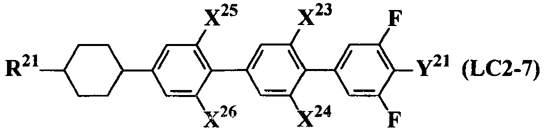 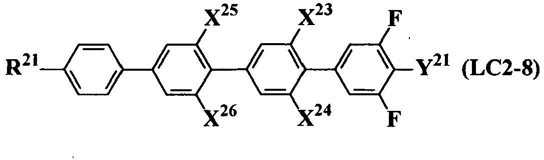 (wobei gilt: X²³, X²⁴, X²⁵ und X²⁶ stehen jeweils unabhängig für ein Wasserstoffatom, Cl, F, CF₃ oder OCF₃; und X²², R²¹ und Y²¹ stehen jeweils für die gleichen Dinge wie die in Anspruch 1 beschriebenen).

7. Flüssigkristallzusammensetzung nach Anspruch 6, enthaltend:
die eine oder mehr Verbindungen, ausgewählt aus Verbindungen der allgemeinen Formel (LC0-1);
eine oder mehr Verbindungen, ausgewählt aus Verbindungen der allgemeinen Formel (LC0-2);
und
die eine oder mehr Verbindungen, ausgewählt aus der Gruppe, bestehend aus Verbindungen der allgemeinen Formeln (LC2-1) bis (LC2-8).

8. Flüssigkristallzusammensetzung nach einem der Ansprüche 1 bis 7, enthaltend:
die eine oder mehr Verbindungen, ausgewählt aus Verbindungen der allgemeinen Formel (LC0-1); und
eine oder mehr Verbindungen, ausgewählt aus Verbindungen der allgemeinen Formeln (LC3-1) bis (LC3-22) und/oder der Gruppe, bestehend aus Verbindungen der allgemeinen Formeln (LC3-23) bis (LC3-121), 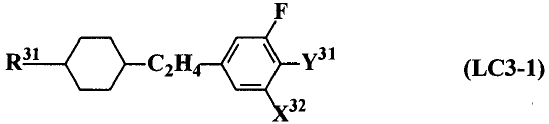 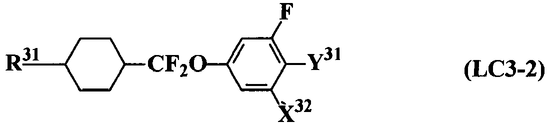 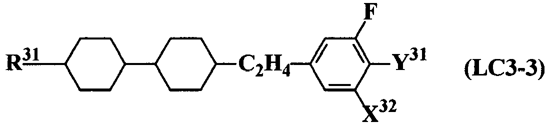 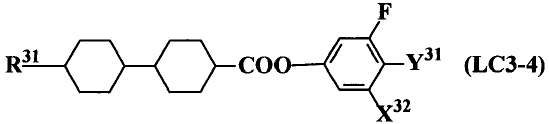 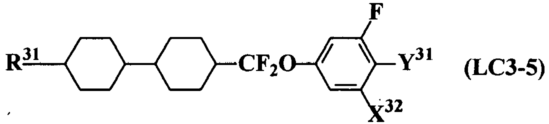 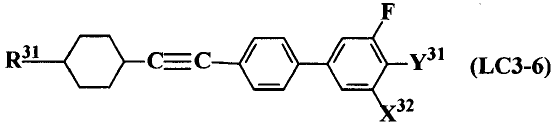 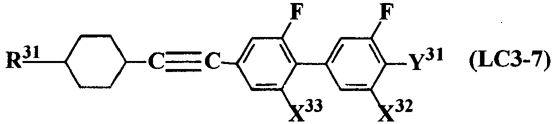 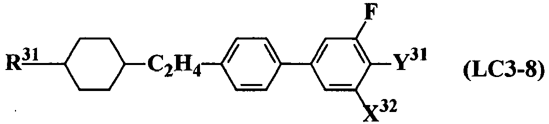 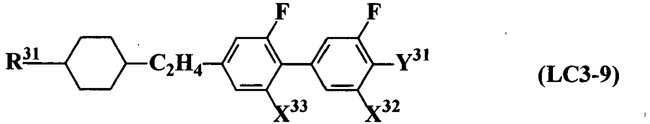 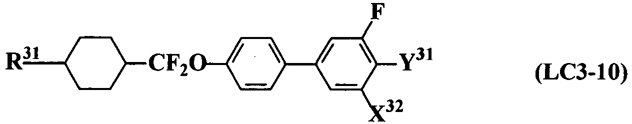 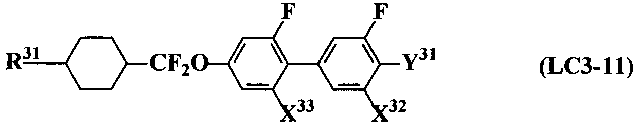 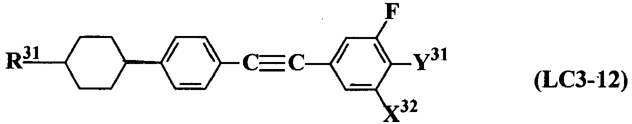 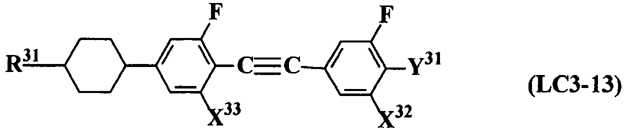 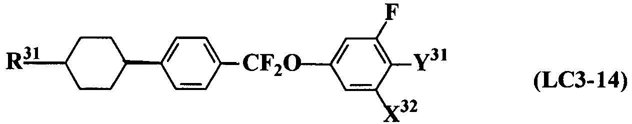 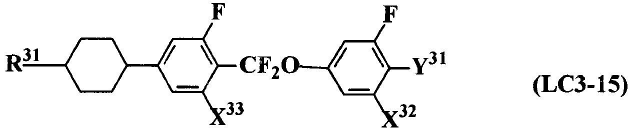 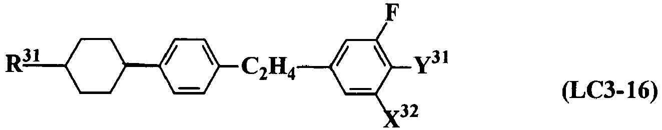 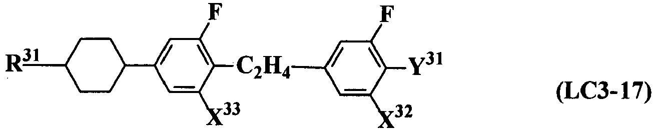 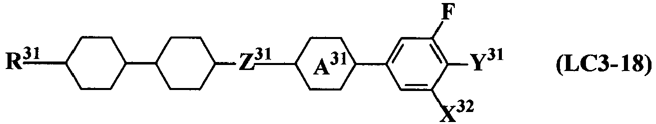 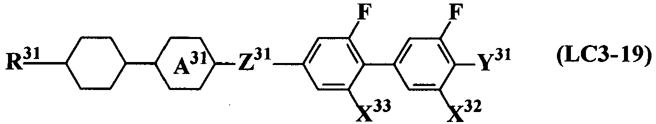 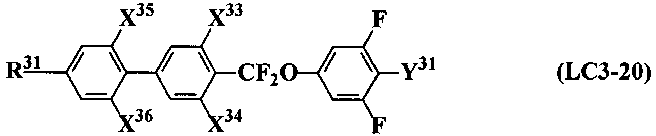 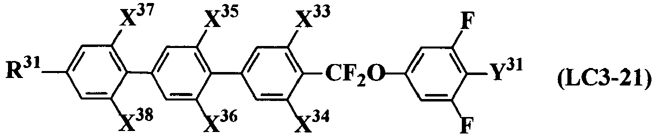 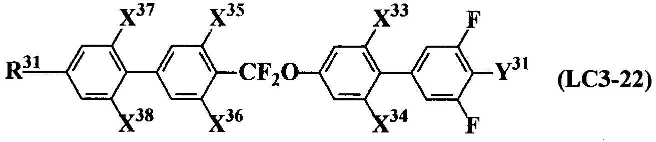 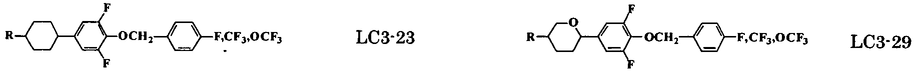 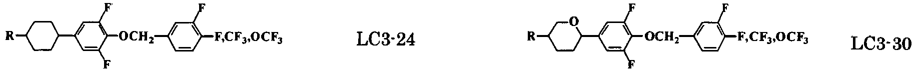 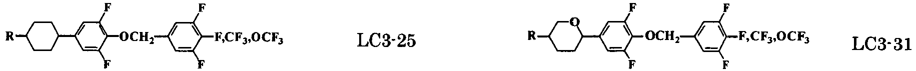 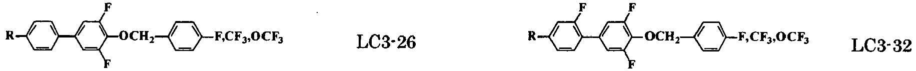 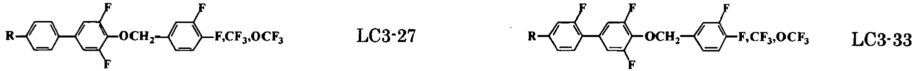 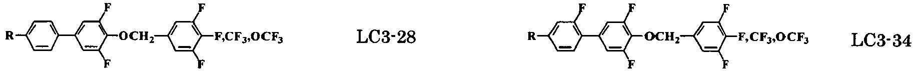 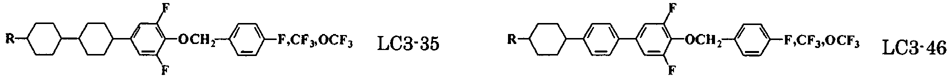 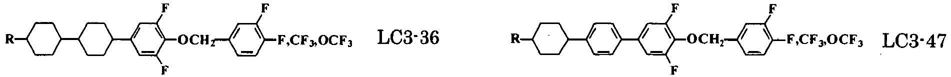 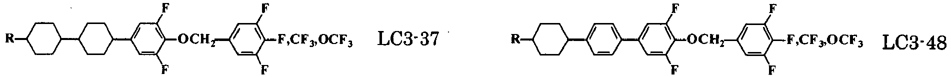 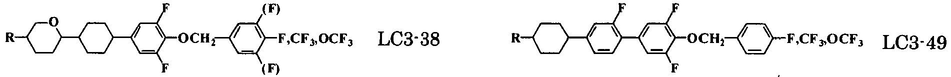 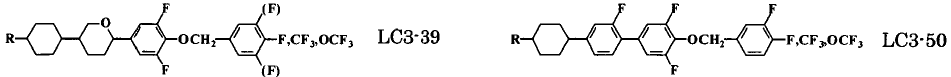 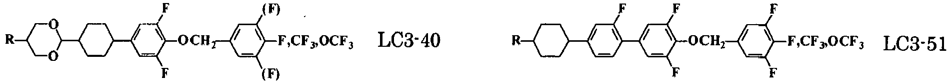 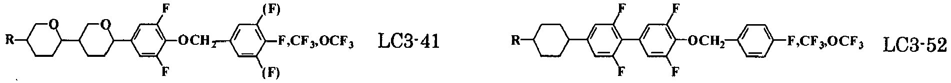 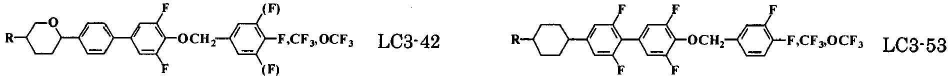 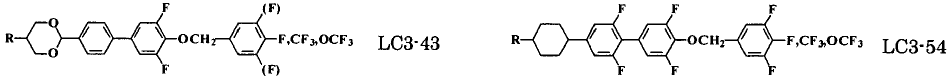 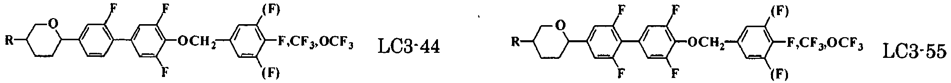 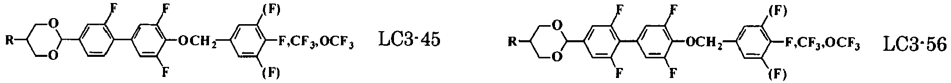 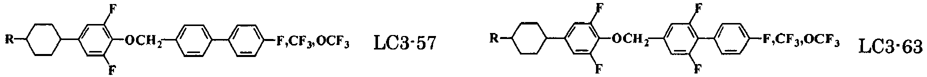 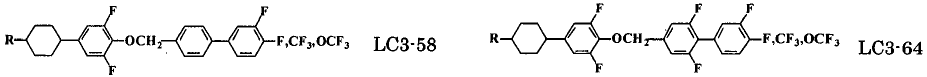 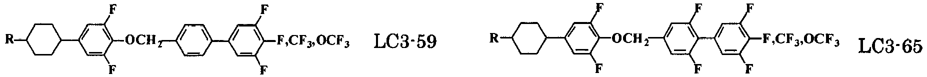 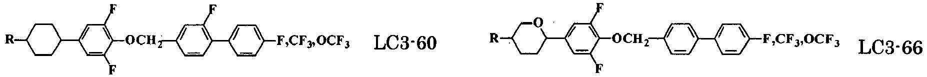 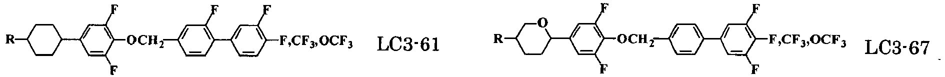 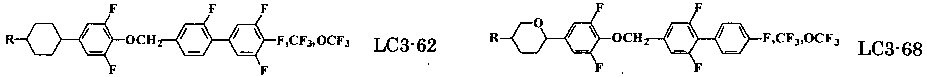 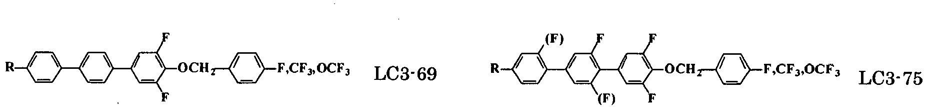 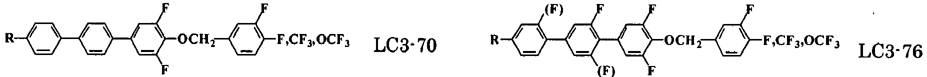 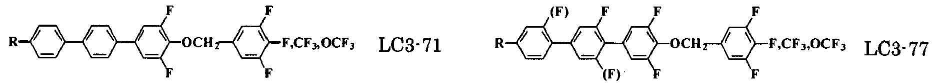 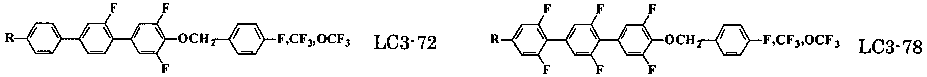 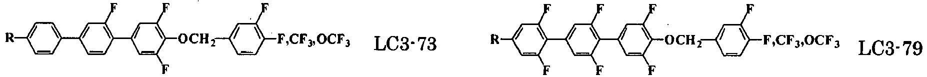 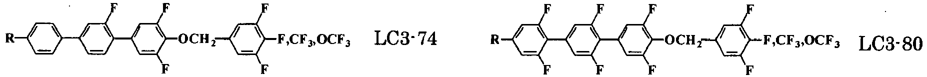 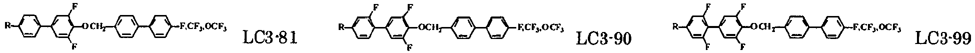 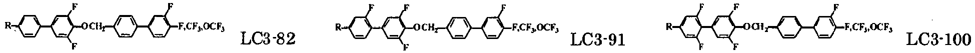 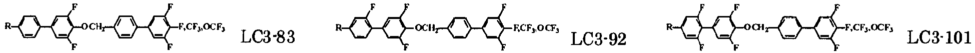 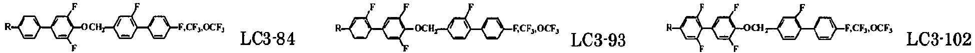 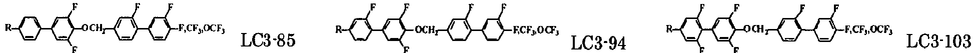 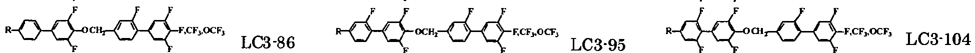 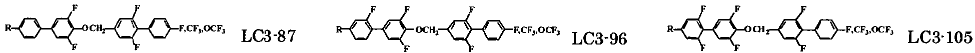 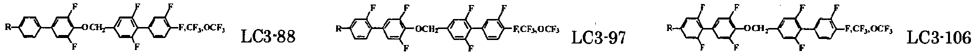 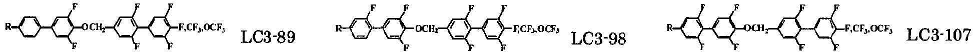 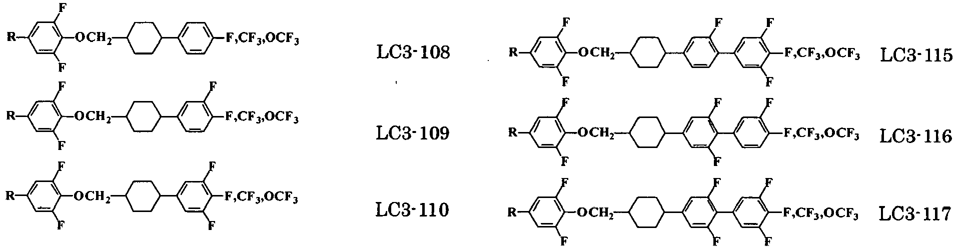 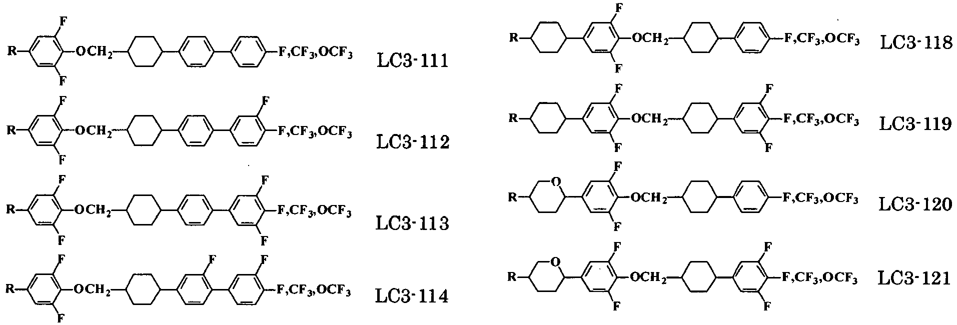 (wobei gilt: X³³, X³⁴, X³⁵, X³⁶, X³⁷ und X³⁸ stehen jeweils unabhängig für H, Cl, F, CF₃ oder OCF₃; X³², R³¹, A³¹, Y³¹ und Z³¹ stehen jeweils für die gleichen Dinge wie die in Anspruch 1 beschriebenen; R steht für R³¹; F, CF₃, OCF₃ stehen für eines von F, CF₃ und OCF₃; und (F) steht für eines von H und F).

9. Flüssigkristallzusammensetzung nach Anspruch 8, enthaltend:
die eine oder mehr Verbindungen, ausgewählt aus Verbindungen der allgemeinen Formel (LC0-1);
eine oder mehr Verbindungen, ausgewählt aus Verbindungen der allgemeinen Formel (LC0-2); und
die eine oder mehr Verbindungen, ausgewählt aus Verbindungen der allgemeinen Formeln (LC3-1) bis (LC3-22) und/oder der Gruppe, bestehend aus Verbindungen der allgemeinen Formeln (LC3-23) bis (LC3-121).

10. Flüssigkristallzusammensetzung nach einem der Ansprüche 1 bis 9, enthaltend:
die eine oder mehr Verbindungen, ausgewählt aus Verbindungen der allgemeinen Formel (LC0-1); und
eine oder mehr Verbindungen, ausgewählt aus der Gruppe, bestehend aus Verbindungen der allgemeinen Formeln (LC4-1) bis (LC4-12), 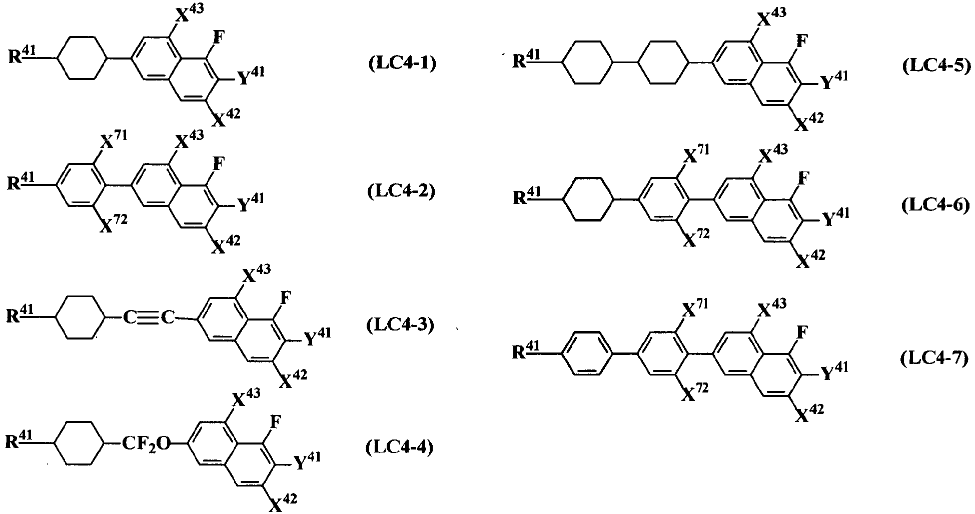 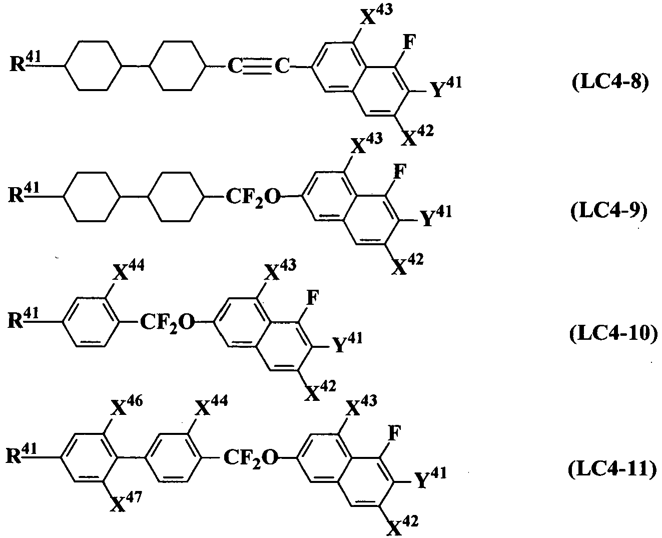 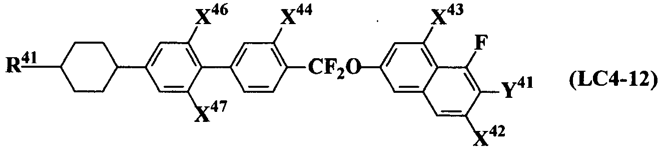 (wobei gilt: X⁴⁴, X⁴⁶, X⁴⁷, X⁷¹ und X⁷¹ stehen jeweils unabhängig für H, Cl, F, CF₃ oder OCF₃; und X⁴², X⁴³, R⁴¹ und Y⁴¹ stehen jeweils für die gleichen Dinge wie die in Anspruch 1 beschriebenen).

11. Flüssigkristallzusammensetzung nach Anspruch 10, enthaltend:
die eine oder mehr Verbindungen, ausgewählt aus Verbindungen der allgemeinen Formel (LC0-1);
eine oder mehr Verbindungen, ausgewählt aus Verbindungen der allgemeinen Formel (LC0-2); und
die eine oder mehr Verbindungen, ausgewählt aus der Gruppe, bestehend aus Verbindungen der allgemeinen Formeln (LC4-1) bis (LC4-12).

12. Flüssigkristallzusammensetzung nach einem der Ansprüche 1 bis 11, enthaltend:
die eine oder mehr Verbindungen, ausgewählt aus Verbindungen der allgemeinen Formel (LC0-1); und
eine oder mehr Verbindungen, ausgewählt aus der Gruppe, bestehend aus Verbindungen der allgemeinen Formeln (LC5-1) bis (LC5-14), 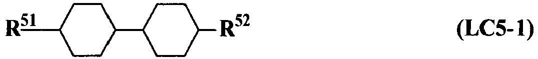 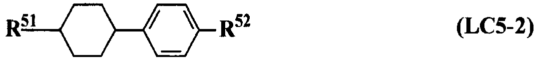 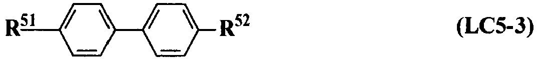 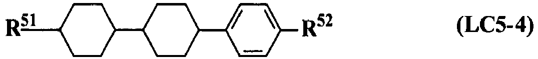 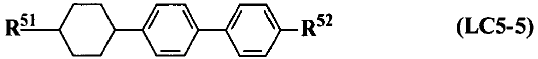 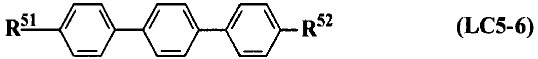 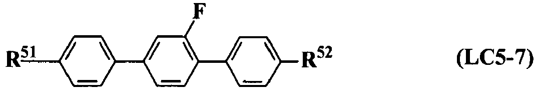 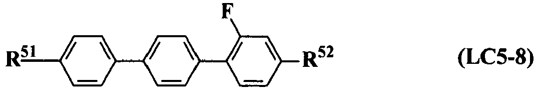 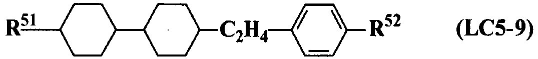 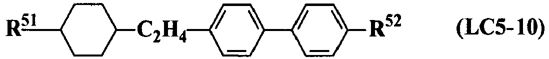 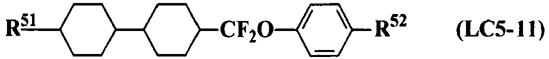 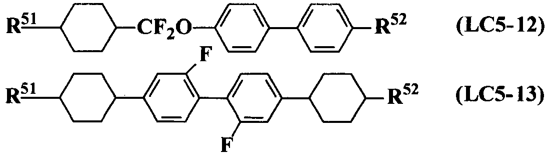 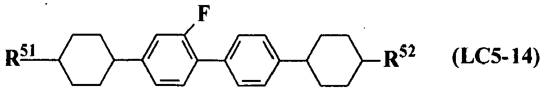 (wobei gilt: R⁵¹ und R⁵² stehen jeweils unabhängig für die gleichen Dinge wie die in Anspruch 1 beschriebenen).

13. Flüssigkristallzusammensetzung nach Anspruch 12, enthaltend:
die eine oder mehr Verbindungen, ausgewählt aus Verbindungen der allgemeinen Formel (LC0-1);
eine oder mehr Verbindungen, ausgewählt aus Verbindungen der allgemeinen Formel (LC0-1); und
die eine oder mehr Verbindungen, ausgewählt aus der Gruppe, bestehend aus Verbindungen der allgemeinen Formeln (LC5-1) bis (LC5-14).

14. Flüssigkristallzusammensetzung nach einem der Ansprüche 1 bis 13, enthaltend eine oder mehr polymerisierbare Verbindungen.

15. Flüssigkristallzusammensetzung nach einem der Ansprüche 1 bis 14, enthaltend ein oder mehr Antioxidanzien.

16. Flüssigkristallzusammensetzung nach einem der Ansprüche 1 bis 15, enthaltend einen oder mehr UV-Absorber.

17. Flüssigkristallanzeigeelement, umfassend die Flüssigkristallzusammensetzung nach einem der Ansprüche 1 bis 16.

18. Flüssigkristallanzeigeelement nach Anspruch 17, verwendet für das Aktivmatrix-Ansteuerung.

19. Flüssigkristallanzeigeelement nach Anspruch 15, verwendet im TN-Modus, OCB-Modus, IPS-Modus oder VA-IPS-Modus.

20. Flüssigkristallanzeigeelement nach Anspruch 17, welches ein polymerstabilisiertes Flüssigkristallanzeigeelement ist, verwendet im TN-Modus, OCB-Modus, IPS-Modus oder VA-IPS-Modus, wobei das polymerstabilisiertes Flüssigkristallanzeigeelement hergestellt worden ist durch Polymerisieren der polymerisierbaren Verbindung, die enthalten ist in der Flüssigkristallzusammensetzung nach Anspruch 14, und zwar unter Anlegen einer Spannung oder ohne Anlegen einer Spannung.

## Revendications

1. Composition de cristaux liquides ayant une anisotropie diélectrique positive, la composition de cristaux liquides comprenant :
un ou plusieurs composés choisis parmi les composés représentés par la Formule générale (LC0-1) ; et
un ou plusieurs composés choisis dans le groupe constitué des composés représentés par les Formules générales (LC1) à (LC5), 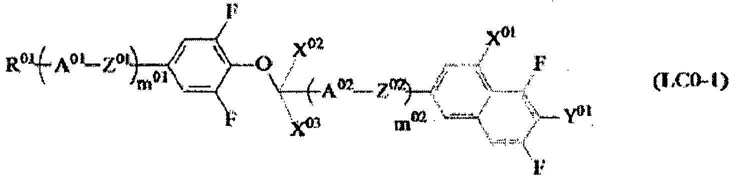 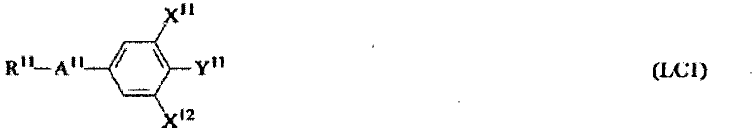 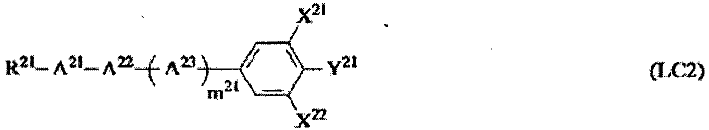 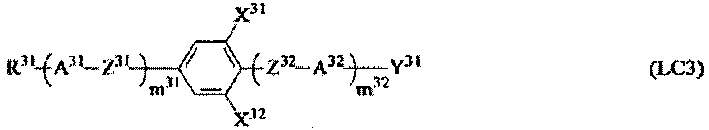 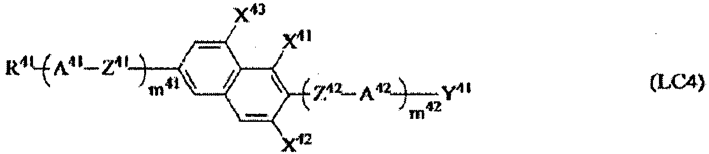 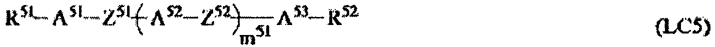 (dans laquelle R⁰¹ à R⁴¹ représentent chacun indépendamment un groupe alkyle ayant un nombre d'atomes de carbone de 1 à 15 ; un ou plusieurs -CH₂-du groupe alkyle peuvent être substitués par -O-, - CH=CH-, -CO-, -OCO-, -COO-, -C=C-, -CF₂O- ou -OCF₂- de sorte qu'un atome d'oxygène ne soit pas directement adjacent à un autre atome d'oxygène, un ou plusieurs atomes d'hydrogène du groupe alkyle peuvent être substitués par un halogène ; R⁵¹ et R⁵² représentent chacun indépendamment un groupe alkyle ayant un nombre d'atomes de carbone de 1 à 15, et un ou plusieurs -CH₂-du groupe alkyle peuvent être substitués par -O-, - CH=CH-, -CO-, -OCO-, -COO- ou -C=C- de sorte qu'un atome d'oxygène ne soit pas directement adjacent à un autre atome d'oxygène ; A⁰¹ à A⁴² représentent chacun indépendamment l'une quelconque des structures suivantes : 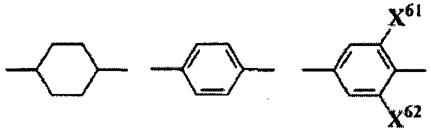 (dans laquelle un ou plusieurs -CH₂- du noyau cyclohexane peuvent être substitués par -O- de sorte qu'un atome d'oxygène ne soit pas directement adjacent à un autre atome d'oxygène ; un ou plusieurs -CH= du noyau benzène peuvent être substitués par -N= de sorte qu'un atome d'azote ne soit pas directement adjacent à un autre atome d'azote ; et X⁶¹ et X⁶² représentent chacun indépendamment -H, -Cl, -F, -CF₃ ou -OCF₃) ; A⁵¹ à A⁵³ représentent chacun indépendamment l'une quelconque des structures suivantes : 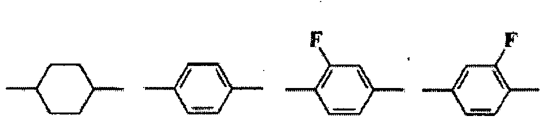 (dans laquelle un ou plusieurs -CH₂CH₂- du noyau cyclohexane peuvent être substitués par -CH=CH-, -CF₂O-ou -OCF₂- ; un ou plusieurs -CH= du noyau benzène peuvent être substitués par·-N= de sorte qu'un atome d'azote ne soit pas directement adjacent à un autre atome d'azote) ; X⁰¹ représente un atome d'hydrogène ou un atome de fluor ; X⁰² et X⁰³ représentent chacun un atome d'hydrogène ; X¹¹ à X⁴³ représentent chacun indépendamment -H, -Cl, -F, -CF₃ ou -OCF₃ ; Y⁰¹ à Y⁴¹ représentent chacun -Cl, -F, -CF₃ ou -OCF₃ ; Z⁰¹ et Z⁰² représentent chacun indépendamment une liaison simple, -CH=CH-, -C≡C-, -CH₂CH₂-, -(CH₂)₄-, -OCH₂-, -CH₂O-, - OCF₂- ou -CF₂O- ; Z³¹ à Z⁴² représentent chacun indépendamment une liaison simple, -CH=CH-, -C≡C-, - CH₂CH₂-, - (CH₂)₄-, -OCH₂-, -CH₂O-, -OCF₂- ou -CF₂O- ; au moins l'un parmi Z³¹ et Z³² n'est pas une liaison simple ; Z⁵¹ et Z⁵² représentent chacun indépendamment une liaison simple, -CH=CH-, -C≡C-, -CH₂CH₂-, -(CH₂)₄-, -OCH₂-, -CH₂O-, -OCF₂- ou -CF₂O- ; m⁰¹ à m⁵¹ sont chacun indépendamment un nombre entier de 0 à 3 ; m³¹ + m³² et m⁴¹ + m⁴² sont chacun indépendamment 1, 2, 3 ou 4 ; dans le cas où il existe une pluralité de A⁰¹, A⁰², A⁰³, A²³, A³¹, A³², A⁴¹, A⁴², A⁵², Z⁰¹, Z⁰², Z³¹, Z³², Z⁴¹, Z⁴² et/ou Z⁵², ils peuvent tous être identiques ou différents ; et les Z⁴¹ représentent chacun indépendamment une liaison simple, -CH=CH-, -C≡C-, -CH₂CH₂- ou -(CH₂)₄- lorsque m⁴² vaut 0), à condition que
la composition de cristaux liquides ne comprenne pas l'un ou l'autre des composés représentés par les formules suivantes :

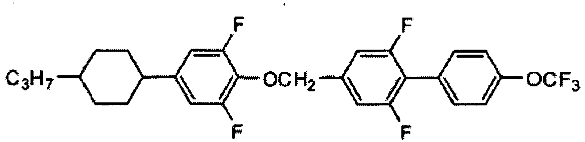

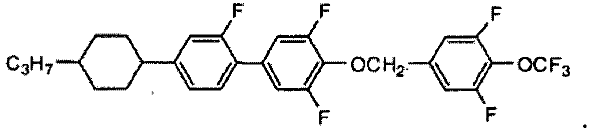

2. Composition de cristaux liquides selon la revendication 1 comprenant :
le ou les composés choisis parmi les composés représentés par la Formule générale (LC0-1) ;
un ou plusieurs composés choisis parmi les composés représentés par la Formule générale (LC0-2) ; et
le ou les composés choisis dans le groupe constitué des composés représentés par les Formules générales (LC1) à (LC5), 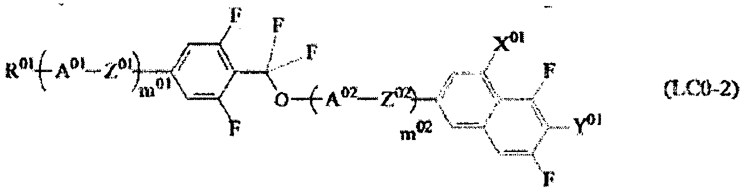 (dans laquelle R⁰¹ représente un groupe alkyle ayant un nombre d'atomes de carbone de 1 à 15 ; un ou plusieurs -CH₂- du groupe alkyle peuvent être substitués par -O-, -CH=CH-, -CO-, -OCO-, -COO-, -C=C-, -CF₂O- ou -OCF₂- de sorte qu'un atome d'oxygène ne soit pas directement adjacent à un autre atome d'oxygène, un ou plusieurs atomes d'hydrogène du groupe alkyle peuvent être substitués par un halogène ; A⁰¹ et A⁰² représentent chacun indépendamment l'une quelconque des structures suivantes : 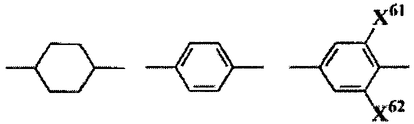 (dans laquelle un ou plusieurs -CH₂- du noyau cyclohexane peuvent être substitués par -O- de sorte qu'un atome d'oxygène ne soit pas directement adjacent à un autre atome d'oxygène ; un ou plusieurs -CH= du noyau benzène peuvent être substitués par -N= de sorte qu'un atome d'azote ne soit pas directement adjacent à un autre atome d'azote ; et X⁶¹ et X⁶² représentent chacun indépendamment -H, -Cl, -F, -CF₃ ou -OCF₃) ; X⁰¹ représente un atome d'hydrogène ou un atome de fluor ; Y⁰¹ représente -Cl, -F, -CF₃ ou -OCF₃ ; Z⁰¹ et Z⁰² représentent chacun indépendamment une liaison simple, -CH=CH-, -C=C-, -CH₂CH₂-, - (CH₂)₄-, -OCH₂-, -CH₂O-, - OCF₂- ou -CF₂O- ; m⁰¹ et m⁰² sont chacun indépendamment un nombre entier de 0 à 3 ; et dans le cas où il existe une pluralité de A⁰¹ et/ou de A⁰², ils peuvent tous être identiques ou différents).

3. Composition de cristaux liquides selon la revendication 1 comprenant :
le ou les composés choisis parmi les composés représentés par la Formule générale (LC0-1) ;
un ou plusieurs composés choisis dans le groupe constitué des composés représentés par les Formules générales (LC1) à (LC4) ; et
un ou plusieurs composés choisis dans le groupe constitué des composés représentés par la Formule générale (LC5).

4. Composition de cristaux liquides selon la revendication 2 comprenant :
le ou les composés choisis parmi les composés représentés par la Formule générale (LC0-1) ;
le ou les composés choisis parmi les composés représentés par la Formule générale (LC0-2) ;
un ou plusieurs composés choisis dans le groupe constitué des composés représentés par les Formules générales (LC1) à (LC4) ; et
un ou plusieurs composés choisis dans le groupe constitué des composés représentés par la Formule générale (LC5).

5. Composition de cristaux liquides selon la revendication 2 comprenant :
un ou plusieurs composés choisis dans le groupe constitué des composés représentés par les Formules générales (LC0-1-2), (LC0-1-4), (LC0-1-6), (LC0-1-8), (LC0-2-2) et (LC0-2-4) 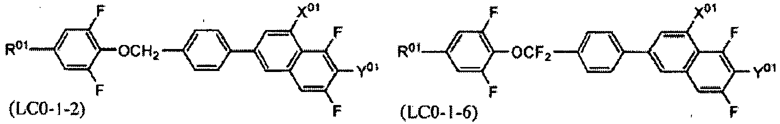 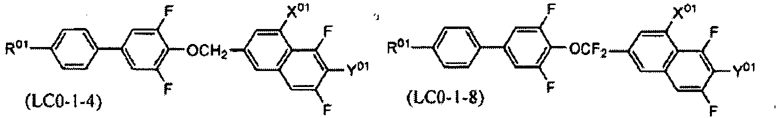 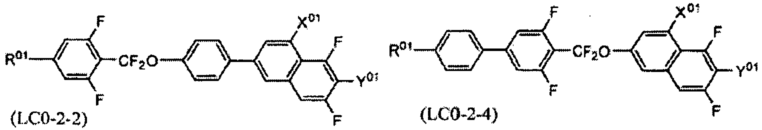 (dans laquelle R⁰¹, X⁰¹ et Y⁰¹ ont la même signification que dans la revendication 1, respectivement).

6. Composition de cristaux liquides selon l'une quelconque des revendications 1 à 5 comprenant :
le ou les composés choisis parmi les composés représentés par la Formule générale (LC0-1) ; et
un ou plusieurs composés choisis dans le groupe constitué des composés représentés par les Formules générales (LC2-1) à (LC2-8), 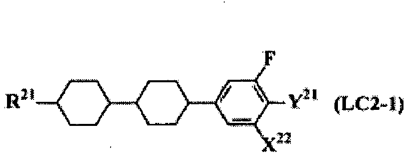 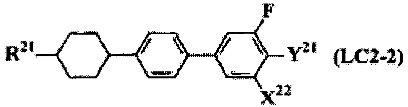 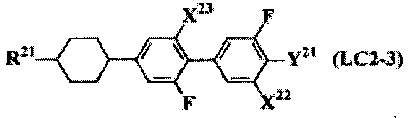 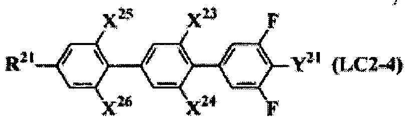 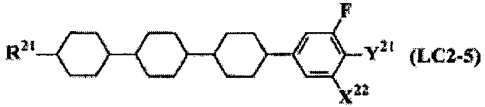 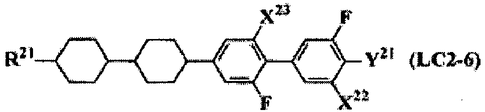 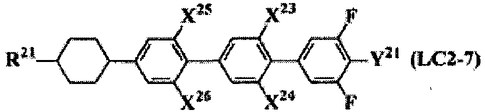 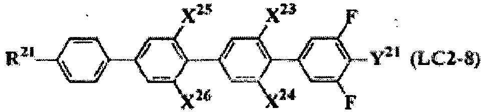 (dans laquelle X²³, X²⁴, X²⁵ et X²⁶ représentent chacun indépendamment un atome d'hydrogène, Cl, F, CF₃ ou OCF₃ ; et X²², R²¹ et Y²¹ ont la même signification que dans la revendication 1, respectivement).

7. Composition de cristaux liquides selon la revendication 6 comprenant :
le ou les composés choisis parmi les composés représentés par la Formule générale (LC0-1) ;
un ou plusieurs composés choisis parmi les composés représentés par la Formule générale (LC0-2) ;
et
le ou les composés choisis dans le groupe constitué des composés représentés par les Formules générales (LC2-1) à (LC2-8).

8. Composition de cristaux liquides selon l'une quelconque des revendications 1 à 7 comprenant :
le ou les composés choisis parmi les composés représentés par la Formule générale (LC0-1) ; et
un ou plusieurs composés choisis parmi les composés représentés par les Formules générales (LC3-1) à (LC3-22) et/ou dans le groupe constitué des composés représentés par les Formules générales (LC3-23) à (LC3-121), 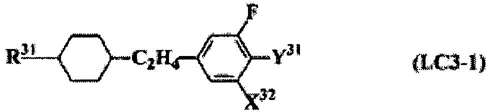 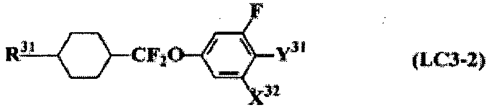 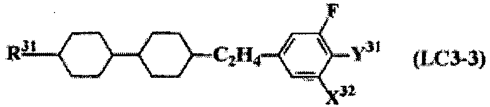 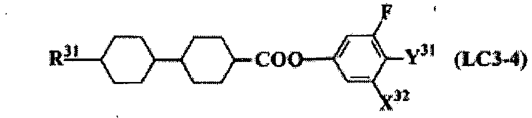 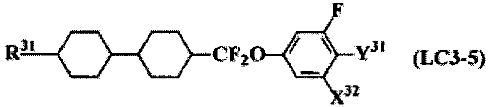 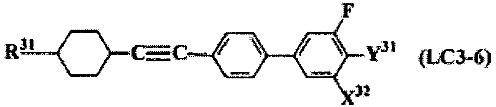 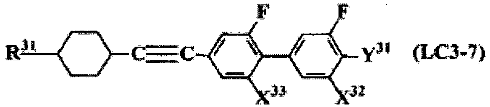 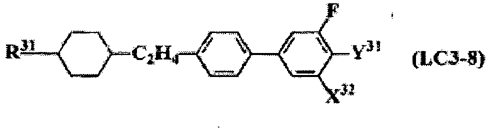 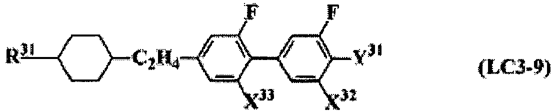 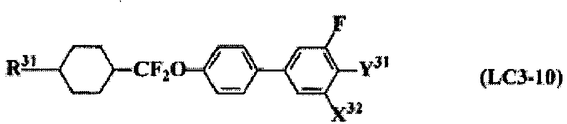 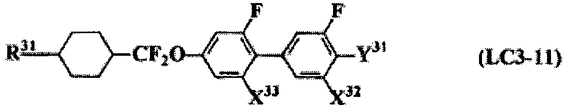 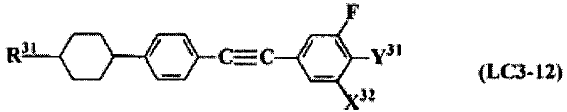 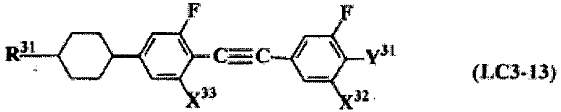 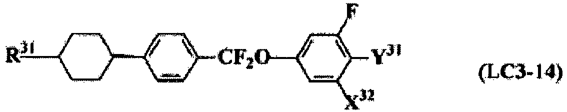 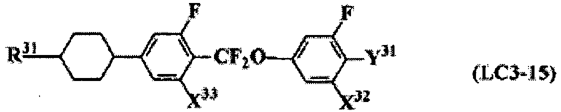 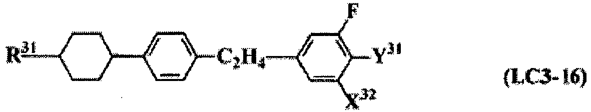 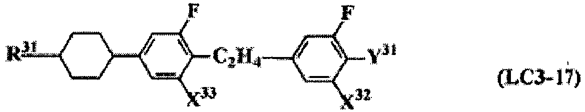 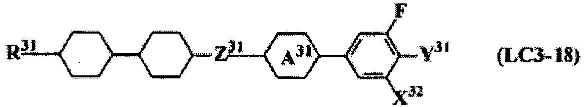 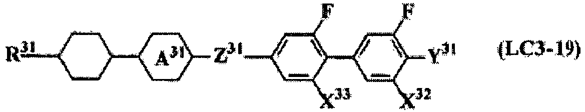 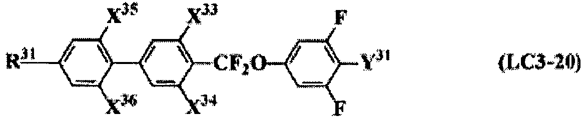 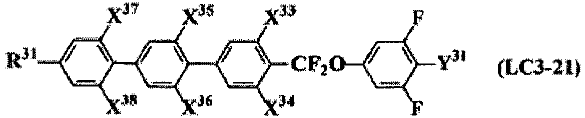 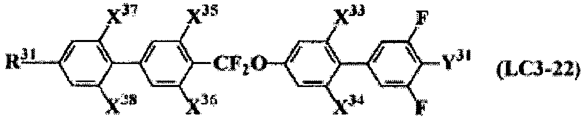 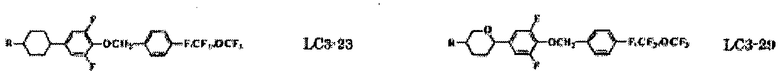 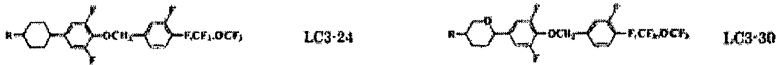 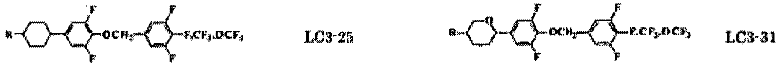 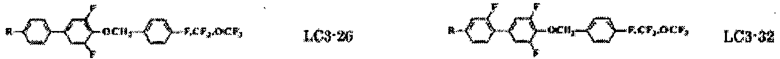 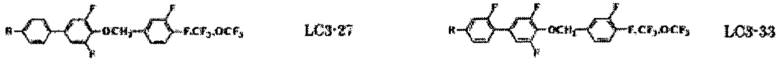 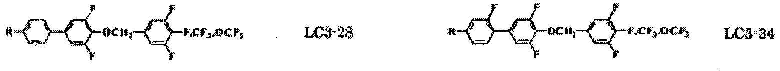 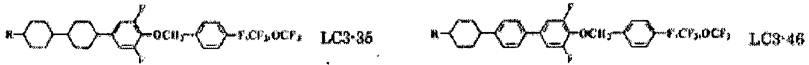 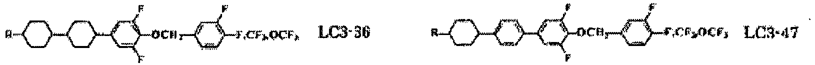 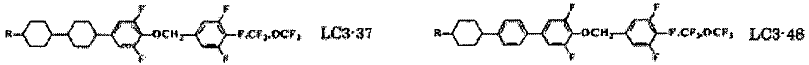 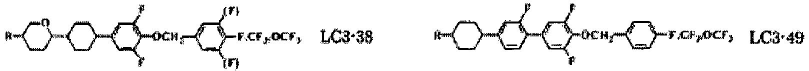 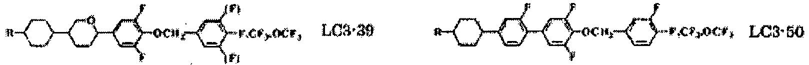 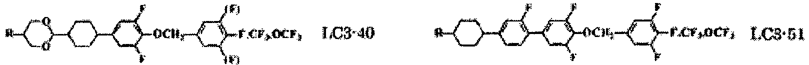 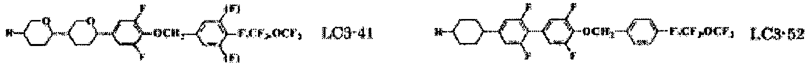 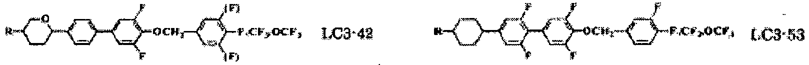 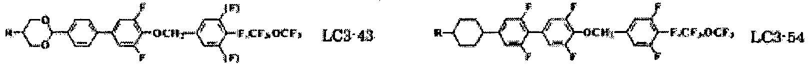 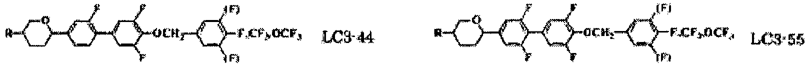 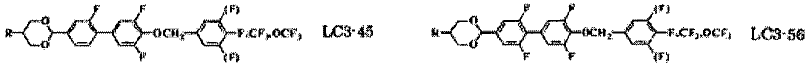 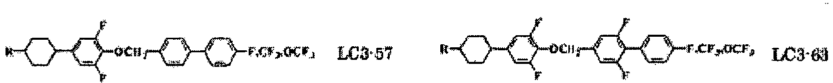 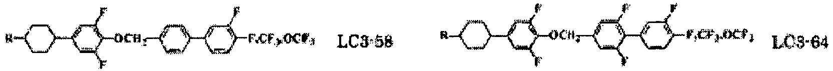 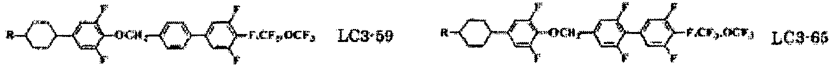 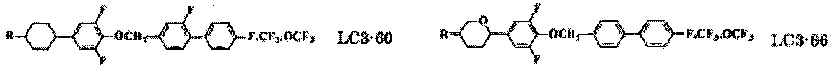 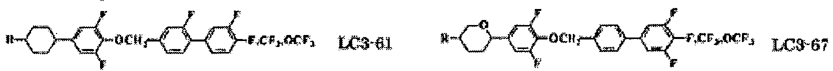 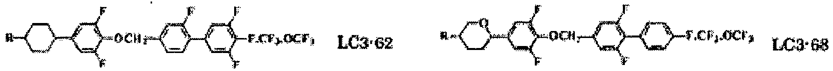 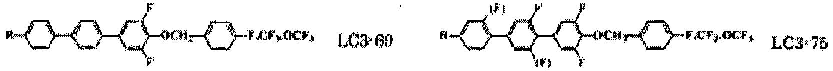 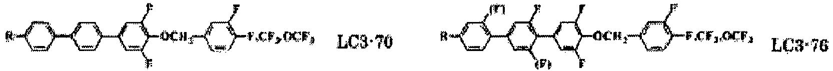 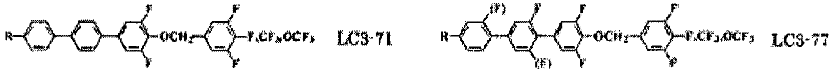 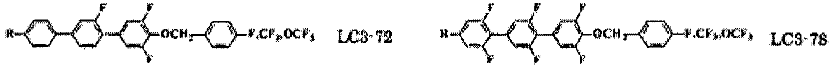 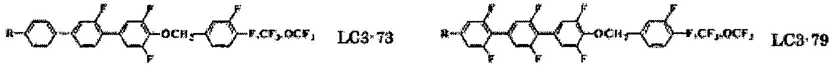 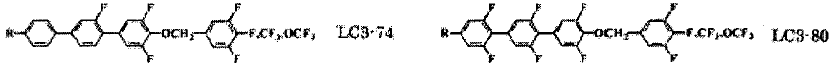 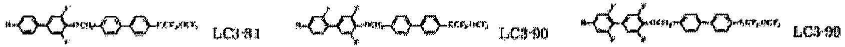 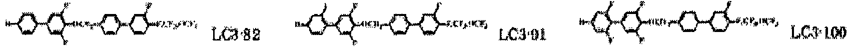 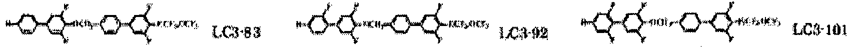 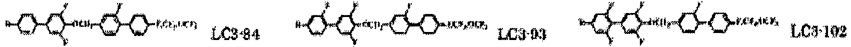 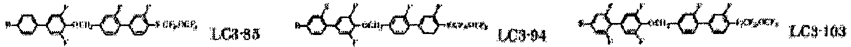 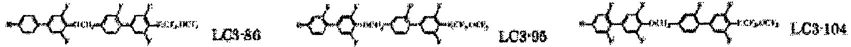 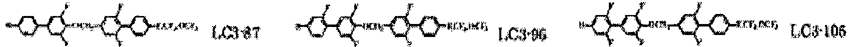 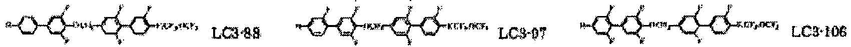 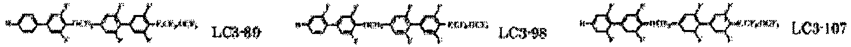 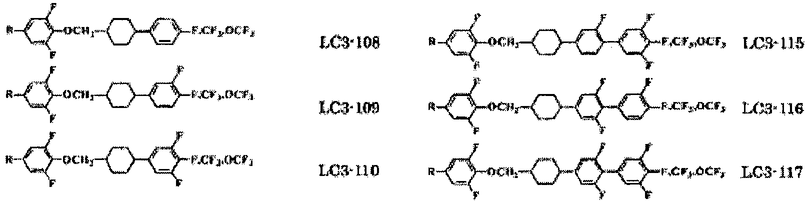 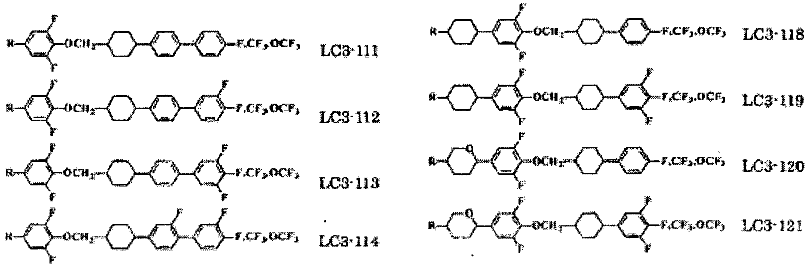 (dans laquelle X³³, X³⁴, X³⁵, X³⁶, X³⁷ et X³⁸ représentent chacun indépendamment H, Cl, F, CF₃ ou OCF₃ ; X³², R³¹, A³¹, Y³¹ et Z³¹ ont la même signification que dans la revendication 1, respectivement ; R représente R³¹ ; F, CF₃, OCF₃ représente l'un quelconque parmi F, CF₃ et OCF₃ ; et (F) représente l'un quelconque parmi H et F).

9. Composition de cristaux liquides selon la revendication 8 comprenant :
le ou les composés choisis parmi les composés représentés par la Formule générale (LC0-1) ;
un ou plusieurs composés choisis parmi les composés représentés par la Formule générale (LCO-2) ; et
le ou les composés choisis parmi les composés représentés par les Formules générales (LC3-1) à (LC3-22) et/ou dans le groupe constitué des composés représentés par les Formules générales (LC3-23) à (LC3-121).

10. Composition de cristaux liquides selon l'une quelconque des revendications 1 à 9 comprenant :
le ou les composés choisis parmi les composés représentés par la Formule générale (LC0-1) ; et
un ou plusieurs composés choisis dans le groupe constitué des composés représentés par les Formules générales (LC4-1) à (LC4-12), 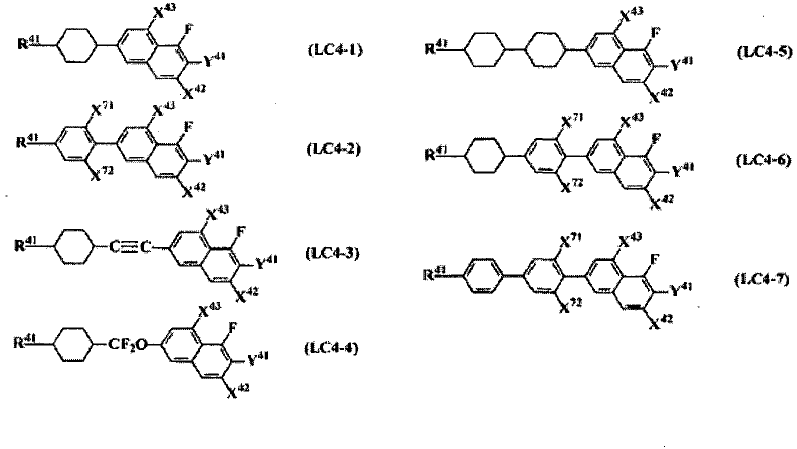 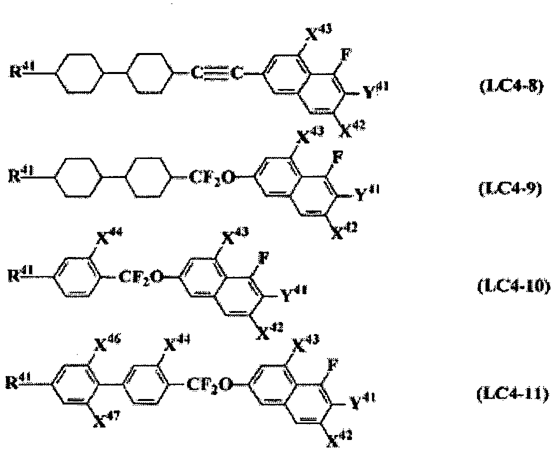 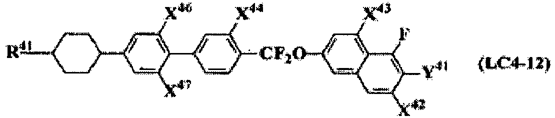 (dans laquelle X⁴⁴, X⁴⁶, X⁴⁷, X⁷¹ et X⁷² représentent chacun indépendamment H, Cl, F, CF₃ ou OCF₃ ; et X⁴², X⁴³, R⁴¹ et Y⁴¹ ont la même signification que dans la revendication 1, respectivement).

11. Composition de cristaux liquides selon la revendication 10 comprenant :
le ou les composés choisis parmi les composés représentés par la Formule générale (LC0-1) ;
un ou plusieurs composés choisis parmi les composés représentés par la Formule générale (LC0-2) ; et
le ou les composés choisis dans le groupe constitué des composés représentés par les Formules générales (LC4-1) à (LC4-12).

12. Composition de cristaux liquides selon l'une quelconque des revendications 1 à 11 comprenant :
le ou les composés choisis parmi les composés représentés par la Formule générale (LC0-1) ; et
un ou plusieurs composés choisis dans le groupe constitué des composés représentés par les Formules générales (LC5-1) à (LC5-14) 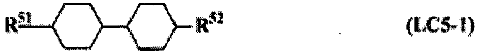 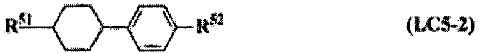 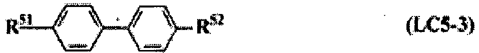 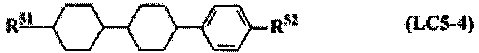 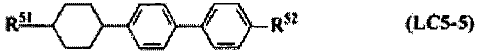 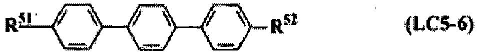 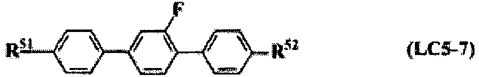 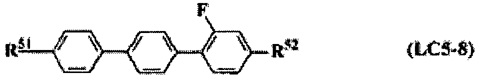 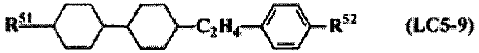 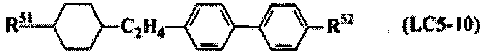 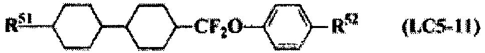 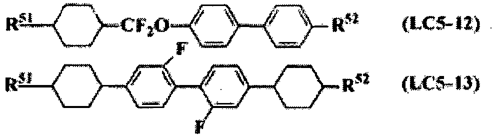 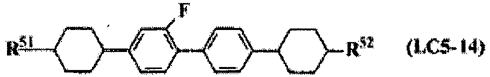 (dans laquelle R⁵¹ et R⁵² ont la même signification que dans la revendication 1, respectivement).

13. Composition de cristaux liquides selon la revendication 12 comprenant :
le ou les composés choisis parmi les composés représentés par la Formule générale (LC0-1) ;
un ou plusieurs composés choisis parmi les composés représentés par la Formule générale (LC0-1) ; et
le ou les composés choisis dans le groupe constitué des composés représentés par les Formules générales (LC5-1) à (LC5-14).

14. Composition de cristaux liquides selon l'une quelconque des revendications 1 à 13 comprenant un ou plusieurs composés polymérisables.

15. Composition de cristaux liquides selon l'une quelconque des revendications 1 à 14 comprenant un ou plusieurs antioxydants.

16. Composition de cristaux liquides selon l'une quelconque des revendications 1 à 15 comprenant un ou plusieurs absorbeurs UV.

17. Élément d'affichage à cristaux liquides comprenant la composition de cristaux liquides selon l'une quelconque des revendications 1 à 16.

18. Élément d'affichage à cristaux liquides selon la revendication 17 utilisé pour une commande de matrice active.

19. Élément d'affichage à cristaux liquides selon la revendication 17 utilisé en mode TN, en mode OCB, en mode IPS ou en mode VA-IPS.

20. Élément d'affichage à cristaux liquides selon la revendication 17 étant un élément d'affichage à cristaux liquides stabilisé par un polymère utilisé dans en mode TN, en mode OCB, en mode IPS ou en mode VA-IPS, l'élément d'affichage à cristaux liquides stabilisé par un polymère étant préparé par polymérisation des composés polymérisables renfermés par la composition de cristaux liquides selon la revendication 14 sous l'effet d'une tension ou sans application de tension.
